# EUROPÄISCHE PATENTSCHRIFT

(11) **EP 4 065 453 B1**
(45) Veröffentlichungstag und Bekanntmachung des Hinweises auf die Patenterteilung: **10.09.2025**
(21) Anmeldenummer: 20820323.2
(22) Anmeldetag: 20.11.2020
(51) Int. Cl.: B62D 65/18

(54) **FÖRDERVORRICHTUNG, BEARBEITUNGSANLAGE, VERFAHREN ZUM FÖRDERN UND/ODER BEARBEITEN VON GEGENSTÄNDEN**
CONVEYING DEVICE, PROCESSING INSTALLATION, METHOD FOR CONVEYING AND/OR PROCESSING OBJECTS
DISPOSITIF DE TRANSPORT, INSTALLATION DE TRAITEMENT, PROCÉDÉ DE TRANSPORT ET/OU DE TRAITEMENT D'OBJETS

(30) Priorität: 25.11.2019 DE 102019218136
(43) Veröffentlichungstag der Anmeldung: 05.10.2022
(60) Teilanmeldung: 25184698.6
(73) Patentinhaber: Dürr Systems AG, 74321 Bietigheim-Bissingen (DE)
(72) Erfinder: BELL, Stefano, 70806 Kornwestheim (DE); LAUER, Michael, 74321 Bietigheim-Bissingen (DE); WEIDLE, Martin, 70839 Gerlingen (DE); BAYHA, Johannes, 71364 Winnenden (DE)
(74) Vertreter: DTS Patent- und Rechtsanwälte PartmbB
(86) Internationale Anmeldenummer: PCT/DE2020/100983
(87) Internationale Veröffentlichungsnummer: WO 2021/104569

(56) Entgegenhaltungen:
- WO-A1-93/06322
- DE-A1- 10 232 402
- DE-A1- 102012 016 489
- DE-A1- 102017 117 908
- GB-A- 2 341 375

## Beschreibung

Die vorliegende Erfindung betrifft eine Fördervorrichtung, welche in einer Bearbeitungsanlage, beispielsweise in einer Lackieranlage, zum Einsatz kommen kann. Ferner betrifft die vorliegende Erfindung eine derartige Bearbeitungsanlage sowie ein Verfahren zum Fördern und/oder Bearbeiten von Gegenständen.

Aus der DE 10 2017 117 908 A1 ist ein Flächenspeicher zur Lagerung von Fahrzeugkarosserien bekannt, deren Längsausdehnung mindestens das Anderthalbfache der Querausdehnung beträgt, umfassend eine Lagerfläche mit mindestens zwei Speicherplätzen und zwei zugehörigen Fahrzeugkarosserieaufnahmen, wobei die Lagerfläche so ausgelegt ist, dass auf der Lagerfläche Fahrzeugkarosserien in einer Ebene auf den mindestens zwei Speicherplätzen auf jeweils einer der Fahrzeugkarosserieaufnahmen lagerbar sind, mindestens ein mehrspuriges Flurförderfahrzeug, das mit der Fahrzeugkarosserieaufnahme koppelbar ist.

Der vorliegenden Erfindung liegt die Aufgabe zugrunde, eine Fördervorrichtung bereitzustellen, mittels welcher zu transportierende Gegenstände einfach und flexibel transportiert werden können und mittels welcher insbesondere eine Flexibilität einer Bearbeitungsanlage erhöhbar ist.

Diese Aufgabe wird erfindungsgemäß durch eine Fördervorrichtung mit den Merkmalen des Anspruchs 1 gelöst.

Die Fördervorrichtung umfasst vorzugsweise Folgendes:
- ein oder mehrere Förderfahrzeuge zum Fördern von Gegenständen, insbesondere Kraftfahrzeugkarosserien;
- eine Puffervorrichtung zur Zwischenspeicherung der Gegenstände, welche einen oder mehrere Pufferlagerplätze umfasst, wobei jeweils ein Pufferlagerplatz zur Lagerung jeweils eines Gegenstands dient;
wobei die Gegenstände mittels des einen oder der mehreren Förderfahrzeuge in die Puffervorrichtung einlagerbar und/oder aus der Puffervorrichtung auslagerbar sind.

Das eine oder die mehreren Förderfahrzeuge und/oder die Puffervorrichtung sind insbesondere derart ausgebildet, dass die Gegenstände mittels des einen oder der mehreren Förderfahrzeuge in die Puffervorrichtung einlagerbar und/oder aus der Puffervorrichtung auslagerbar sind.

Die Gegenstände sind zur Zwischenspeicherung derselben mittels des einen oder der mehreren Förderfahrzeuge insbesondere in die Puffervorrichtung einlagerbar.

Insbesondere sind Gegenstände an einen Pufferlagerplatz der Puffervorrichtung übergebbar.

Die Fördervorrichtung umfasst vorzugsweise eine übergeordnete Steuerungsanlage zur Steuerung und/oder Überwachung mehrerer Förderfahrzeuge.

Die übergeordnete Steuerungsanlage koordiniert vorzugsweise mehrere Förderfahrzeuge, insbesondere sämtliche Förderfahrzeuge.

Ein jeweiliges Förderfahrzeug umfasst insbesondere Folgendes:
einen Grundkörper;
ein Fahrwerk, mittels welchem der Grundkörper auf einem befahrbaren Untergrund aufliegt und/oder bewegbar ist;
eine Antriebsvorrichtung zum Antreiben des Förderfahrzeugs;
eine Aufnahmevorrichtung, welche ein Aufnahmeelement, zwei Aufnahmeelemente, oder mehr als zwei Aufnahmeelemente zum Aufnehmen mindestens eines Gegenstands umfasst.

Der befahrbare Untergrund ist insbesondere ein Boden, beispielsweise ein fester Boden, insbesondere ein Boden einer Fertigungshalle.

Der befahrbare Untergrund ist insbesondere aus Beton oder Asphalt oder Metall gebildet oder umfasst Beton, Asphalt und/oder Metall.

Das eine oder die mehreren Förderfahrzeuge sind insbesondere selbstfahrend und/oder autonom ausgebildet.

Vorzugsweise sind das eine oder die mehreren Förderfahrzeuge flurgebunden.

Das eine oder die mehreren Förderfahrzeuge sind vorzugsweise automatisch steuerbar und/oder berührungslos geführt oder führbar.

Es kann vorgesehen sein, dass die Aufnahmevorrichtung exakt zwei Aufnahmeelemente umfasst.

Mittels der zwei Aufnahmeelemente eines Förderfahrzeugs ist vorzugsweise exakt ein Gegenstand, insbesondere exakt eine Kraftfahrzeugkarosserie, aufnehmbar.

Mehrere Aufnahmeelemente, insbesondere sämtliche Aufnahmeelemente, erstrecken sich vorzugsweise in einer gemeinsamen Ebene, welche insbesondere vertikal und/oder parallel zu einer Längsmittelachse des einen oder der mehreren Förderfahrzeuge verläuft.

Mehrere Aufnahmeelemente, insbesondere sämtliche Aufnahmeelemente, erstrecken sich vorzugsweise in einer vertikalen Längsmittelebene eines Förderfahrzeugs.

Insbesondere liegen Mittelachsen oder Längsachsen der einzelnen Aufnahmeelemente in einer gemeinsamen Ebene, insbesondere in einer vertikalen Längsmittelebene.

Längsachsen oder Mittelachsen mehrerer Aufnahmeelemente, insbesondere sämtlicher Aufnahmeelemente, sind vorzugsweise parallel zueinander ausgerichtet und/oder parallel zur Schwerkraftrichtung ausgerichtet, zumindest in einem Zustand des einen oder der mehreren Förderfahrzeuge, in welchem diese auf einem im Wesentlichen horizontalen befahrbaren Untergrund angeordnet ist.

Vorteilhaft kann es sein, wenn die Längsmittelachse eines Förderfahrzeugs eine Hauptfahrtrichtung des Förderfahrzeugs oder zwei Hauptfahrtrichtungen des Förderfahrzeugs vorgibt.

Ein oder mehrere Aufnahmeelemente, insbesondere sämtliche Aufnahmeelemente, sind vorzugsweise die einzigen von dem Grundkörper eines Förderfahrzeugs nach oben hervorstehenden Elemente.

Vorzugsweise ragen ein oder mehrere Aufnahmeelemente, insbesondere sämtliche Aufnahmeelemente, als einzige Bauteile eines Förderfahrzeugs über mehr als ungefähr 5% oder über mehr als ungefähr 10% einer Höhe des Grundkörpers über den Grundkörper hinaus.

Es kann vorgesehen sein, dass das eine Aufnahmeelement, die zwei Aufnahmeelemente oder die mehr als zwei Aufnahmeelemente bewegbar an dem Grundkörper angeordnet sind.

Insbesondere sind das eine Aufnahmeelement, die zwei Aufnahmeelemente oder die mehr als zwei Aufnahmeelemente parallel zu der Schwerkraftrichtung bewegbar an dem Grundkörper angeordnet.

Die Schwerkraftrichtung ist in dieser Beschreibung allgemein insbesondere eine Höhenrichtung, welche im Wesentlichen senkrecht zu einem befahrbaren Untergrund ausgerichtet ist, auf welchem das eine oder die mehreren Förderfahrzeuge verfahrbar sind.

Alternativ oder ergänzend hierzu kann vorgesehen sein, dass ein Aufnahmeelement, zwei Aufnahmeelemente oder mehr als zwei Aufnahmeelemente unbeweglich mit dem Grundkörper verbunden sind.

Es kann zudem vorgesehen sein, dass sämtliche Aufnahmeelemente bewegbar an dem Grundkörper angeordnet sind. Alternativ hierzu kann vorgesehen sein, dass sämtliche Aufnahmeelemente unbewegbar an dem Grundkörper angeordnet sind.

Ein Förderfahrzeug umfasst vorzugsweise eine Hubantriebsvorrichtung, mittels welcher das eine Aufnahmeelement, die zwei Aufnahmeelemente oder die mehr als zwei Aufnahmeelemente relativ zu dem Grundkörper anhebbar und/oder absenkbar sind.

Insbesondere sind das eine Aufnahmeelement, die zwei Aufnahmeelemente oder die mehr als zwei Aufnahmeelemente mittels der Hubantriebsvorrichtung aus dem Grundkörper ausfahrbar und/oder in diesen einfahrbar.

Unter einem Ausfahren und einem Einfahren ist dabei nicht zwingend ein vollständiges Herausführen oder ein vollständiges Versenken zu verstehen. Vielmehr können auch eine Verlängerung eines aus dem Grundkörper herausragenden Abschnitts eines Aufnahmeelements bzw. eine Verkürzung desselben vorgesehen sein.

Günstig kann es sein, wenn mehrere Aufnahmeelemente, insbesondere sämtliche Aufnahmeelemente, miteinander gekoppelt und/oder ausschließlich gemeinsam relativ zu dem Grundkörper bewegbar sind.

Insbesondere kann vorgesehen sein, dass mehrere Aufnahmeelemente, insbesondere sämtliche Aufnahmeelemente ausschließlich gleichzeitig anhebbar und/oder ausschließlich gleichzeitig absenkbar sind.

Vorteilhaft kann es sein, wenn eine Hubantriebsvorrichtung eines Förderfahrzeugs ein Hubantriebselement umfasst, wobei das Hubantriebselement vorzugsweise einen Hubantriebsmotor und zwei oder mehr als zwei Aufnahmeelemente miteinander verbindet, so dass die zwei oder die mehr als zwei Aufnahmeelemente gemeinsam mittels des Hubantriebsmotors bewegbar sind. Mittels des Hubantriebselements sind vorzugsweise die zwei oder die mehr als zwei Aufnahmeelemente gemeinsam relativ zum Grundkörper anhebbar und/oder absenkbar.

Günstig kann es sein, wenn ein Förderfahrzeug einen oder mehrere Aufnahmesensoren umfasst, mittels welcher ein an mindestens einem Aufnahmeelement angeordneter Gegenstand erfassbar und/oder auf dessen korrekte Festlegung hin überwachbar ist.

Alternativ oder ergänzend hierzu kann vorgesehen sein, dass ein Förderfahrzeug einen oder mehrere Aufnahmesensoren umfasst, mittels welcher eine Ausrichtung und/oder Positionierung eines beabstandet von dem mindestens einen Aufnahmeelement angeordneten Gegenstands erfassbar sind.

Insbesondere ist mittels mindestens eines Aufnahmesensors eine Ausrichtung und/oder Positionierung des Gegenstands vor einem Anheben oder Ausfahren des mindestens einen Aufnahmeelements erfassbar.

Der mittels des mindestens einen Aufnahmesensors zu erfassende oder zu überwachende Gegenstand ist dabei insbesondere ein zu befördernder Gegenstand, insbesondere eine Kraftfahrzeugkarosserie, oder auch eine Kombination eines zu befördernden Gegenstands mit einer Adaptervorrichtung zur Aufnahme des Gegenstands.

Vorteilhaft kann es sein, wenn mindestens ein Aufnahmesensor an dem Grundkörper angeordnet ist.

Insbesondere kann vorgesehen sein, dass zwei Aufnahmesensoren oder mehr als zwei Aufnahmesensoren in einem ein oder mehrere Aufnahmeelemente umgebenden Bereich des Grundkörpers an demselben angeordnet sind.

Mittels dieses einen oder dieser mehreren Aufnahmesensoren kann insbesondere eine Annäherung und/oder Positionierung und/oder ein Vorhandensein eines Gegenstands an dem Aufnahmeelement und/oder im Bereich des Aufnahmeelements erfasst und/oder überwacht werden.

Alternativ oder ergänzend hierzu kann vorgesehen sein, dass mindestens ein Aufnahmesensor an dem Aufnahmeelement angeordnet ist.

Insbesondere können mehrere Aufnahmesensoren an mehreren Aufnahmeelementen angeordnet sein.

Insbesondere können als Kontaktsensoren ausgebildete Aufnahmesensoren vorgesehen sein.

An dem Grundkörper angeordnete Aufnahmesensoren sind vorzugsweise berührungslos arbeitende Aufnahmesensoren.

Mindestens ein Aufnahmesensor wechselwirkt vorzugsweise mit einer Detektionshilfe an einem aufzunehmenden oder aufgenommenen Gegenstand.

Insbesondere kann eine Öffnung, beispielsweise ein Loch, in einer Adaptervorrichtung zur Aufnahme eines Gegenstands vorgesehen sein. Mittels eines Aufnahmesensors kann dann insbesondere diese Öffnung erfasst werden.

Günstig kann es sein, wenn ein Förderfahrzeug mehrere Positionssensoren umfasst, welche insbesondere an unterschiedlichen Stellen längs einer Längsmittelachse des Förderfahrzeugs und/oder längs einer parallel zu einer Längsmittelachse des Förderfahrzeugs verlaufenden Richtung angeordnet sind.

Ein oder mehrere Positionssensoren dienen insbesondere der Erfassung einer oder mehrere Positionierhilfen, insbesondere fest an einem Boden angeordneter und/oder in den Boden integrierter Positionierhilfen, beispielsweise eines oder mehrerer Codebänder, insbesondere QR-Codebänder.

Günstig kann es sein, wenn mittels mehrerer Positionssensoren an voneinander verschiedenen Stellen längs eines Bewegungswegs eines Förderfahrzeugs gleichzeitig eine Positionsermittlung durchgeführt wird.

Günstig kann es sein, wenn mittels der Steuervorrichtung eines Förderfahrzeugs aus mehreren, insbesondere realen, Positionssensoren ein oder mehrere virtuelle Positionssensoren errechnet werden. Insbesondere kann ein bezüglich einer Längsrichtung des Förderfahrzeugs und/oder bezüglich einer Querrichtung des Förderfahrzeugs exakt mittig in dem Förderfahrzeug angeordneter virtueller Positionssensor errechnet werden, dessen vorzugsweise ebenfalls berechneten Sensorwerte aufgrund der zentralen Anordnung insbesondere eine optimale Positionsbestimmung und/oder Ausrichtungsbestimmung des Förderfahrzeugs ermöglichen.

Bei einer Ausgestaltung der Fördervorrichtung ist vorgesehen, dass die Fördervorrichtung ferner eine oder mehrere Adaptervorrichtungen umfasst, wobei insbesondere jeweils ein Gegenstand auf jeweils einer Adaptervorrichtung aufnehmbar ist.

Eine jeweilige Adaptervorrichtung umfasst vorzugsweise Folgendes:
ein Zentralelement;
ein oder mehrere Adapterelemente, welche an dem Zentralelement festgelegt und zur Aufnahme des Gegenstands geometrisch an den Gegenstand angepasst sind.

Ein oder mehrere Angriffsbereiche, insbesondere Einführöffnungen, an welchen ein oder mehrere Aufnahmeelemente zur Aufnahme der Adaptervorrichtung angreifen, sind vorzugsweise an dem Zentralelement und/oder an dem einen oder den mehreren Adapterelementen angeordnet und/oder ausgebildet.

Das Zentralelement verbindet vorzugsweise mehrere Adapterelemente miteinander.

Insbesondere sind an einem oder mehreren Adapterelementen jeweils ein oder mehrere Aufnahmepins zur Aufnahme eines oder mehrerer Gegenstände, beispielsweise einer Kraftfahrzeugkarosserie, vorgesehen.

Vorzugsweise sind die Adapterelemente hinsichtlich Geometrie, Größe, Anzahl und/oder Ausgestaltung der Aufnahmepins an die zu fördernden Gegenstände angepasst.

Günstig kann es ferner sein, wenn ein oder mehrere Adapterelemente jeweils ein oder mehrere Abstützelemente umfassen.

Mittels eines oder mehrerer Abstützelemente kann sich die Adaptervorrichtung insbesondere an Pufferlagerelementen eines Pufferlagerplatzes der Puffervorrichtung und/oder einer Stationsfördervorrichtung abstützen.

Mittels einer Stationsfördervorrichtung ist ein Gegenstand insbesondere durch eine Bearbeitungsstation einer Bearbeitungsanlage hindurchförderbar.

Der eine oder die mehreren Angriffsbereiche, insbesondere Einführöffnungen, sind vorzugsweise im Wesentlichen komplementär zu einem oder mehreren Aufnahmeabschnitten angeordnet und/oder ausgebildet.

Insbesondere sind ein oder mehrere Angriffsbereiche, beispielsweise Einführöffnungen, im Wesentlichen konusförmig, konusabschnittsförmig, kegelstumpfförmig oder kegelstumpfabschnittsförmig ausgebildet.

Günstig kann es sein, wenn ein oder mehrere Angriffsbereiche, insbesondere Einführöffnungen, an einer Unterseite der Adaptervorrichtung angeordnet und/oder ausgebildet sind und sich entgegen der Schwerkraftrichtung verjüngen.

Bei einer Ausgestaltung der Fördervorrichtung ist vorgesehen, dass ein Gegenstand, insbesondere ein auf einer Adaptervorrichtung aufgenommener Gegenstand, durch Absetzen des Gegenstands, insbesondere des auf der Adaptervorrichtung aufgenommenen Gegenstands, auf Pufferlagerelemente eines jeweiligen Pufferlagerplatzes in den jeweiligen Pufferlagerplatz einlagerbar ist.

Bei einer Ausgestaltung der Fördervorrichtung ist vorgesehen, dass ein jeweiliger Pufferlagerplatz der Puffervorrichtung ein oder mehrere Pufferlagerelemente, beispielsweise vier Pufferlagerelemente, umfasst, auf welchen ein Gegenstand, insbesondere ein auf einer Adaptervorrichtung aufgenommener Gegenstand, mit einem Förderfahrzeug absetzbar ist.

Ein jeweiliger Pufferlagerplatz der Puffervorrichtung umfasst vorzugsweise jeweils eine Ablagevorrichtung, welche jeweils ein oder mehrere, beispielsweise vier Pufferlagerelemente umfasst.

Beispielsweise ist es denkbar, dass vier Pufferlagerelemente eines Pufferlagerplatzes in einer senkrecht zur Schwerkraftrichtung angeordneten Ebene in vier Eckbereichen eines Rechtecks angeordnet sind.

Günstig kann es sein, wenn die Pufferlagerelemente der Pufferlagerplätze der Puffervorrichtung an einem Boden, auf welchem die Förderfahrzeuge der Fördervorrichtung bewegt werden, festgelegt sind.

Beispielsweise ist es denkbar, dass die Pufferlagerelemente der Pufferlagerplätze mit dem Boden verschraubt sind.

Vorzugsweise bilden jeweils zwei Pufferlagerelemente eines Pufferlagerplatzes einen Pufferlagerbock.

Ein Pufferlagerplatz umfasst beispielsweise zwei Pufferlagerböcke.

Bei einer Ausgestaltung der Fördervorrichtung ist vorgesehen, dass ein jeweiliger Pufferlagerplatz vier Pufferlagerelemente umfasst, wobei jeweils zwei Pufferlagerelemente spiegelbildlich zueinander angeordnet und/oder ausgebildet sind.

Vorzugsweise sind in einer Querrichtung eines jeweiligen Pufferlagerplatzes jeweils zwei Pufferlagerelemente angeordnet.

Günstig kann es ferner sein, wenn in einer Längsrichtung eines jeweiligen Pufferlagerplatzes jeweils zwei Pufferlagerelemente angeordnet sind.

Ein jeweiliger Pufferlagerplatz umfasst beispielsweise zwei Paare spiegelbildlich zueinander angeordneter und ausgebildeter Pufferlagerelemente.

Günstig kann es sein, wenn spiegelbildlich zueinander angeordnete und ausgebildete Pufferlagerelemente in einer Querrichtung eines jeweiligen Pufferlagerplatzes angeordnet sind.

In einer Querrichtung spiegelbildlich zueinander angeordnete und ausgebildete Pufferlagerelemente bilden vorzugsweise einen Pufferlagerbock.

Bei einer Ausgestaltung der Fördervorrichtung ist vorgesehen, dass die Fördervorrichtung eine Überwachungseinrichtung zum Überwachen einer ordnungsgemäßen Übergabe eines Gegenstands, insbesondere eines auf einer Adaptervorrichtung aufgenommenen Gegenstands, an einen Pufferlagerplatz der Puffervorrichtung umfasst.

Unter einer ordnungsgemäßen Übergabe eines Gegenstands, insbesondere eines auf einer Adaptervorrichtung aufgenommenen Gegenstand, an einen Pufferlagerplatz der Puffervorrichtung wird im Rahmen dieser Beschreibung und der beigefügten Ansprüche insbesondere verstanden, dass der Gegenstand, insbesondere der auf einer Adaptervorrichtung aufgenommene Gegenstand, sich nach der Übergabe an hierzu vorgesehenen Pufferlagerelementen, insbesondere an Auflageelementen der Pufferlagerelemente, abstützt.

Bei einer Ausgestaltung der Fördervorrichtung ist vorgesehen, dass ein jeweiliges Förderfahrzeug der Fördervorrichtung eine Überwachungseinrichtung zum Überwachen einer ordnungsgemäßen Übergabe eines Gegenstands, insbesondere eines auf einer Adaptervorrichtung aufgenommenen Gegenstands, an einen Pufferlagerplatz der Puffervorrichtung umfasst.

Mittels der Überwachungseinrichtung des Förderfahrzeugs ist insbesondere feststellbar, ob ein Gegenstand, insbesondere ein auf einer Adaptervorrichtung angeordneter Gegenstand, ordnungsgemäß auf Pufferlagerelementen eines jeweiligen Pufferlagerplatzes angeordnet ist.

Bei einer Ausgestaltung der Fördervorrichtung ist vorgesehen, dass die Überwachungseinrichtung derart eingerichtet und ausgebildet ist, dass eine Feststellung einer ordnungsgemäßen Übergabe eines Gegenstands, insbesondere eines auf einer Adaptervorrichtung aufgenommenen Gegenstands, an einen Pufferlagerplatz der Puffervorrichtung durch Schließen eines Stromkreises erfolgt.

Beim Schließen des Stromkreises wird insbesondere ein Stromsignal von einer Stromquelle zu einer Stromsenke geführt.

Vorzugsweise wird zum Feststellen einer ordnungsgemäßen Übergabe eines Gegenstands, insbesondere eines auf einer Adaptervorrichtung aufgenommenen Gegenstands, eine auf eine Aufnahmevorrichtung, insbesondere auf ein oder mehrere Aufnahmeelemente, eines Förderfahrzeugs wirkende Gewichtskraft beim Schließen des Stromkreises berücksichtigt.

Bei einer Übergabe eines Gegenstands, insbesondere eines auf einer Adaptervorrichtung aufgenommenen Gegenstands, an einen Pufferlagerplatz der Puffervorrichtung verringert sich insbesondere eine auf eine Aufnahmevorrichtung, insbesondere auf ein oder mehrere Aufnahmeelemente, eines Förderfahrzeugs wirkende Gewichtskraft, insbesondere da sich Abstützelemente der Adaptervorrichtung an Pufferlagerelementen des Pufferlagerplatzes abstützen.

Beispielsweise ist es denkbar, dass mittels der Überwachungseinrichtung bei einer niedrigen auf die Aufnahmevorrichtung, insbesondere auf ein oder mehrere Aufnahmeelemente, eines Förderfahrzeugs wirkenden Gewichtskraft und einem geschlossenen Stromkreis auf eine ordnungsgemäße Übergabe eines Gegenstands, insbesondere eines auf einer Adaptervorrichtung aufgenommenen Gegenstands, geschlossen wird.

Ferner ist es denkbar, dass mittels der Überwachungseinrichtung bei einer niedrigen auf die Aufnahmevorrichtung, insbesondere auf ein oder mehrere Aufnahmeelemente, eines Förderfahrzeugs wirkenden Gewichtskraft und einem nicht geschlossenen Stromkreis auf eine nicht ordnungsgemäße Übergabe eines Gegenstands, insbesondere eines auf einer Adaptervorrichtung aufgenommenen Gegenstands, geschlossen wird.

Alternativ oder ergänzend zu der Feststellung einer ordnungsgemäßen Übergabe eines Gegenstands, insbesondere eines auf einer Adaptervorrichtung aufgenommenen Gegenstands, an einen Pufferlagerplatz der Puffervorrichtung durch Schließen eines Stromkreises ist es möglich, dass die Überwachungseinrichtung eines Förderfahrzeugs einen oder mehrere Sensoren umfasst, mittels welcher eine ordnungsgemäße Übergabe eines Gegenstands, insbesondere eines auf einer Adaptervorrichtung aufgenommenen Gegenstands, detektierbar ist.

Bei einer Ausgestaltung der Fördervorrichtung ist vorgesehen, dass Pufferlagerelemente eines jeweiligen Pufferlagerplatzes der Puffervorrichtung und/oder Adaptervorrichtungen zur Aufnahme eines Gegenstands derart ausgebildet sind, dass der Stromkreis durch Inkontaktbringen einer Adaptervorrichtung mit Pufferlagerelementen eines jeweiligen Pufferlagerplatzes bei einer ordnungsgemäßen Übergabe eines Gegenstands, insbesondere eines auf einer Adaptervorrichtung aufgenommenen Gegenstands, geschlossen wird.

Insbesondere werden bei einer ordnungsgemäßen Übergabe eines Gegenstands, insbesondere eines auf einer Adaptervorrichtung aufgenommenen Gegenstands, Abstützelemente der Adaptervorrichtung mit Pufferlagerelementen des Pufferlagerplatzes in Kontakt gebracht.

Beispielsweise wird dabei jeweils ein Abstützelement der Adaptervorrichtung mit jeweils einem Pufferlagerelement in Kontakt gebracht.

Bei einer Ausgestaltung der Fördervorrichtung ist vorgesehen, dass jeweils zwei Pufferlagerelemente eines Pufferlagerplatzes paarweise elektrisch leitend miteinander verbunden sind.

Beispielsweise ist es denkbar, dass jeweils zwei Pufferlagerelemente eines Pufferlagerplatzes mittels einer Kontaktierungsvorrichtung elektrisch leitend miteinander verbunden sind.

Die Kontaktierungsvorrichtung ist vorzugsweise in einem Boden, auf welchem die Förderfahrzeuge der Fördervorrichtung bewegt werden, angeordnet und/oder eingebettet.

Die Kontaktierungsvorrichtung umfasst insbesondere eine elektrische Leitung, beispielweise einen Draht oder ein Kabel, mittels welcher Pufferlagerelemente eines Pufferlagerplatzes paarweise elektrisch leitend miteinander verbunden sind.

Beispielsweise sind in einer Querrichtung eines Pufferlagerplatzes angeordnete Pufferlagerelemente paarweise elektrisch leitend miteinander verbunden.

Günstig kann es ferner sein, wenn in einer Längsrichtung eines Pufferlagerplatzes angeordnete Pufferlagerelemente paarweise elektrisch leitend miteinander verbunden sind.

Vorzugsweise sind jeweils in einer Querrichtung eines Pufferlagerplatzes und/oder in einer Längsrichtung eines Pufferlagerplatzes angeordnete Pufferlagerelemente paarweise elektrisch leitend miteinander verbunden.

Wenn in einer Querrichtung eines Pufferlagerplatzes angeordnete Pufferlagerelemente jeweils elektrisch leitend miteinander verbunden sind, ein Pufferlagerplatz beispielsweise vier Pufferlagerelemente umfasst und eine Adaptervorrichtung vier Abstützelemente umfasst, werden bei einer ordnungsgemäßen Übergabe eines Gegenstands, insbesondere eines auf einer Adaptervorrichtung aufgenommenen Gegenstands, an den Pufferlagerplatz beispielsweise zwei Stromkreise geschlossen, nämlich im Bereich eines ersten Paars Pufferlagerelemente und im Bereich eines zweiten Paars Pufferlagerelemente.

Vorzugsweise ist dabei feststellbar, ob eine Adaptervorrichtung und der auf dieser aufgenommene Gegenstand in einem in Längsrichtung vorderen Bereich und/oder in einem in Längsrichtung hinteren Bereich ordnungsgemäß an den Pufferlagerplatz übergeben worden ist.

Bei einer Ausgestaltung der Fördervorrichtung ist vorgesehen, dass ein jeweiliges Förderfahrzeug derart ausgebildet ist, dass beim Schließen des Stromkreises ein Stromsignal von einer an dem Förderfahrzeug angeordneten Stromquelle zu einer an dem Förderfahrzug angeordneten Stromsenke geführt wird.

Beispielsweise ist es denkbar, dass die Stromquelle ein Ausgangssignalanschluss einer Steuervorrichtung des jeweiligen Förderfahrzeugs ist und/oder dass die Stromsenke ein Eingangssignalanschluss einer Steuervorrichtung des jeweiligen Förderfahrzeugs ist.

Günstig kann es daher sein, wenn ein jeweiliges Förderfahrzeug eine Steuervorrichtung umfasst, wobei die Steuervorrichtung eines jeweiligen Förderfahrzeugs derart eingerichtet und ausgebildet ist, dass die Steuervorrichtung das Schließen des Stromkreises überwacht.

Ein jeweiliges Förderfahrzeug ist insbesondere derart ausgebildet, dass das Förderfahrzeug eine Stromführungsvorrichtung umfasst, mittels welcher ein Stromsignal von der an dem Förderfahrzeug angeordneten Stromquelle zu einer an der Aufnahmevorrichtung des Förderfahrzeugs angeordneten Adaptervorrichtung geführt wird und/oder mittels welches ein Stromsignal von einer an der Aufnahmevorrichtung des Förderfahrzeugs angeordneten Adaptervorrichtung zu einer an dem Förderfahrzeug angeordneten Stromsenke geführt wird.

Beispielsweise ist es denkbar, dass die Stromführungsvorrichtung einen oder mehrere Schleifkontakte umfasst, welche an einem Aufnahmeelement der Aufnahmevorrichtung eines jeweiligen Förderfahrzeugs angeordnet ist.

Bei einer Ausgestaltung der Fördervorrichtung ist vorgesehen, dass ein jeweiliges Förderfahrzeug eine Aufnahmevorrichtung umfasst, welche ein Aufnahmeelement, zwei Aufnahmeelemente oder mehr als zwei Aufnahmeelemente zum Aufnehmen mindestens eines Gegenstands umfasst, wobei das eine Aufnahmeelement, die zwei Aufnahmeelemente oder die mehr als zwei Aufnahmeelemente jeweils einen oder mehrere, beispielsweise zwei, Schleifkontakte zur elektrischen Kontaktierung einer an dem jeweiligen Förderfahrzeug angeordneten oder anordenbaren Adaptervorrichtung umfassen.

Bei einer Ausgestaltung der Fördervorrichtung ist vorgesehen, dass eine Puffervorrichtung mehrere Pufferlagerplätze umfasst, wobei sämtliche Pufferlagerplätze der Puffervorrichtung auf einer einzigen Lagerebene angeordnet sind.

Die Puffervorrichtung ist insbesondere eine einstöckige Puffervorrichtung.

Die Puffervorrichtung umfasst beispielsweise mindestens 10 Pufferlagerplätze, insbesondere mindestens 50 Pufferlagerplätze, vorzugsweise mindestens 100 Pufferlagerplätze.

Bei einer Ausgestaltung der Fördervorrichtung ist vorgesehen, dass eine Puffervorrichtung mehrere Pufferlagerplätze umfasst, welche fluchtend angeordnet sind, insbesondere in einer Längsrichtung und/oder in einer Querrichtung.

Die Puffervorrichtung umfasst beispielsweise mehrere Pufferlagerplätze, welche in einer Längsrichtung fluchtend angeordnet sind.

Die Puffervorrichtung ist dabei insbesondere eine sequentielle Puffervorrichtung.

Alternativ oder ergänzend dazu ist es denkbar, dass die Puffervorrichtung mehrere Pufferlagerplätze umfasst, welche in einer Querrichtung fluchtend angeordnet sind.

Mittels eines oder mehrerer Förderfahrzeuge sind dabei Gegenstände, insbesondere auf einer Adaptervorrichtung aufgenommene Gegenstände, in einer Förderrichtung durch die Puffervorrichtung hindurchförderbar.

Beim Hindurchfördern eines Gegenstands, insbesondere eines auf einer Adaptervorrichtung aufgenommenen Gegenstands, durch die Puffervorrichtung, wird der Gegenstand, insbesondere der auf einer Adaptervorrichtung aufgenommene Gegenstand, vorzugsweise durch mehrere Pufferlagerplätze nacheinander hindurchgefördert.

Vorzugsweise sind Gegenstände, insbesondere auf einer Adaptervorrichtung aufgenommene Gegenstände, mittels eines oder mehrerer Förderfahrzeuge in die Puffervorrichtung hineinförderbar und/oder aus der Puffervorrichtung herausförderbar.

Bei einer Ausgestaltung der Fördervorrichtung ist vorgesehen, dass eine Puffervorrichtung eine oder mehrere Fahrbahnen umfasst, wobei die Puffervorrichtung ferner mehrere Pufferlagerplätze umfasst, welche schräg und/oder senkrecht zu einer Fahrbahnlängsachse der jeweiligen Fahrbahn angeordnet sind.

Die Puffervorrichtung ist dabei insbesondere eine Flächenspeichervorrichtung.

Vorzugsweise sind Gegenstände, insbesondere auf einer Adaptervorrichtung aufgenommene Gegenstände, mittels des einen oder der mehreren Förderfahrzeuge über die Fahrbahn zu den Pufferlagerplätzen der Puffervorrichtung förderbar.

Die Fahrbahn der Puffervorrichtung ist insbesondere ein Bereich der Puffervorrichtung, in welchem keine Pufferlagerplätze angeordnet sind.

Vorzugsweise wird die Fahrbahn beidseitig von Pufferlagerplätzen der Puffervorrichtung begrenzt.

Günstig kann es sein, wenn die Fahrbahn der Puffervorrichtung einspurig oder mehrspurig ausgebildet ist.

Die Fahrbahn der Puffervorrichtung weist vorzugsweise eine oder mehrere Fahrspuren auf.

Vorzugsweise weist eine Fahrspur quer, insbesondere senkrecht zu einer Fahrtrichtung eine Breite auf, welche größer ist als eine Breite eines Förderfahrzeugs der Fördervorrichtung quer, insbesondere senkrecht, zu der Fahrtrichtung.

Insbesondere weist eine Fahrspur quer, insbesondere senkrecht zu einer Fahrtrichtung eine Breite auf, welche größer ist als eine Breite eines auf einem Förderfahrzeug der Fördervorrichtung aufgenommenen Gegenstands quer, insbesondere senkrecht, zu der Fahrtrichtung, beispielsweise um mindestens ungefähr 10 %, insbesondere mindestens ungefähr 20 %, vorzugsweise mindestens ungefähr 40 %.

Günstig kann es sein, wenn eine Fahrspur quer, insbesondere senkrecht zu einer Fahrtrichtung eine Breite aufweist, welche gleich groß oder größer ist als eine Breite einer Warnzone eines Umgebungsbereichs eines Förderfahrzeugs quer, insbesondere senkrecht zu der Fahrtrichtung beispielsweise um mindestens ungefähr 10 %, insbesondere mindestens ungefähr 20 %, vorzugsweise mindestens ungefähr 40 %.

Mittels einer mehrspurigen Fahrbahn der Puffervorrichtung sind mehrere Gegenstände, insbesondere mehrere auf einer Adaptervorrichtung aufgenommene Gegenstände, vorzugsweise simultan mittels mehrerer Förderfahrzeuge in die Puffervorrichtung einlagerbar und/oder aus dieser auslagerbar.

Bei einer Ausgestaltung der Fördervorrichtung ist vorgesehen, dass Pufferlagerelemente eines Pufferlagerplatzes einen Durchfahrtsbereich begrenzen, welcher durch das eine oder die mehreren Förderfahrzeuge durchfahrbar ist, insbesondere in einer Längsrichtung und/oder in einer Querrichtung.

Der Durchfahrtsbereich eines Pufferlagerplatzes weist senkrecht zu einer Längsrichtung vorzugsweise einen freien Querschnitt auf, welcher größer ist als ein senkrecht zu einer Längsachse eines Förderfahrzeugs genommener maximaler Querschnitt des Förderfahrzeugs.

Günstig kann es ferner sein, wenn der Durchfahrtsbereich eines Pufferlagerplatzes senkrecht zu einer Querrichtung einen freien Querschnitt aufweist, welcher größer ist als ein parallel zu einer Längsachse eines Förderfahrzeugs genommener maximaler Querschnitt des Förderfahrzeugs.

Vorzugsweise sind die Pufferlagerelemente sämtlicher Pufferlagerplätze jeweils identisch zueinander angeordnet und/oder identisch ausgebildet.

Insbesondere weisen Pufferlagerelemente sämtlicher Pufferlagerplätze in einer Querrichtung und/oder in einer Längsrichtung jeweils identische Abstände voneinander auf.

Günstig kann es sein, wenn ein Durchfahrtsbereich eines Pufferlagerplatzes in einer Querrichtung eine Breite aufweist, welche größer ist als eine maximale Breite des einen oder der mehreren Förderfahrzeuge.

Vorzugsweise ist der Durchfahrtsbereich eines Pufferlagerplatzes dabei in einer Längsrichtung durch das eine oder die mehreren Förderfahrzeuge durchfahrbar.

Ein Aufnahmeelement der Aufnahmevorrichtung eines Förderfahrzeugs ragt in einer eingefahrenen Stellung desselben in einer parallel zur Schwerkraftrichtung verlaufenden Richtung insbesondere über einen Grundkörper des Förderfahrzeugs hinaus.

Eine Adaptervorrichtung und/oder ein Gegenstand sind beispielsweise durch Einfahren oder Absenken von einem oder mehreren Aufnahmeelementen des Förderfahrzeugs absenkbar und/oder auf einer Stationsfördervorrichtung oder einer sonstigen Aufnahmevorrichtung, beispielsweise auf Pufferlagerelementen eines Pufferlagerplatzes, absetzbar.

Günstig kann es sein, wenn Pufferlagerelemente eines Pufferlagerplatzes in einer Querrichtung voneinander beabstandet angeordnet sind.

Insbesondere kann dadurch ermöglicht werden, dass ein Förderfahrzeug durch den Durchfahrtsbereich eines Pufferlagerplatzes hindurchfahren kann, wenn das Aufnahmeelement in der eingefahrenen Stellung ist.

Alternativ oder ergänzend dazu ist es denkbar, dass ein Durchfahrtsbereich eines Pufferlagerplatzes in einer Längsrichtung eine Länge aufweist, welche größer ist als eine maximale Länge des einen oder der mehreren Förderfahrzeuge.

Vorzugsweise ist der Durchfahrtsbereich eines Pufferlagerplatzes dabei in einer Querrichtung durch das eine oder die mehreren Förderfahrzeuge durchfahrbar.

Ein jeweiliges Pufferlagerelement umfasst vorzugsweise einen Auflagebereich und/oder einen Abstandsbereich.

Günstig kann es sein, wenn Abstützelemente einer Adaptervorrichtung im Auflagebereich der Pufferlagerelemente auf die Pufferlagerelemente ablegbar sind.

Vorzugsweise ist der Auflagebereich eines jeweiligen Pufferlagerelements mittels des Abstandsbereichs beabstandet von einem Boden angeordnet, auf welchem die Förderfahrzeuge der Fördervorrichtung bewegt werden.

Ein Abstandsbereich eines jeweiligen Pufferlagerelements weist parallel zur Schwerkraftrichtung vorzugsweise eine Höhe auf, welche größer ist als eine maximale Höhe eines Grundkörpers eines jeweiligen Förderfahrzeugs, insbesondere größer als ein Abstand einer oberen Hauptseite des Grundkörpers eines jeweiligen Förderfahrzeugs von einem Boden, auf welchem die Förderfahrzeuge der Fördervorrichtung bewegt werden.

Bei einer Ausgestaltung der Fördervorrichtung ist vorgesehen, dass ein jeweiliges Förderfahrzeug eine oder mehrere Umgebungssensorvorrichtungen umfasst, mittels welcher ein Umgebungsbereich des Förderfahrzeugs erfassbar ist.

Insbesondere ist mittels der einen oder der mehreren Umgebungssensorvorrichtungen ein dreidimensionaler Umgebungsbereich dreidimensional erfassbar, wobei innerhalb des erfassten Umgebungsbereichs erfasste Objekte vorzugsweise hinsichtlich ihrer Ausmaße und Positionierung relativ zu dem Förderfahrzeug erfassbar sind.

Günstig kann es sein, wenn die Ausmaße und die Positionierung der erfassten Objekte mittels einer Steuervorrichtung des Förderfahrzeugs aus Sensordaten der einen oder der mehreren Umgebungssensorvorrichtungen errechnet werden.

Bei einer Ausgestaltung der Fördervorrichtung ist vorgesehen, dass sich der Umgebungsbereich aus mehreren Zonen zusammensetzt oder mehrere Zonen umfasst, wobei die Zonen einander überlappend ausgebildet sind oder vollständig voneinander verschiedene Raumbereiche abdecken.

Mittels der einen oder der mehreren Umgebungssensorvorrichtungen sind insbesondere voneinander verschiedene Zonen des Umgebungsbereichs erfassbar.

Bei einer Ausgestaltung der Fördervorrichtung ist vorgesehen, dass der Umgebungsbereich in horizontaler Richtung in mehrere Zonen, insbesondere in drei Zonen, eingeteilt ist.

Eine der Zonen ist insbesondere eine Schutzzone, in welcher insbesondere für einen störungsfreien Betrieb kein Objekt außer dem Förderfahrzeug selbst und gegebenenfalls ein an dem Förderfahrzeug angeordneter Gegenstand angeordnet sein darf.

Eine der Zonen ist insbesondere eine Warnzone, welche insbesondere die Schutzzone umgibt und/oder in welcher kein Objekt außer dem Förderfahrzeug selbst und gegebenenfalls ein an dem Förderfahrzeug angeordneter Gegenstand angeordnet sein sollte, wobei eine Erfassung eines Objekts noch nicht zwingend zur Auslösung eines Stoppbetriebs des Förderfahrzeugs führt.

Bei einer Ausgestaltung der Fördervorrichtung ist vorgesehen, dass der Umgebungsbereich in vertikaler Richtung in mehrere Zonen, insbesondere in drei Zonen, eingeteilt ist.

Eine der Zonen ist insbesondere eine Förderfahrzeugzone, innerhalb derer das jeweilige Förderfahrzeug angeordnet ist.

Eine der Zonen ist insbesondere eine Gegenstandszone, innerhalb derer ein Gegenstand angeordnet ist, wenn dieser mittels des jeweiligen Förderfahrzeugs aufgenommen ist.

Zwischen einer als Förderfahrzeugzone ausgebildeten Zone und einer als Gegenstandszone ausgebildeten Zone ist insbesondere eine Zwischenzone angeordnet, welche sich in vertikaler Richtung zumindest näherungsweise so weit erstreckt, wie das eine oder die mehreren Aufnahmeelemente aus dem Grundkörper des Förderfahrzeugs herausragen.

Mittels einer Steuervorrichtung eines jeweiligen Förderfahrzeugs und/oder mittels einer übergeordneten Steuerungsanlage ist vorzugsweise überprüfbar, insbesondere berechenbar, ob ein mittels der einen oder der mehreren Umgebungssensorvorrichtungen erfasstes Objekt ein unerwartetes und/oder unbekanntes und/oder störendes Objekt ist oder ob es sich um ein Objekt handelt, dessen Präsenz akzeptabel ist.

Mittels einer Steuervorrichtung eines jeweiligen Förderfahrzeugs werden insbesondere Grenzlinien zwischen verschiedenen Zonen des Umgebungsbereichs abhängig von einem aktuellen Zustand des Förderfahrzeugs variiert.

Für den aktuellen Zustand des Förderfahrzeugs werden insbesondere einzelne oder mehrere der folgenden Zustandsmerkmale berücksichtigt:
a) ob das Förderfahrzeug mit einem Gegenstand beladen oder unbeladen ist; und/oder
b) mit welcher Geschwindigkeit und in welche Richtung das Förderfahrzeug sich bewegt; und/oder
c) an welcher Position das Förderfahrzeug in einer Fördervorrichtung und/oder Bearbeitungsanlage angeordnet ist.

Verläufe der Grenzlinien und/oder ein Ausmaß und/oder eine Form der Zonen, insbesondere der Warnzone und/oder der Schutzzone, sind insbesondere mittels der Steuervorrichtung und/oder mittels einer übergeordneten Steuerungsanlage regelmäßig, beispielsweise mehrmals pro Minute oder Sekunde, an den jeweils aktuellen Zustand des Förderfahrzeugs anpassbar.

Günstig kann es sein, wenn der Umgebungsbereich in vertikaler Richtung in mehrere Zonen und in horizontaler Richtung in mehrere Zonen eingeteilt ist, wobei
a) einer Förderfahrzeugzone eine Warnzone und/oder eine Schutzzone zugeordnet ist; und/oder
b) einer der Gegenstandszone eine Warnzone und/oder eine Schutzzone zugeordnet ist; und/oder
c) einer Zwischenzone eine Warnzone und/oder eine Schutzzone zugeordnet ist.

Bei einer Ausgestaltung der Fördervorrichtung ist vorgesehen, dass mittels einer Steuervorrichtung eines jeweiligen Förderfahrzeugs Grenzlinien zwischen verschiedenen Zonen des Umgebungsbereichs abhängig von einem aktuellen Zustand des Förderfahrzeugs variiert werden.

Bei einer Ausgestaltung der Fördervorrichtung ist vorgesehen, dass für den aktuellen Zustand des Förderfahrzeugs einzelne oder mehrere der folgenden Zustandsmerkmale berücksichtigt werden:
a) ob das Förderfahrzeug mit einem Gegenstand beladen oder unbeladen ist; und/oder
b) mit welcher Geschwindigkeit und in welche Richtung das Förderfahrzeug sich bewegt; und/oder
c) an welcher Position das Förderfahrzeug in der Fördervorrichtung und/oder in einer Bearbeitungsanlage angeordnet ist.

Beispielsweise werden bei relativ hoher Geschwindigkeit des Förderfahrzeugs vorzugsweise die Grenzlinien im Bereich vordem Förderfahrzeug (bezüglich der Fahrtrichtung) von dem Förderfahrzeug weg verschoben, so dass sich vor dem Förderfahrzeug eine Vergrößerung der Zonen, insbesondere der Warnzone und/oder der Schutzzone, ergibt.

Beispielsweise dann, wenn das Förderfahrzeug sich einem Pufferlagerplatz der Puffervorrichtung nähert und erwartbar ist, dass Teile des Pufferlagerplatzes in die Warnzone und/oder in die Schutzzone gelangen werden (beziehungsweise sich die Warnzone und/oder die Schutzzone bis in die Teile des Pufferlagerplatzes hineinerstrecken wird/werden), kann eine Verkleinerung der Zonen, insbesondere der Warnzone und/oder der Schutzzone, derart vorgesehen sein, dass die Teile des Pufferlagerplatzes außerhalb der Warnzone und/oder der Schutzzone liegen.

Insbesondere kann für eine in dem jeweiligen Pufferlagerplatz erwartete Geradeausfahrt eine seitliche Umgebungserfassung reduziert oder vollständig deaktiviert werden.

Erfindungsgemäß ist vorgesehen, dass die Fördervorrichtung eine übergeordnete Steuerungsanlage zur Steuerung und/oder Überwachung eines oder mehrerer Förderfahrzeuge der Fördervorrichtung umfasst.

Erfindungsgemäß ist ferner vorgesehen, dass mittels der übergeordneten Steuerungsanlage eine Belegung der Pufferlagerplätze einer Puffervorrichtung steuerbar und/oder überwachbar ist.

Insbesondere sind mittels der übergeordneten Steuerungsanlage Einlagerungsaufträge zum Einlagern von Gegenständen in die Puffervorrichtung und/oder Auslagerungsaufträge zum Auslagern von Gegenständen aus der Puffervorrichtung an das eine oder die mehreren Förderfahrzeuge übermittelbar.

Eine Steuerung und/oder Überwachung der Lagerplatzbelegung durch die übergeordnete Steuerungsanlage erfolgt beispielsweise softwarebasiert.

Mittels der übergeordneten Steuerungsanlage der Fördervorrichtung wird insbesondere überwacht, ob ein Pufferlagerplatz einer Puffervorrichtung belegt oder frei ist.

Vorzugsweise können mit der übergeordneten Steuerungsanlage der Fördervorrichtung ferner einzelne Pufferlagerplätze für die Anfahrt durch ein Förderfahrzeug gesperrt oder freigegeben werden.

Beispielsweise ist es denkbar, dass mit der übergeordneten Steuerungsanlage der Fördervorrichtung belegte Pufferlagerplätze für die Anfahrt durch ein Förderfahrzeug gesperrt werden.

Ferner ist es denkbar, dass mit der übergeordneten Steuerungsanlage der Fördervorrichtung freie Pufferlagerplätze für die Anfahrt durch ein Förderfahrzeug freigegeben werden.

Bei einer Ausgestaltung der Fördervorrichtung ist vorgesehen, dass die übergeordnete Steuerungsanlage eine Speichereinrichtung umfasst, in welcher für jeden Pufferlagerplatz einer Puffervorrichtung Statusinformationen über eine Belegung des jeweiligen Pufferlagerplatzes und/oder Statusinformationen über eine Sperrung des jeweiligen Pufferlagerplatzes hinterlegbar sind.

Eine Statusinformation über eine Belegung eines Pufferlagerplatzes ist beispielsweise "frei" oder "belegt".

Eine Statusinformation über eine Sperrung eines Pufferlagerplatzes ist beispielsweise "nicht gesperrt" oder "gesperrt".

Bei einer Ausgestaltung der Fördervorrichtung ist vorgesehen, dass die Fördervorrichtung derart eingerichtet und ausgebildet ist, dass Statusinformationen über die Belegung eines jeweiligen Pufferlagerplatzes manuell durch einen Benutzer an die übergeordnete Steuerungsanlage weitergebbar sind und/oder dass die Fördervorrichtung derart eingerichtet und ausgebildet ist, dass Statusinformationen über eine Sperrung eines Pufferlagerplatzes manuell durch einen Benutzer an die übergeordnete Steuerungsanlage weitergebbar sind.

Bei einer Ausgestaltung der Fördervorrichtung ist vorgesehen, dass in der Speichereinrichtung der übergeordneten Steuerungsanlage hinterlegte Statusinformationen über die Belegung eines jeweiligen Pufferlagerplatzes und/oder über die Sperrung eines jeweiligen Pufferlagerplatzes durch einen Benutzer überschreibbar sind.

Bei einer Ausgestaltung der Fördervorrichtung ist vorgesehen, dass in der Speichereinrichtung der übergeordneten Steuerungsanlage hinterlegte Statusinformationen über die Belegung eines jeweiligen Pufferlagerplatzes und/oder über die Sperrung eines jeweiligen Pufferlagerplatzes durch manuell durch einen Benutzer an die übergeordnete Steuerungsanlage weitergegebene Statusinformationen ersetzbar sind.

Bei einer Ausgestaltung der Fördervorrichtung ist vorgesehen, dass ein jeweiliger Pufferlagerplatz einer Puffervorrichtung ein eindeutiges Identifizierungsmerkmal umfasst, wobei Statusinformationen über die Belegung eines Pufferlagerplatzes und/oder über die Sperrung eines Pufferlagerplatzes durch einen Benutzer erst nach Erfassen des eindeutigen Identifizierungsmerkmals an die übergeordnete Steuerungsanlage weitergebbar sind.

Die Statusinformationen über die Belegung eines Pufferlagerplatzes und/oder über die Sperrung eines jeweiligen Pufferlagerplatzes sind durch einen Benutzer vorzugsweise nur gemeinsam mit eindeutigen Identifizierungsinformationen des jeweiligen Pufferlagerplatzes an die übergeordnete Steuerungsanlage weitergebbar.

Ein eindeutiges Identifizierungsmerkmal eines jeweiligen Pufferlagerplatzes umfasst vorzugsweise eindeutige Identifizierungsinformationen, mittels welcher ein jeweiliger Pufferlagerplatz eindeutig identifizierbar ist.

Unter einem eindeutigen Identifizierungsmerkmal wird im Rahmen dieser Beschreibung und der beigefügten Ansprüche insbesondere ein Identifizierungsmerkmal verstanden, welches in der Fördervorrichtung nur ein einziges Mal vorhanden ist und insbesondere unmittelbar einem jeweiligen Pufferlagerplatz zugeordnet ist.

Unter eindeutigen Identifizierungsinformationen werden im Rahmen dieser Beschreibung und der beigefügten Ansprüche insbesondere Identifizierungsinformationen verstanden, welche in der Fördervorrichtung nur ein einziges Mal vorhanden sind und insbesondere unmittelbar einem jeweiligen Pufferlagerplatz zugeordnet sind.

Ein eindeutiges Identifizierungsmerkmal eines Pufferlagerplatzes umfasst vorzugsweise einen Code, beispielsweise einen eindimensionalen Code oder einen zweidimensionalen Code, oder wird durch dieses gebildet.

Ein Identifizierungsmerkmal, welches einen eindimensionalen Code umfasst, ist insbesondere ein Barcode.

Ein Identifizierungsmerkmal, welches einen zweidimensionalen Code umfasst, ist beispielsweise ein Datamatrix-Code oder ein QR-Code.

Bei einer Ausgestaltung der Fördervorrichtung ist vorgesehen, dass das eindeutige Identifizierungsmerkmal durch einen Benutzer elektronisch erfassbar ist, insbesondere mittels eines Lesegeräts.

Das Lesegerät ist insbesondere ein mobiles Lesegerät, beispielsweise ein Scanner oder ein Smartphone, welches eine Kamera umfasst.

Günstig kann es daher sein, wenn die Fördervorrichtung ferner ein Lesegerät, insbesondere ein mobiles Lesegerät, beispielsweise einen Scanner oder ein Smartphone, umfasst.

Bei einer Ausgestaltung der Fördervorrichtung ist vorgesehen, dass die Fördervorrichtung eine Sensorvorrichtung zur Erfassung von Statusinformationen über eine Belegung mehrerer Pufferlagerplätze umfasst, beispielsweise eine Kamera.

Günstig kann es beispielsweise sein, wenn die Sensorvorrichtung zur Erfassung von Statusinformationen über eine Belegung mehrerer Pufferlagerplätze eine Kamera ist, welche oberhalb mehrerer Pufferlagerplätze angeordnet ist, beispielsweise an einem Hallendach einer Fertigungshalle, in welcher die Fördervorrichtung angeordnet ist.

Vorzugsweise ist die Sensorvorrichtung zur Erfassung von Statusinformationen über eine Belegung mehrerer Pufferlagerplätze zur Weitergabe der erfassten Statusinformationen an die übergeordnete Steuerungsanlage ausgebildet.

Bei einer Ausgestaltung der Fördervorrichtung ist vorgesehen, dass die Fördervorrichtung eine oder mehrere Sensorvorrichtungen zur Erfassung von Statusinformationen über eine Belegung eines einzelnen Pufferlagerplatzes umfasst.

Vorzugsweise ist jedem Pufferlagerplatz dabei jeweils eine Sensorvorrichtung zur Erfassung von Statusinformationen über eine Belegung des jeweiligen Pufferlagerplatzes zugeordnet.

Bei einer Ausgestaltung der Fördervorrichtung ist vorgesehen, dass eine Sensorvorrichtung zur Erfassung von Statusinformationen über eine Belegung eines einzelnen Pufferlagerplatzes ein oder mehrere an einem jeweiligen Pufferlagerplatz, insbesondere an Pufferlagerelementen des Pufferlagerplatzes, angeordnete Sensorelemente umfasst, mittels welcher eine Belegung des jeweiligen Pufferlagerplatzes erfassbar ist.

Beispielsweise ist es denkbar, dass an einem Pufferlagerplatz, insbesondere an Pufferlagerelementen des Pufferlagerplatzes, angeordnete Sensorelemente Ultraschallsensorelemente oder induktive Näherungssensorelemente sind.

Bei einer Ausgestaltung der Fördervorrichtung ist vorgesehen, dass eine Sensorvorrichtung zur Erfassung einer Belegung eines einzelnen Pufferlagerplatzes ein oder mehrere oberhalb und/oder unterhalb eines jeweiligen Pufferlagerplatzes angeordnete Sensorelemente umfasst.

Beispielsweise ist es denkbar, dass ein oberhalb eines Pufferlagerplatzes angeordnetes Sensorelement ein Ultraschallsensorelement ist.

Günstig kann es ferner sein, wenn ein unterhalb eines Pufferlagerplatzes angeordnetes Sensorelement ein Magnetometer und/oder ein Radarsensorelement ist.

Unterhalb eines Pufferlagerplatzes angeordnete Sensorelemente sind insbesondere in einen Boden eingebettet, auf welchem die Förderfahrzeuge der Fördervorrichtung bewegt werden.

Bei einer Ausgestaltung der Fördervorrichtung ist vorgesehen, dass die Sensorvorrichtungen zur Erfassung von Statusinformationen über die Belegung von Pufferlagerplätzen zur Weitergabe der erfassten Statusinformationen an die übergeordnete Steuerungsanlage ausgebildet sind.

Bei einer Ausgestaltung der Fördervorrichtung ist vorgesehen, dass ein jeweiliges Förderfahrzeug eine oder mehrere Sensorvorrichtungen, insbesondere eine oder mehrere Umgebungssensorvorrichtungen, umfasst, mittels welcher eine Belegung eines Pufferlagerplatzes erfassbar ist, insbesondere während das jeweilige Förderfahrzeug den Pufferlagerplatz passiert.

Mittels einer oder mehrerer Sensorvorrichtungen eines jeweiligen Förderfahrzeugs, mittels welcher eine Belegung eines Pufferlagerplatzes erfassbar ist, sind vorzugsweise Statusinformationen über die Belegung des Pufferlagerplatzes erfassbar.

Abhängig von den erfassten Statusinformationen über die Belegung des Pufferlagerplatzes ist das Förderfahrzeug mittels einer Steuervorrichtung desselben vorzugsweise derart ansteuerbar, dass das Förderfahrzeug einen von der übergeordneten Steuerungsanlage erhaltenen Einlagerungsauftrag zum Einlagern eines Gegenstands in einen Pufferlagerplatz unterbricht, wenn eine in der Speichereinrichtung der übergeordneten Steuerungsanlage hinterlegte Statusinformation über die Belegung des Pufferlagerplatzes, gemäß welcher der Pufferlagerplatz frei ist, von einer von der einen oder den mehreren Sensorvorrichtungen des Förderfahrzeugs erfassten Statusinformation über die Belegung des Pufferlagerplatzes abweicht, gemäß welcher der Pufferlagerplatz belegt ist.

Bei einer Ausgestaltung der Fördervorrichtung ist vorgesehen, dass eine in der Speichereinrichtung einer übergeordneten Steuerungsanlage hinterlegte Statusinformation über eine Belegung eines Pufferlagerplatzes der Puffervorrichtung durch eine mittels einer Sensorvorrichtung erfasste Statusinformation über eine Belegung des Pufferlagerplatzes ersetzbar ist, insbesondere wenn die mittels der Sensorvorrichtung erfasste Statusinformation von der in der Speichereinrichtung hinterlegten Statusinformation abweicht.

Bei einer Ausgestaltung der Fördervorrichtung ist vorgesehen, dass die übergeordnete Steuerungsanlage das eine oder die mehreren Förderfahrzeuge zum Einlagern eines Gegenstands in die Puffervorrichtung abhängig von in einer Speichereinrichtung der übergeordneten Steuerungsanlage hinterlegten Statusinformationen über eine Belegung eines jeweiligen Pufferlagerplatzes der Puffervorrichtung jeweils zu einem freien Pufferlagerplatz steuert.

Bei einer Ausgestaltung der Fördervorrichtung ist vorgesehen, dass ein jeweiliger Pufferlagerplatz einer Puffervorrichtung ein Sperrelement umfasst, welches zumindest teilweise in einem Durchfahrtsbereich des Pufferlagerplatzes anordenbar, insbesondere in diesen hinein bewegbar, ist, wobei ein jeweiliger Pufferlagerplatz mittels des Sperrelements für die Anfahrt durch ein Förderfahrzeug sperrbar ist.

Ein in dem Durchfahrtsbereich zumindest teilweise angeordnetes, insbesondere in diesen hinein bewegtes, Sperrelement verkleinert insbesondere den Durchfahrtsbereich und/oder einen freien Querschnitt des Durchfahrtsbereichs eines jeweiligen Pufferlagerplatzes.

Vorzugsweise wird ein in dem Durchfahrtsbereich des Pufferlagerplatzes angeordnetes, insbesondere in diesen hinein bewegtes, Sperrelement mittels einer oder mehrerer Sensorvorrichtungen eines Förderfahrzeugs, beispielsweise mittels einer oder mehrerer Umgebungssensorvorrichtungen, erfasst, wobei das Förderfahrzeug mittels einer Steuervorrichtung desselben vorzugsweise derart ansteuerbar ist, dass das Förderfahrzeug einen von einer übergeordneten Steuerungsanlage erhaltenen Einlagerungsauftrag zum Einlagern eines Gegenstands in einen Pufferlagerplatz unterbricht.

Vorzugsweise wird eine Unterbrechung eines Einlagerungsauftrags durch das Förderfahrzeug an die übergeordnete Steuerungsanlage gemeldet.

Günstig kann es sein, wenn die Steuerungsanlage anschließend einen aktualisierten Einlagerungsauftrag zum Einlagern eines Gegenstands in einen Pufferlagerplatz an das Förderfahrzeug übermittelt.

Die Fördervorrichtung eignet sich insbesondere als Bestandteil einer Bearbeitungsanlage zur Bearbeitung von Gegenständen, insbesondere Werkstücken, beispielsweise Kraftfahrzeugkarosserien.

Die vorliegende Erfindung betrifft daher auch eine Bearbeitungsanlage zur Bearbeitung von Gegenständen.

Die Bearbeitungsanlage umfasst vorzugsweise eine Fördervorrichtung, insbesondere eine oder mehrere erfindungsgemäße Fördervorrichtungen.

Die Bearbeitungsanlage ist insbesondere eine Bearbeitungsanlage zum Bearbeiten von Werkstücken, beispielsweise von Kraftfahrzeugkarosserien.

Die Bearbeitungsanlage umfasst vorzugsweise mehrere Bearbeitungsstationen zur Bearbeitungen der Gegenstände, insbesondere der Kraftfahrzeugkarosserien.

Die Bearbeitungsanlage ist beispielsweise eine Lackieranlage, welche insbesondere mehrere als Lackierstationen ausgebildete Bearbeitungsstationen umfasst.

Die erfindungsgemäße Bearbeitungsanlage weist vorzugsweise einzelne oder mehrere der im Zusammenhang mit der erfindungsgemäßen Fördervorrichtung und/oder dem erfindungsgemäßen Förderfahrzeug beschriebenen Merkmale und/oder Vorteile auf.

Die vorliegende Erfindung betrifft ferner ein Verfahren zum Bearbeiten und/oder Fördern von Gegenständen.

Die Gegenstände werden dabei insbesondere mittels einer Fördervorrichtung, insbesondere einer erfindungsgemäßen Fördervorrichtung, gefördert.

Alternativ oder ergänzend hierzu kann vorgesehen sein, dass die Gegenstände in und/oder mittels einer Bearbeitungsanlage, insbesondere einer erfindungsgemäßen Bearbeitungsanlage, bearbeitet werden.

Das erfindungsgemäße Verfahren weist vorzugsweise einzelne oder mehrere der im Zusammenhang mit der erfindungsgemäßen Fördervorrichtung und/oder der der erfindungsgemäßen Bearbeitungsanlage beschriebenen Merkmale und/oder Vorteile auf.

Grundsätzlich sind selbstverständlich sämtliche Merkmale und/oder Vorteile des Förderfahrzeugs, der Adaptervorrichtung, der Fördervorrichtung, der Bearbeitungsanlage und/oder des Verfahrens frei miteinander kombinierbar, um besondere Ausgestaltungen der Erfindung zu erhalten.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform einer Puffervorrichtung einer Fördervorrichtung, wobei die Puffervorrichtung einen freien Pufferlagerplatz umfasst, in welchen ein Gegenstand eingelagert wird;
- Fig. 2: eine schematische Draufsicht auf die Puffervorrichtung aus Fig. 1 bei Blick in Richtung des Pfeils 2 in Fig. 1;
- Fig. 3: eine der schematischen perspektivischen Darstellung aus Fig. 1 entsprechende weitere Darstellung der Puffervorrichtung aus Fig. 1, wobei die Puffervorrichtung drei freie Pufferlagerplätze umfasst und wobei in einen Pufferlagerplatz ein Gegenstand eingelagert wird;
- Fig. 4: eine schematische perspektivische Darstellung eines Förderfahrzeugs und einer daran angeordneten Adaptervorrichtung;
- Fig. 5: eine schematische perspektivische Darstellung eines Förderfahrzeugs und eines daran angeordneten Gegenstands;
- Fig. 6: eine schematische Draufsicht auf das Förderfahrzeug und den daran angeordneten Gegenstand aus Fig. 5 bei Blick in Richtung des Pfeils 6 in Fig. 5 zur Illustration der Funktionsweise von Sensorvorrichtungen des Förderfahrzeugs, wobei zur einfacheren Erläuterung auch das eigentlich unter dem Gegenstand angeordnete Förderfahrzeug sichtbar ist;
- Fig. 7: eine schematische Seitenansicht einer Kombination aus einem Förderfahrzeug und einem daran angeordneten Gegenstand zur Illustration der Funktionsweise von Sensorvorrichtungen des Förderfahrzeugs;
- Fig. 8: eine schematische perspektivische Darstellung einer Ausführungsform von Pufferlagerelementen eines Pufferlagerplatzes der Puffervorrichtung aus Fig. 1;
- Fig. 9: eine schematische perspektivische Darstellung einer Adaptervorrichtung von oben;
- Fig. 10: eine schematische perspektivische Darstellung der Adaptervorrichtung aus Fig. 9 von unten;
- Fig. 11: eine schematische perspektivische Darstellung der Pufferlagerelemente aus Fig. 8 sowie der Adaptervorrichtung aus Fig. 9, wobei die Adaptervorrichtung auf den Pufferlagerelementen angeordnet ist;
- Fig. 12: eine schematische perspektivische Darstellung einer zweiten Ausführungsform einer Puffervorrichtung einer Fördervorrichtung, wobei die Puffervorrichtung drei freie Pufferlagerplätze umfasst, wobei in einen Pufferlagerplatz ein Gegenstand eingelagert wird;
- Fig. 13: eine schematische Draufsicht auf die Puffervorrichtung aus Fig. 12 bei Blick in Richtung des Pfeils 13 in Fig. 12;
- Fig. 14: eine schematische perspektivische Darstellung einer weiteren Ausführungsform von Pufferlagerelementen eines Pufferlagerplatzes der Puffervorrichtung aus Fig. 12 sowie der Adaptervorrichtung aus Fig. 9, wobei die Adaptervorrichtung auf den Pufferlagerelementen angeordnet ist;
- Fig. 15: eine vergrößerte Darstellung des Bereichs XV in Fig. 14;
- Fig. 16: eine vergrößerte Darstellung des Bereichs XVI in Fig. 14;
- Fig. 17: eine schematische perspektivische Darstellung einer dritten Ausführungsform einer Puffervorrichtung einer Fördervorrichtung, wobei ein Gegenstand aus der Puffervorrichtung ausgelagert wird;
- Fig. 18: eine vergrößerte Darstellung des Bereichs XVIII in Fig. 17;
- Fig. 19: eine schematische Draufsicht auf die Puffervorrichtung aus Fig. 17 bei Blick in Richtung des Pfeils 19 in Fig. 17;

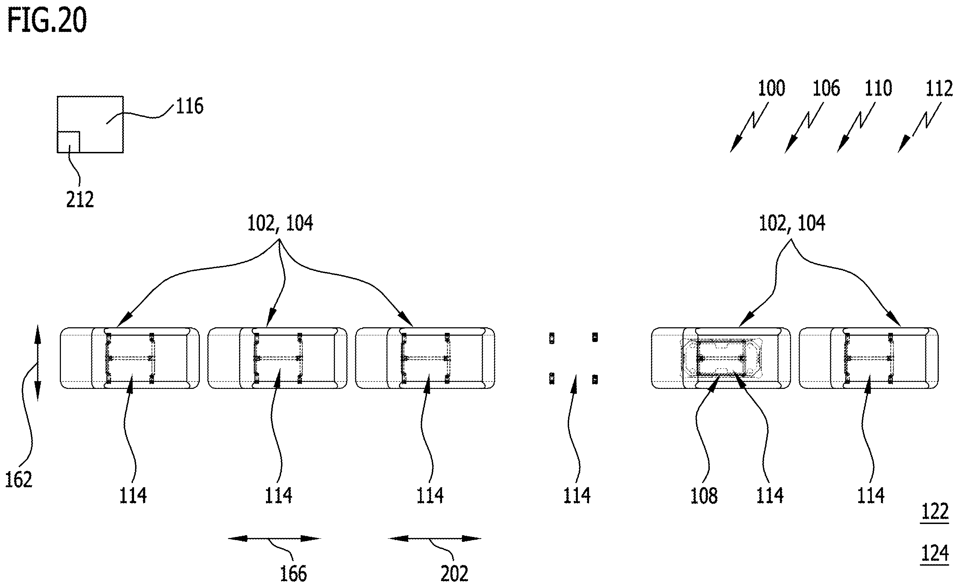

- Fig. 20: eine der schematischen Draufsicht aus Fig. 19 entsprechende Darstellung, wobei ein Pufferlagerplatz in der Puffervorrichtung frei ist;
- Fig. 21: eine schematische Frontansicht eines Pufferlagerplatzes sowie eines Förderfahrzeugs und einer daran angeordneten Adaptervorrichtung, wobei die Adaptervorrichtung oberhalb von Pufferlagerelementen des Pufferlagerplatzes angeordnet ist;
- Fig. 22: eine der Fig. 21 entsprechende schematische Frontansicht eines Pufferlagerplatzes sowie eines Förderfahrzeugs und einer daran angeordneten Adaptervorrichtung, wobei die Adaptervorrichtung auf Pufferlagerelementen des Pufferlagerplatzes angeordnet ist;
- Fig. 23: eine schematische Frontansicht eines Förderfahrzeugs und eines daran angeordneten Gegenstands sowie eines Pufferlagerplatzes und einer Sensorvorrichtung zur Erfassung von Statusinformationen über eine Belegung eines einzelnen Pufferlagerplatzes, wobei die Sensorvorrichtung ein an dem Pufferlagerplatz angeordnetes Sensorelement umfasst;
- Fig. 24: eine schematische Frontansicht eines Förderfahrzeugs und eines daran angeordneten Gegenstands sowie eines Pufferlagerplatzes und einer Sensorvorrichtung zur Erfassung von Statusinformationen über eine Belegung eines einzelnen Pufferlagerplatzes, wobei die Sensorvorrichtung ein oberhalb und ein unterhalb des Pufferlagerplatzes angeordnetes Sensorelement umfasst;
- Fig. 25: eine schematische Frontansicht mehrerer Pufferlagerplätze und darin eingelagerter Gegenstände sowie einer Sensorvorrichtung zur Erfassung von Statusinformationen über eine Belegung der mehreren Pufferlagerplätze;
- Fig. 26: eine schematische Frontansicht eines Förderfahrzeugs sowie eines Pufferlagerplatzes und eines in dem Pufferlagerplatz eingelagerten Gegenstands, wobei das Förderfahrzeug eine oder mehrere Sensorvorrichtungen umfasst, mittels welcher eine Belegung eines Pufferlagerplatzes erfassbar ist;
- Fig. 27: eine schematische Frontansicht eines Förderfahrzeugs sowie eines Pufferlagerplatzes und eines in dem Pufferlagerplatz eingelagerten Gegenstands, wobei der Pufferlagerplatz ein Sperrelement umfasst, welches einem Durchfahrtsbereich des Pufferlagerplatzes anordenbar ist; und
- Fig. 28: eine schematische Frontansicht eines Pufferlagerplatzes und eines in dem Pufferlagerplatz eingelagerten Gegenstands, wobei der Pufferlagerplatz ein eindeutiges Identifizierungsmerkmal umfasst, welches elektronisch durch ein Lesegerät erfassbar ist.

Gleiche oder funktional äquivalente Elemente sind in sämtlichen Figuren mit denselben Bezugszeichen versehen.

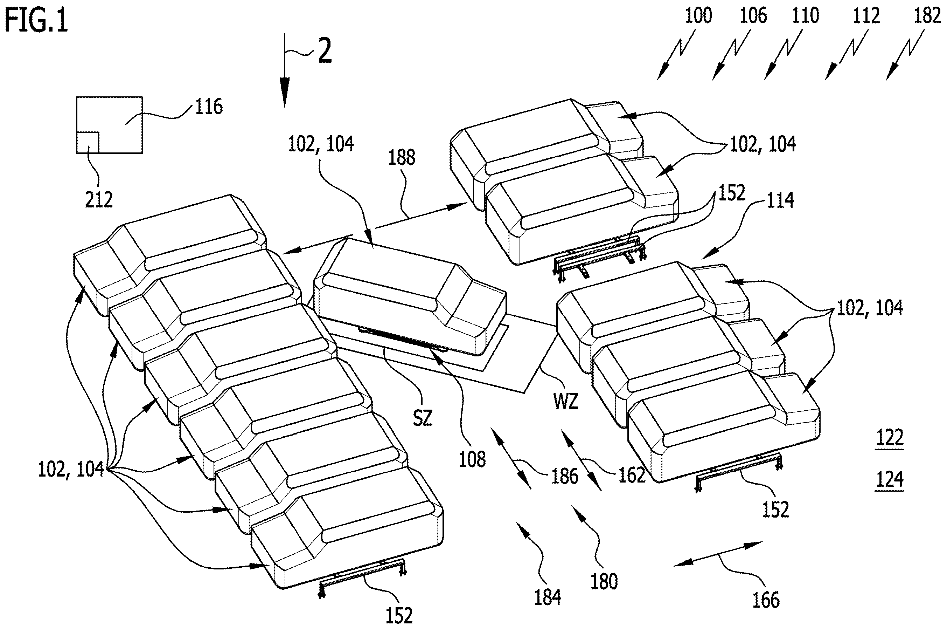

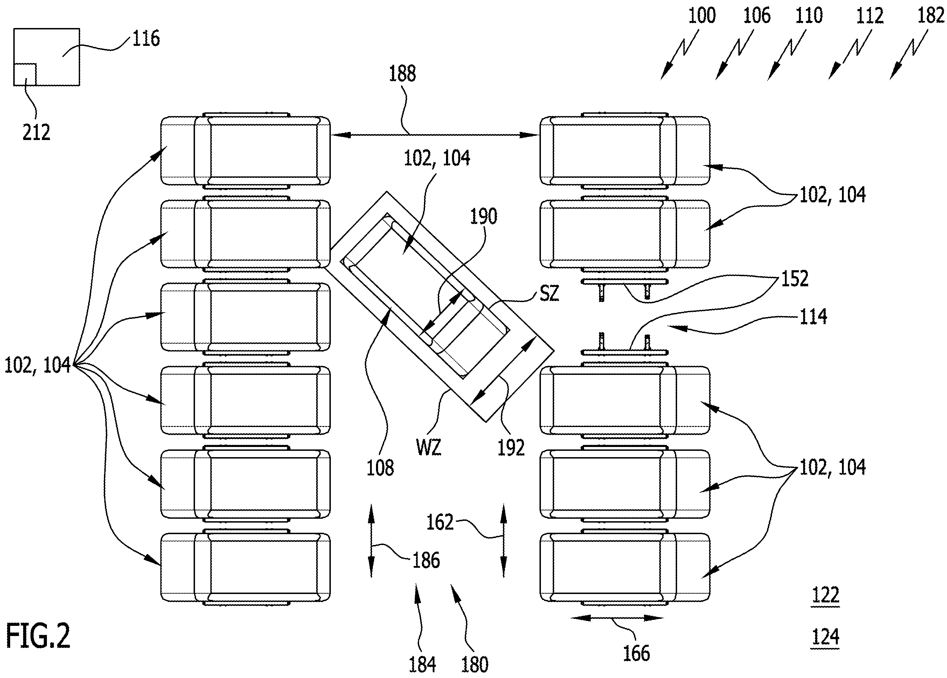

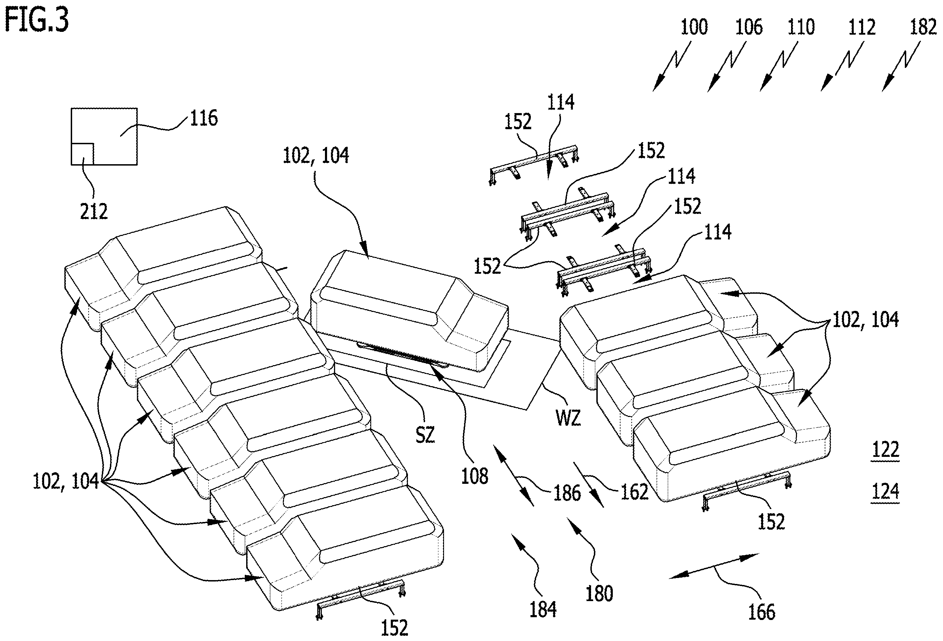

In den Fig. 1 bis 3 ist eine Ausführungsform einer als Ganzes mit 100 bezeichneten Puffervorrichtung zur Zwischenspeicherung von Gegenständen 102, insbesondere Kraftfahrzeugkarosserien 104, gezeigt.

Die Puffervorrichtung 100 ist insbesondere Bestandteil einer Fördervorrichtung 106, welche ferner ein oder mehrere Förderfahrzeuge 108 zum Fördern der Gegenstände 106 umfasst.

Die Fördervorrichtung 106 ist insbesondere Bestandteil einer Bearbeitungsanlage 110 zur Bearbeitung der Gegenstände 102, beispielsweise Bestandteil einer Lackieranlage 112.

Eine derartige Bearbeitungsanlage 110 umfasst vorzugsweise mehrere zeichnerisch nicht dargestellte Bearbeitungsstationen zur Bearbeitung der Gegenstände 106, insbesondere mehrere als Lackierstationen ausgebildete Bearbeitungsstationen.

Vorzugsweise sind die Gegenstände 106 mittels des einen oder der mehreren Förderfahrzeuge 108 in die Puffervorrichtung 100 einlagerbar, insbesondere zur Zwischenspeicherung der Gegenstände 106, und/oder aus der Puffervorrichtung 100 auslagerbar.

Insbesondere sind das eine oder die mehreren Förderfahrzeuge 108 und/oder die Puffervorrichtung 100 derart ausgebildet, dass die Gegenstände 106 mittels des einen oder der mehreren Förderfahrzeuge 108 in die Puffervorrichtung 100 einlagerbar und/oder aus der Puffervorrichtung 100 auslagerbar sind.

Die Puffervorrichtung 100 umfasst insbesondere einen oder mehrere Pufferlagerplätze 114. Jeweils ein Pufferlagerplatz 114 dient vorzugsweise zur Lagerung jeweils eines Gegenstands 102.

In den Fig. 1 bis 3 sind aus Übersichtlichkeitsgründen lediglich jeweils freie Pufferlagerplätze 114, das heißt Pufferlagerplätze 114 in welche kein Gegenstand 102 eingelagert ist, mit einem Bezugszeichen gekennzeichnet.

Zum Einlagern der Gegenstände 106 in die Puffervorrichtung 100 sind die Gegenstände 106 insbesondere an einen Pufferlagerplatz 114 der Puffervorrichtung 100 übergebbar.

Die Fördervorrichtung 106 umfasst vorzugsweise eine übergeordnete Steuerungsanlage 116 zur Steuerung und/oder Überwachung mehrerer Förderfahrzeuge 108.

Vorzugsweise koordiniert die übergeordnete Steuerungsanlage 116 mehrere Förderfahrzeuge 108, insbesondere sämtliche Förderfahrzeuge 108.

Die Förderfahrzeuge 108 der Fördervorrichtung 106 umfassen insbesondere jeweils einen Grundkörper 118, ein Fahrwerk 120, mittels welchem der Grundkörper 118 auf einem befahrbaren Untergrund 122 aufliegt und/oder bewegbar ist, sowie eine in den Figuren zeichnerisch nicht dargestellte Antriebsvorrichtung zum Antreiben des jeweiligen Förderfahrzeugs 108.

Der befahrbare Untergrund 122 ist insbesondere ein Boden 124, beispielsweise ein fester Boden, insbesondere ein Boden einer Fertigungshalle.

Der befahrbare Untergrund 122 ist insbesondere aus Beton oder Asphalt oder Metall gebildet oder umfasst Beton, Asphalt und/oder Metall.

Die Förderfahrzeuge 108 sind insbesondere selbstfahrend und/oder autonom ausgebildet.

Die Förderfahrzeuge 108 sind vorzugsweise automatisch steuerbar und/oder berührungslos geführt oder führbar.

Vorzugsweise sind die Förderfahrzeuge 108 flurgebunden.

Günstig kann es sein, wenn ein jeweiliges Förderfahrzeug 108 mehrere zeichnerisch nicht dargestellte Positionssensoren umfasst, welche insbesondere an unterschiedlichen Stellen längs einer Längsmittelachse des Förderfahrzeugs 108 und/oder längs einer parallel zu einer Längsmittelachse des Förderfahrzeugs 108 verlaufenden Richtung angeordnet sind.

Die Positionssensoren dienen insbesondere der Erfassung einer oder mehrere Positionierhilfen, insbesondere fest an einem Boden 124 angeordneter und/oder in den Boden 124 integrierter Positionierhilfen, beispielsweise eines oder mehrerer Codebänder, insbesondere QR-Codebänder.

Günstig kann es sein, wenn mittels mehrerer Positionssensoren an voneinander verschiedenen Stellen längs eines Bewegungswegs eines Förderfahrzeugs 108 gleichzeitig eine Positionsermittlung durchgeführt wird.

Die Förderfahrzeuge 108 umfassen vorzugsweise ferner eine Aufnahmevorrichtung 126, welche insbesondere zwei Aufnahmeelemente 128 zum Aufnehmen eines Gegenstands 102 umfasst.

Die zwei Aufnahmeelemente 128 erstrecken sich vorzugsweise in einer gemeinsamen Ebene, welche insbesondere vertikal und/oder parallel zu einer Längsmittelachse eines jeweiligen Förderfahrzeugs 108 verläuft.

Die zwei Aufnahmeelemente 128 erstrecken sich insbesondere in einer vertikalen Längsmittelebene eines jeweiligen Förderfahrzeugs 108.

Vorzugsweise sind Längsachsen oder Mittelachsen der Aufnahmeelemente 128, parallel zueinander ausgerichtet und/oder parallel zur Schwerkraftrichtung G ausgerichtet.

Die zwei Aufnahmeelemente 128 sind vorzugsweise die einzigen von dem Grundkörper 118 eines jeweiligen Förderfahrzeugs 108 nach oben hervorstehenden Elemente.

Die zwei Aufnahmeelemente 128 der Aufnahmevorrichtung 126 eines jeweiligen Förderfahrzeugs 108 ragen in einer eingefahrenen Stellung derselben in einer parallel zur Schwerkraftrichtung G verlaufenden Richtung insbesondere über den Grundkörper 118 des Förderfahrzeugs 108 hinaus.

Die zwei Aufnahmeelemente 128 sind vorzugsweise bewegbar an dem Grundkörper 118 eines jeweiligen Förderfahrzeugs 108 angeordnet.

Vorzugsweise sind die zwei Aufnahmeelemente 128 dabei parallel zu der Schwerkraftrichtung G bewegbar an dem Grundkörper 118 eines jeweiligen Förderfahrzeugs 108 angeordnet.

Günstig kann es daher sein, wenn ein jeweiliges Förderfahrzeug 108 eine Hubantriebsvorrichtung 130 umfasst, mittels welcher die zwei Aufnahmeelemente 128 relativ zu dem Grundkörper 118 anhebbar und/oder absenkbar sind. Die Hubantriebsvorrichtung 130 ist in den Figuren lediglich mittels eines Pfeils gekennzeichnet.

Mittels der Hubantriebsvorrichtung 130 sind die zwei Aufnahmeelemente 128 insbesondere aus dem Grundkörper 118 eines jeweiligen Förderfahrzeugs 108 ausfahrbar und/oder in diesen einfahrbar.

Vorzugsweise sind die zwei Aufnahmeelemente 128 miteinander gekoppelt und/oder ausschließlich gemeinsam relativ zu dem Grundkörper 118 bewegbar, so dass die Aufnahmeelemente 118 insbesondere ausschließlich gleichzeitig anhebbar und/oder ausschließlich gleichzeitig absenkbar sind.

Die Hubantriebsvorrichtung 130 eines jeweiligen Förderfahrzeugs 108 umfasst vorzugsweise ein in den Figuren zeichnerisch nicht dargestelltes Hubantriebselement sowie einen in den Figuren zeichnerisch nicht dargestellten Hubantriebsmotor.

Dabei verbindet das Hubantriebselement vorzugsweise den Hubantriebsmotor und die zwei Aufnahmeelemente 128 miteinander, so dass die zwei Aufnahmeelemente 128 gemeinsam mittels des Hubantriebsmotors bewegbar sind.

Günstig kann es sein, wenn ein jeweiliges Förderfahrzeug 108 einen oder mehrere in den Figuren zeichnerisch nicht dargestellte Aufnahmesensoren umfasst, mittels welcher ein an einem Aufnahmeelement 128 angeordneter Gegenstand 102 erfassbar und/oder auf dessen korrekte Festlegung hin überwachbar ist.

Alternativ oder ergänzend hierzu kann vorgesehen sein, dass ein Förderfahrzeug 108 einen oder mehrere in den Figuren ebenfalls zeichnerisch nicht dargestellte Aufnahmesensoren umfasst, mittels welcher eine Ausrichtung und/oder Positionierung eines beabstandet von einem Aufnahmeelement 128 angeordneten Gegenstands 102 erfassbar sind.

Beispielsweise ist es denkbar, dass zwei Aufnahmesensoren oder mehr als zwei Aufnahmesensoren in einem die Aufnahmeelemente 128 umgebenden Bereich des Grundkörpers 118 an demselben angeordnet sind. Günstig kann es ferner sein, wenn mindestens ein Aufnahmesensor an einem Aufnahmeelement 128 angeordnet ist.

Vorzugsweise ist mittels eines Aufnahmesensors eine Ausrichtung und/oder Positionierung des Gegenstands 102 vor einem Anheben oder Ausfahren der Aufnahmeelemente erfassbar.

An dem Grundkörper 118 eines Förderfahrzeugs 108 angeordnete Aufnahmesensoren sind beispielsweise berührungslos arbeitende Aufnahmesensoren.

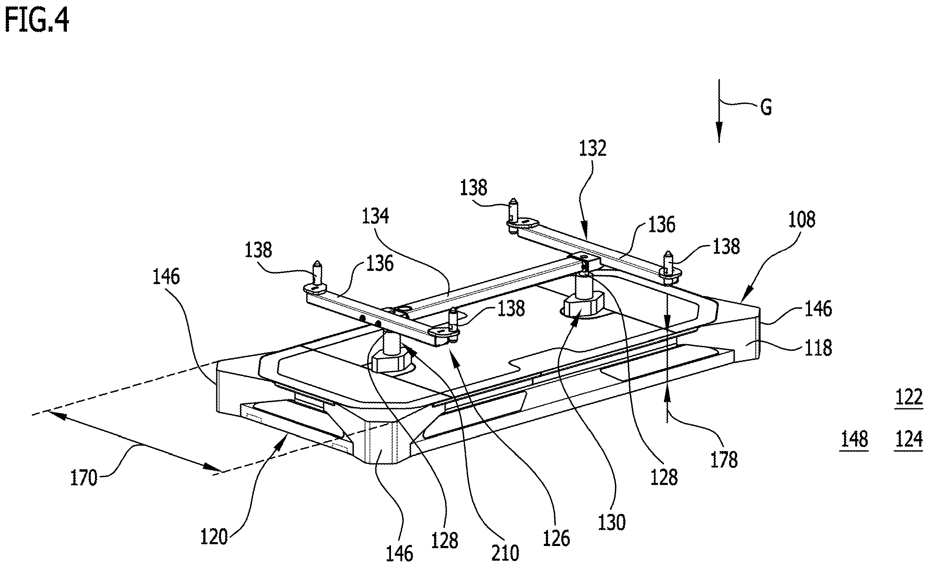

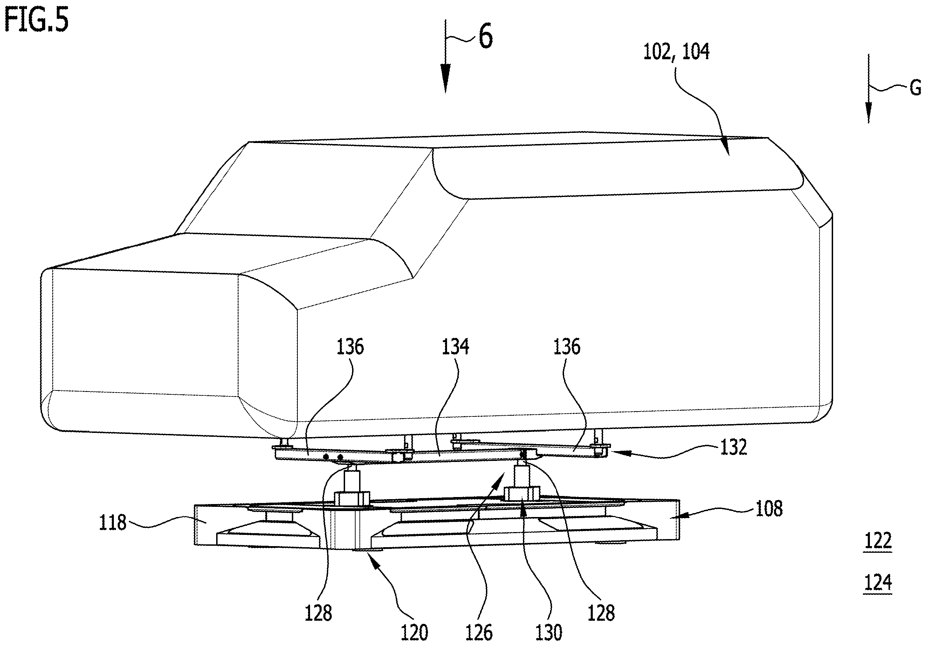

Die in den Fig. 1 bis 3 dargestellte Fördervorrichtung 106 umfasst vorzugsweise ferner mehrere Adaptervorrichtungen 132, welche beispielsweise in den Fig. 4, 5, 9 und 10 dargestellt sind.

Die Verwendung einer Adaptervorrichtung 132 kann insbesondere zur Anordnung von großen und/oder schweren Gegenständen 102, beispielsweise Kraftfahrzeugkarosserien 104, vorteilhaft sein.

Vorzugsweise ist jeweils ein Gegenstand 102 auf jeweils einer Adaptervorrichtung 132 aufnehmbar.

Die Adaptervorrichtung 132 umfasst insbesondere ein Zentralelement, 134 welches zwei oder mehr als zwei Adapterelemente 136 miteinander verbindet.

Die Adapterelemente 136 sind an den zu fördernden Gegenstand 102 angepasst. Beispielsweise weist jedes Adapterelement 136 jeweils einen, zwei oder mehr als zwei Aufnahmepins 138 auf, welche beispielsweise entgegen der Schwerkraftrichtung G nach oben ragen und zur Aufnahme eines beispielsweise als Kraftfahrzeugkarosserie 104 ausgebildeten Gegenstands 102 an dessen Unterseite angreifen.

Die Adapterelemente 132 sind hinsichtlich Geometrie, Größe, Anzahl und/oder Ausgestaltung der Aufnahmepins 138 insbesondere an die zu fördernden Gegenstände 102 angepasst.

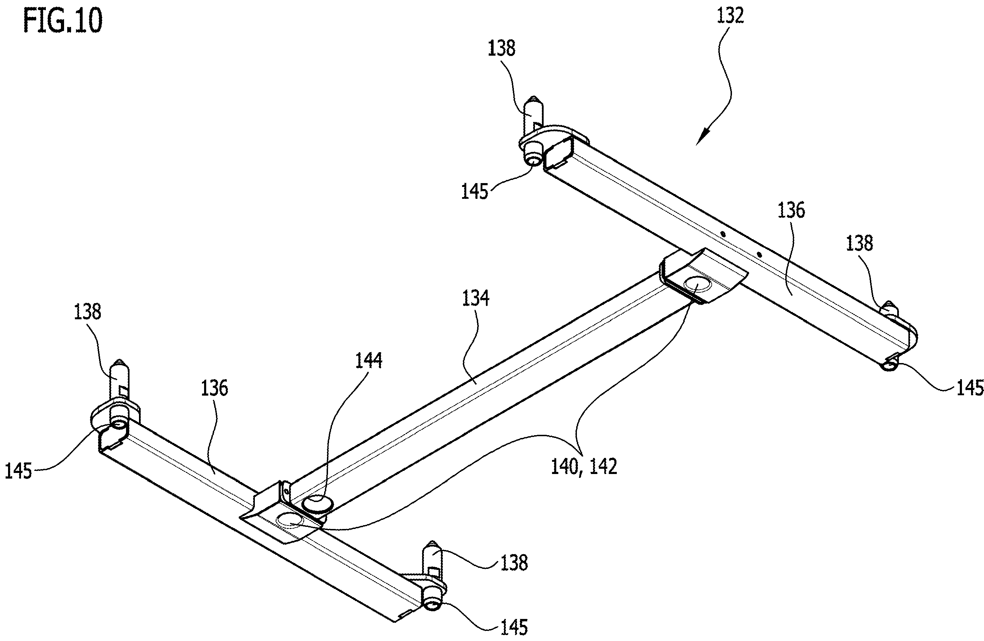

Wie insbesondere Fig. 10 zu entnehmen ist, ist die Adaptervorrichtung mit zwei Angriffsbereichen 140, beispielsweise Einführöffnungen 142, versehen, an welchen die Aufnahmeelemente 128, insbesondere Aufnahmeabschnitte der Aufnahmeelemente 128, der Förderfahrzeuge 108 angreifen können.

Die Einführöffnungen 142 sind insbesondere konisch verjüngend ausgebildet, um eine stabile Verbindung zwischen der Adaptervorrichtung 126 und den Aufnahmeelementen 128 eines Förderfahrzeugs 108 herzustellen.

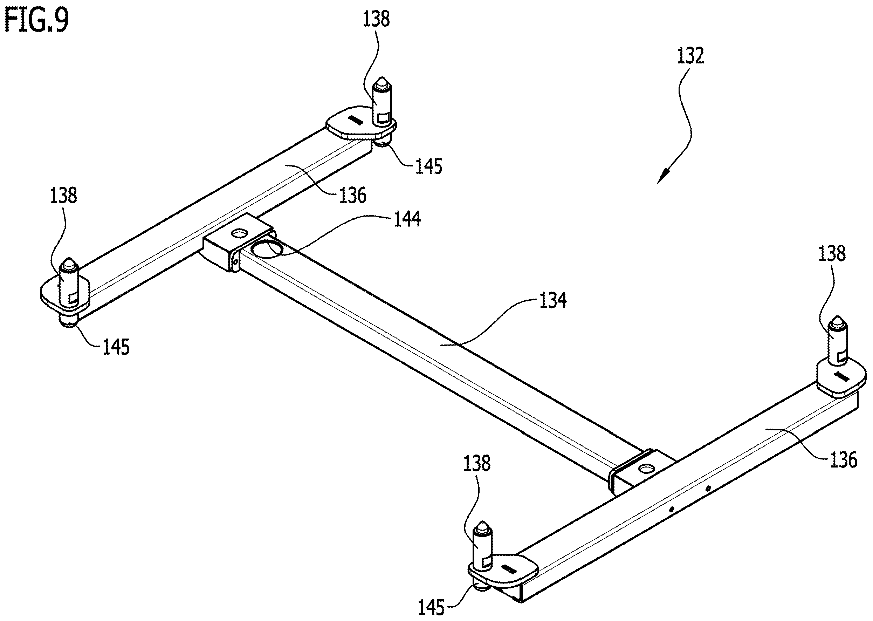

Bei der in den Fig. 9 und 10 dargestellten Ausführungsform der Adaptervorrichtung 132 sind die Angriffsbereiche 140, insbesondere die Einführöffnungen 142, an den Adapterelementen 136 angeordnet. Es kann jedoch auch vorgesehen sein, dass diese an dem Zentralelement 134 vorgesehen und/oder ausgebildet sind.

Wie den Fig. 9 und 10 ferner zu entnehmen ist, umfasst die Adaptervorrichtung 132 eine Detektionshilfe 144, welche beispielsweise als DurchtrittsÖffnung ausgebildet ist. Die Detektionshilfe 144 ist insbesondere bezüglich einer Längsrichtung der Adaptervorrichtung 132 vor oder hinter einem Angriffsbereich 140, insbesondere einer Einführöffnung 142, angeordnet, insbesondere in demselben Abstand, wie ein oder beide Aufnahmesensoren von einem Aufnahmeelement 128 eines Förderfahrzeugs 108 entfernt sind.

Da die Detektionshilfe 144 lediglich einfach vorhanden ist, kann mittels der Aufnahmesensoren vorzugsweise überwacht werden, ob die Adaptervorrichtung 132 in einer korrekten Drehausrichtung an einem Förderfahrzeug 108 angeordnet ist, da entweder die Detektionshilfe 144, das heißt im Falle einer Durchtrittsöffnung kein direkt über dem Aufnahmesensor angeordnetes Objekt, oder aber das Zentralelement 134 erfassbar ist, abhängig davon, ob die Adaptervorrichtung 132 in einer gewünschten Ausrichtung an dem Förderfahrzeug 108 angeordnet ist oder nicht.

Mittels eines weiteren, nicht der Detektionshilfe 144 zugeordneten Aufnahmesensors kann vorzugsweise ein Adapterelement 132 auf dessen Vorhandensein hin überwacht werden, wodurch ermittelbar ist, ob überhaupt eine Adaptervorrichtung 132 an einem Förderfahrzeug 108 angeordnet ist.

Vorzugsweise umfasst die Adaptervorrichtung 132 mehrere Abstützelemente 145. Günstig kann es insbesondere sein, wenn an den Adapterelementen 136 der Adaptervorrichtung 132 jeweils ein oder mehrere, beispielsweise zwei, Abstützelemente 145 angeordnet sind.

Die Abstützelemente 145 sind beispielsweise fluchtend mit den Aufnahmepins 138 angeordnet und ragen vorzugsweise in Schwerkraftrichtung G nach unten.

Mittels der Abstützelemente 145 kann sich die Adaptervorrichtung 132 insbesondere an noch zu beschreibenden Pufferlagerelementen eines Pufferlagerplatzes 114 der Puffervorrichtung 100 und/oder einer in den Figuren zeichnerisch nicht dargestellten Stationsfördervorrichtung abstützen.

Mittels einer Stationsfördervorrichtung ist ein Gegenstand 102 insbesondere durch eine Bearbeitungsstation einer Bearbeitungsanlage 110 hindurchförderbar.

Die Förderfahrzeuge 108 der Fördervorrichtung 106 umfassen vorzugsweise ferner eine oder mehrere Umgebungssensorvorrichtungen 146 umfasst, mittels welcher ein Umgebungsbereich 148 des jeweiligen Förderfahrzeugs 108 erfassbar ist (vergl. Fig. 4).

Insbesondere ist mittels der einen oder der mehreren Umgebungssensorvorrichtungen 146 ein dreidimensionaler Umgebungsbereich 148 dreidimensional erfassbar, wobei innerhalb des erfassten Umgebungsbereichs 148 erfasste Objekte vorzugsweise hinsichtlich ihrer Ausmaße und Positionierung relativ zu dem jeweiligen Förderfahrzeug 108 erfassbar sind.

Günstig kann es sein, wenn die Ausmaße und die Positionierung der erfassten Objekte mittels einer zeichnerisch nicht dargestellten Steuervorrichtung des Förderfahrzeugs 108 aus Sensordaten der einen oder der mehreren Umgebungssensorvorrichtungen 146 errechnet werden.

Der Umgebungsbereich 148 setzt sich vorzugsweise aus mehreren Zonen zusammen oder umfasst mehrere Zonen. Die Zonen können einander überlappend ausgebildet sein oder vollständig voneinander verschiedene Raumbereiche abdecken.

Mittels der einen oder der mehreren Umgebungssensorvorrichtungen 146 sind insbesondere voneinander verschiedene Zonen des Umgebungsbereichs 148 erfassbar.

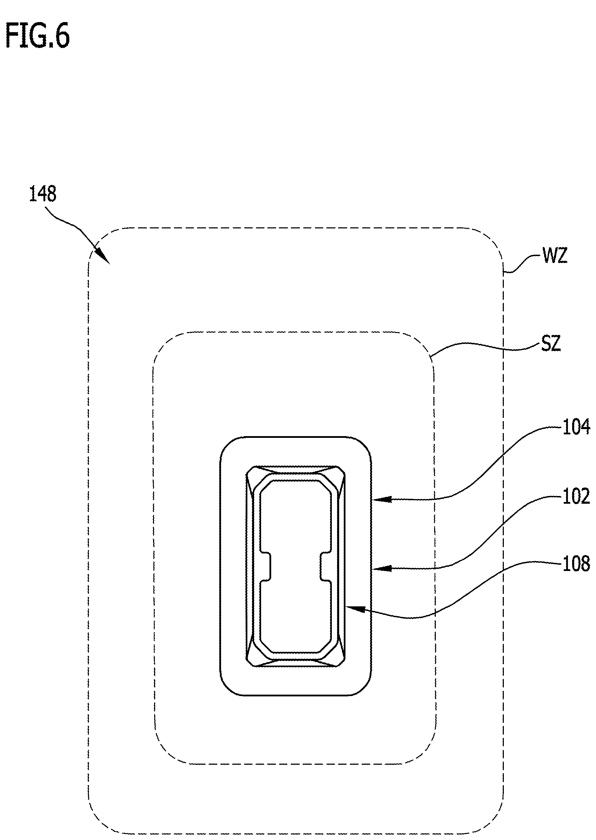

Eine Zoneneinteilung ergibt sich beispielsweise durch die Auswahl von Grenzlinien in unterschiedlichen Abständen von dem jeweiligen Förderfahrzeug. 108. Wie insbesondere Fig. 6 zu entnehmen ist, kann der Umgebungsbereich 148 in horizontaler Richtung beispielsweise in drei Zonen eingeteilt werden, insbesondere abhängig von einer Entfernung von dem Förderfahrzeug 108.

Eine innerste Zone mit geringstem Abstand zum Förderfahrzeug 108, insbesondere eine unmittelbar an das Förderfahrzeug 108 angrenzende Zone, ist beispielsweise die Schutzzone SZ.

Diese Schutzzone SZ ist vorzugsweise ein Bereich, in welchem insbesondere für einen störungsfreien Betrieb kein Objekt außer dem Förderfahrzeug 108 selbst (und gegebenenfalls dem Gegenstand 102) angeordnet sein darf. Vorzugsweise wird im Falle der Detektion eines Objekts in dieser Schutzzone SZ umgehend und/oder automatisch das Förderfahrzeug 108 in einen Stoppbetrieb versetzt.

Die Schutzzone SZ ist insbesondere im horizontalen Schnitt ringförmig ausgebildet.

Eine sich an die Schutzzone SZ anschließende weitere Zone ist beispielsweise eine Warnzone WZ. Die Warnzone WZ umgibt die Schutzzone SZ vorzugsweise ringförmig, insbesondere bezogen auf einen horizontalen Schnitt durch das Förderfahrzeug 108.

Die Warnzone WZ ist insbesondere ein Bereich, in welchem kein Objekt außer dem Förderfahrzeug 108 selbst angeordnet sein sollte, wobei eine Erfassung eines Objekts noch nicht zwingend zur Auslösung des Stoppbetriebs führt. Vielmehr wird das Förderfahrzeug 108 im Falle der Detektion eines Objekts in dieser Warnzone WZ vorzugsweise umgehend und/oder automatisch in den Warnbetrieb versetzt.

Außerhalb der Warnzone WZ liegt insbesondere eine Freizone (ohne Bezugszeichen), welche bei Bedarf von der einen oder den mehreren Umgebungssensorvorrichtungen 146 erfassbar ist, jedoch nicht auf die Präsenz von Objekten, etc. überwacht wird.

Die Objekte, welche als von der einen oder den mehreren Umgebungssensorvorrichtungen 146 erfasste Objekte bezeichnet werden, sind insbesondere solche Objekte, welche in einem erwarteten Normalbetrieb eines Förderfahrzeugs 108 beziehungsweise der Fördervorrichtung 106 und/oder der Bearbeitungsanlage 110 nicht an der erfassten Position sein sollten. Allerdings werden von der einen oder den mehreren Umgebungssensorvorrichtungen 146 auch solche Objekte erfasst, welche Bestandteile der Fördervorrichtung 106 und/oder der Bearbeitungsanlage 110 sind und deren Präsenz erforderlich ist.

Mittels der Steuervorrichtung eines jeweiligen Förderfahrzeugs 108 und/oder mittels der übergeordneten Steuerungsanlage 116 wird vorzugsweise überprüft, insbesondere berechnet, ob ein erfasstes Objekt ein unerwartetes und/oder unbekanntes und/oder störendes Objekt ist oder ob es sich um ein Objekt handelt, dessen Präsenz akzeptabel ist.

Vorzugsweise wird diese Überprüfung durchgeführt, bevor das jeweilige Förderfahrzeug 108 in den Warnbetrieb oder den Stoppbetrieb versetzt wird.

Abhängig von einem aktuellen Zustand des Förderfahrzeugs 108, insbesondere abhängig davon, ob das Förderfahrzeug 108 mit einem Gegenstand 102 beladen oder aber unbeladen ist, und/oder abhängig davon, mit welcher momentanen Geschwindigkeit und in welche Richtung das Förderfahrzeug 108 sich bewegt, werden vorzugsweise die Grenzlinien zwischen den Zonen variiert.

Beispielsweise werden bei relativ hoher Geschwindigkeit des Förderfahrzeugs 108 vorzugsweise die Grenzlinien im Bereich vor dem Förderfahrzeug 108 (bezüglich der Fahrtrichtung) von dem Förderfahrzeug 108 weg verschoben, so dass sich vor dem Förderfahrzeug 108 eine Vergrößerung der Zonen, insbesondere der Warnzone WZ und/oder der Schutzzone SZ, ergibt.

Im Falle einer Kurvenfahrt kann beispielsweise eine Krümmung und/oder eine zumindest partielle, seitliche Verschiebung der Zonen derart vorgesehen sein, dass diese insbesondere im Bereich vor dem Förderfahrzeug 108 einen möglichst großen Raumbereich längs der tatsächlichen Fahrtstrecke (Bewegungsweg) abdecken.

Der Bereich hinter dem Förderfahrzeug 108 (bezüglich der Fahrtrichtung) muss üblicherweise weniger sorgfältig überwacht werden, so dass die hinter dem Förderfahrzeug 108 befindlichen Teile der Zonen, insbesondere der Warnzone WZ und/oder der Schutzzone SZ, verkleinert werden können.

Mittels der Steuervorrichtung eines jeweiligen Förderfahrzeugs 108 und/oder mittels der übergeordneten Steuerungsanlage 116 werden die Grenzlinienverläufe und/oder die Ausmaße und/oder die Form der Zonen, insbesondere der Warnzone WZ und/oder der Schutzzone SZ, vorzugsweise regelmäßig, beispielsweise mehrmals pro Minute oder Sekunde, an den jeweils aktuellen Zustand angepasst.

Alternativ oder ergänzend hierzu kann eine Anpassung insbesondere stets dann vorgenommen werden, wenn das Förderfahrzeug 108 eine Zustandsänderung erfährt, beispielsweise eine Richtungsänderung, eine Beladung, eine Entladung, eine Beschleunigung, etc.

Als Zustandsmerkmal, welches insbesondere Einfluss auf die Grenzlinienverläufe der Zonen hat, kann ferner vorzugsweise die momentane Position des Förderfahrzeugs 108 innerhalb der Fördervorrichtung 106 und/oder innerhalb der Bearbeitungsanlage 110 herangezogen werden.

Insbesondere können die Zonen hinsichtlich ihrer Ausmaße und/oder Formen abhängig von der momentanen Position des Förderfahrzeugs 108 innerhalb der Fördervorrichtung 106 und/oder der Bearbeitungsanlage 110 variiert werden.

Beispielsweise dann, wenn das Förderfahrzeug 108 sich einer Bearbeitungsstation nähert und erwartbar ist, dass Teile der Bearbeitungsstation in die Warnzone WZ und/oder in die Schutzzone SZ gelangen werden (beziehungsweise sich die Warnzone WZ und/oder die Schutzzone SZ bis in die Teile der Bearbeitungsstation hineinerstrecken wird/werden), kann eine Verkleinerung der Zonen, insbesondere der Warnzone WZ und/oder der Schutzzone SZ, derart vorgesehen sein, dass die Teile der Bearbeitungsstation außerhalb der Warnzone WZ und/oder der Schutzzone SZ liegen.

Insbesondere kann für eine in der Bearbeitungsstation erwartete Geradeausfahrt eine seitliche Umgebungserfassung reduziert oder vollständig deaktiviert werden.

Ferner kann vorzugsweise für eine in einem jeweiligen Pufferlagerplatz 114 erwartete Geradeausfahrt eine seitliche Umgebungserfassung reduziert oder vollständig deaktiviert werden.

Mit Hinblick auf Fig. 6 wurde insbesondere eine Zoneneinteilung in horizontaler Richtung erläutert. Vorteilhaft kann es ferner sein, wenn alternativ oder ergänzend zu einer Zoneneinteilung in horizontaler Richtung eine Zoneneinteilung in vertikaler Richtung vorgesehen ist.

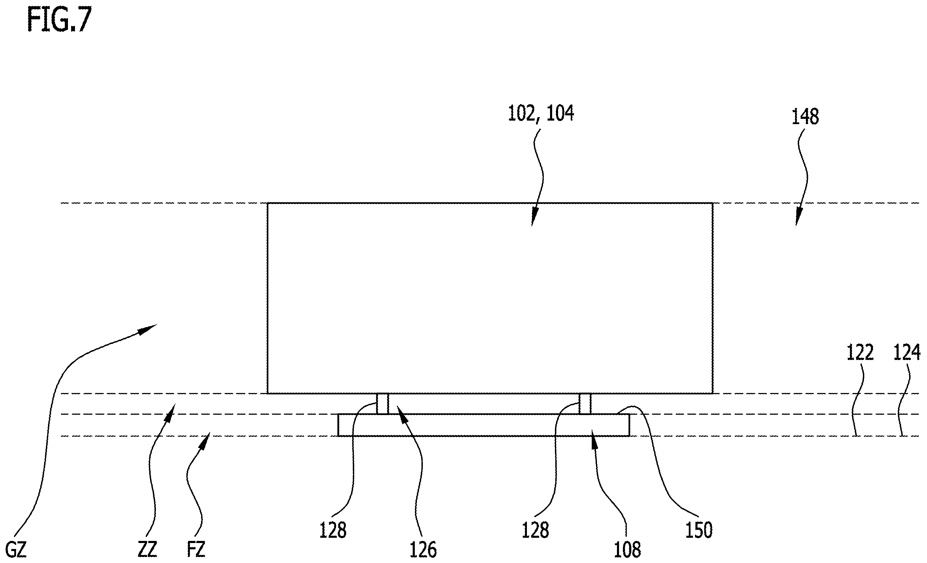

Wie Fig. 7 zu entnehmen ist, kann insbesondere vorgesehen sein, dass in vertikaler Richtung eine Zone definiert wird, innerhalb derer ein Förderfahrzeug 108 angeordnet ist. Diese Zone ist insbesondere eine Förderfahrzeugzone FZ.

Die Förderfahrzeugzone FZ erstreckt sich in vertikaler Richtung insbesondere ausgehend von dem Boden 124, auf welchem ein Förderfahrzeug 108 verfahrbar ist, bis zu einer Oberseite 150 des Grundkörpers 118 des Förderfahrzeugs 108 oder einem oberen Ende eines oder mehrerer Aufnahmeelemente 128.

Durch Erfassung des Raumbereichs des Umgebungsbereichs 148, welcher die Förderfahrzeugzone FZ bildet oder umfasst, kann somit insbesondere ermittelt werden, ob sich ein Förderfahrzeug 108 weiteren Förderfahrzeugen 108 nähert.

Eine weitere Zone in vertikaler Richtung ergibt sich aus der Dimensionierung des an dem Förderfahrzeug 108 angeordneten Gegenstands 102. Diese den Gegenstand 102 abdeckende Zone erstreckt sich in vertikaler Richtung insbesondere von einer Unterseite des Gegenstands 102 (gegebenenfalls einschließlich einer Adaptervorrichtung 132) und/oder bis zu einer Oberseite des Gegenstands 102, vorzugsweise von einem tiefsten Punkt des Gegenstands 102 (gegebenenfalls einschließlich einer Adaptervorrichtung 132) und/oder bis zu einem höchsten Punkt des Gegenstands 102. Diese Zone wird vorliegend als Gegenstandszone GZ bezeichnet.

Es kann vorgesehen sein, dass die Gegenstandszone GZ unmittelbar an die Förderfahrzeugzone FZ angrenzt.

Alternativ hierzu kann vorgesehen sein, dass zwischen der Gegenstandszone GZ und der Förderfahrzeugzone FZ eine Zwischenzone ZZ angeordnet ist, welche sich insbesondere von der Oberseite 172 des Grundkörpers 118 des Förderfahrzeugs 108 und/oder bis zu einer Unterseite des Gegenstands 102 (gegebenenfalls einschließlich einer Adaptervorrichtung 132) erstreckt, vorzugsweise bis zu einem tiefsten Punkt des Gegenstands 102 (gegebenenfalls einschließlich einer Adaptervorrichtung 132).

Ferner kann vorgesehen sein, dass die Zwischenzone ZZ sich in vertikaler Richtung zumindest näherungsweise so weit erstreckt, wie das eine oder die mehreren Aufnahmeelemente 128 aus dem Grundkörper 118 des Förderfahrzeugs 108 herausragen.

Günstig kann es sein, wenn die in vertikaler Richtung eingeteilten Zonen mit den in horizontaler Richtung eingeteilten Zonen überlagert werden, insbesondere um für die Kombination aus Förderfahrzeug 108 und Gegenstand 102 eine optimale Umgebungserfassung und Gefahrenvermeidung zu ermöglichen. Vorzugsweise ist der Förderfahrzeugzone FZ eine Warnzone WZ und/oder eine Schutzzone SZ zugeordnet, so dass insbesondere überwachbar ist, ob ein Förderfahrzeug 108 weiteren Förderfahrzeugen 108 oder sonstigen Objekten zu nahekommt.

Unter der Zuordnung einer sich aus einer horizontalen Einteilung (Warnzone WZ, Schutzzone SZ) ergebenden Zone zu einer sich aus einer vertikalen Einteilung ergebenden Zone (Förderfahrzeugzone FZ, Zwischenzone ZZ, Gegenstandszone GZ) ist insbesondere zu verstehen, dass ein Raumbereich, welcher eine nur in vertikaler Richtung definierte und somit in horizontaler Richtung unbegrenzte Zone (FZ, ZZ, GZ) bildet, in horizontaler Richtung in mehrere Zonen (WZ, SZ) eingeteilt wird.

Ferner kann vorgesehen sein, dass der Gegenstandszone GZ eine Warnzone WZ und/oder eine Schutzzone SZ zugeordnet ist, so dass insbesondere überwachbar ist, ob ein Förderfahrzeug 108 weiteren Förderfahrzeugen 108 oder sonstigen Objekten zu nahekommt.

Zudem kann vorgesehen sein, dass der Zwischenzone ZZ eine Warnzone WZ und/oder eine Schutzzone SZ zugeordnet ist, so dass insbesondere überwachbar ist, ob ein Förderfahrzeug 108 im Bereich der zwei Aufnahmeelemente 128 einem Objekt zu nahekommt.

Die räumliche Ausdehnung, insbesondere in horizontaler Richtung, und/oder die Form der der Förderfahrzeugzone FZ zugeordneten Warnzone WZ und/oder der der Förderfahrzeugzone FZ zugeordneten Schutzzone SZ hängen insbesondere davon ab, ob ein Förderfahrzeug 108 beladen ist und/oder wo sich das Förderfahrzeug 108 in der Fördervorrichtung 106 und/oder Bearbeitungsanlage 110 befindet.

Die räumliche Ausdehnung, insbesondere in horizontaler Richtung, und/oder die Form der der Gegenstandszone GZ zugeordneten Warnzone WZ und/oder der der Gegenstandszone GZ zugeordneten Schutzzone SZ hängen insbesondere davon ab, ob ein Gegenstand 102 an einem Förderfahrzeug 108 angeordnet ist, welche Ausmaße dieser Gegenstand 102 selbst hat und/oder wo sich das Förderfahrzeug 108 samt des daran angeordneten Gegenstands 102 in der Fördervorrichtung 106 und/oder Bearbeitungsanlage 110 befindet. Insbesondere kann bei nicht beladenem Förderfahrzeug 108, das heißt bei nicht vorhandenem Gegenstand 102, vorgesehen sein, dass eine Umgebungsüberwachung im Bereich der Gegenstandszone GZ vollständig deaktiviert wird.

Die räumliche Ausdehnung, insbesondere in horizontaler Richtung, und/oder die Form der der Zwischenzone ZZ zugeordneten Warnzone WZ und/oder der der Zwischenzone ZZ zugeordneten Schutzzone SZ hängen insbesondere davon ab, ob ein Gegenstand 102 an einem Förderfahrzeug 108 angeordnet ist, wie weit die Aufnahmeelemente 128 aus dem Grundkörper 118 eines Förderfahrzeugs 108 herausragen und/oder wo sich ein Förderfahrzeug 108 samt des gegebenenfalls daran angeordneten Gegenstands 102 in der Fördervorrichtung 106 und/oder Bearbeitungsanlage 110 befindet.

Bei einer Ausgestaltung kann vorgesehen sein, dass jedes Förderfahrzeug 108 selbstständig und unabhängig von den anderen Förderfahrzeugen 108 beispielsweise basierend auf der Umgebungsüberwachung seine sich aus einem Auftrag ergebende Route oder seinen sich aus dem Auftrag ergebenden Bewegungsweg überprüft und/oder überwacht, insbesondere um Kollisionen zu vermeiden.

Ergänzend hierzu kann ferner vorgesehen sein, dass die Förderfahrzeuge 108 sich gegenseitig (direkt oder indirekt über die übergeordnete Steuerungsanlage 116) über den jeweiligen Fahrzeugzustand und/oder die jeweiligen Ausdehnungen und/oder Formen der Zonen, insbesondere der Warnzonen WZ, Schutzzonen SZ, Förderfahrzeugzonen FZ, Gegenstandszonen GZ und/oder Zwischenzonen ZZ, informieren. Hierdurch können insbesondere planmäßige Überlappungen in den Zonen, welche sich beispielsweise bei einer engen gegenläufigen Vorbeifahrt zweier Förderfahrzeuge 108 ergeben können, bewusst toleriert werden, ohne einen unnötigen Warnbetrieb auszulösen.

Mit der in den Fig. 1 bis 3 dargestellten Ausführungsform einer Puffervorrichtung 100 ist vorzugsweise ein Gegenstand 102, insbesondere ein auf einer Adaptervorrichtung 132 aufgenommener Gegenstand in einen Pufferlagerplatz 114 der Puffervorrichtung 100 einlagerbar.

Vorzugsweise umfasst ein jeweiliger Pufferlagerplatz 114 der Puffervorrichtung 100 jeweils ein oder mehrere Pufferlagerelemente 152.

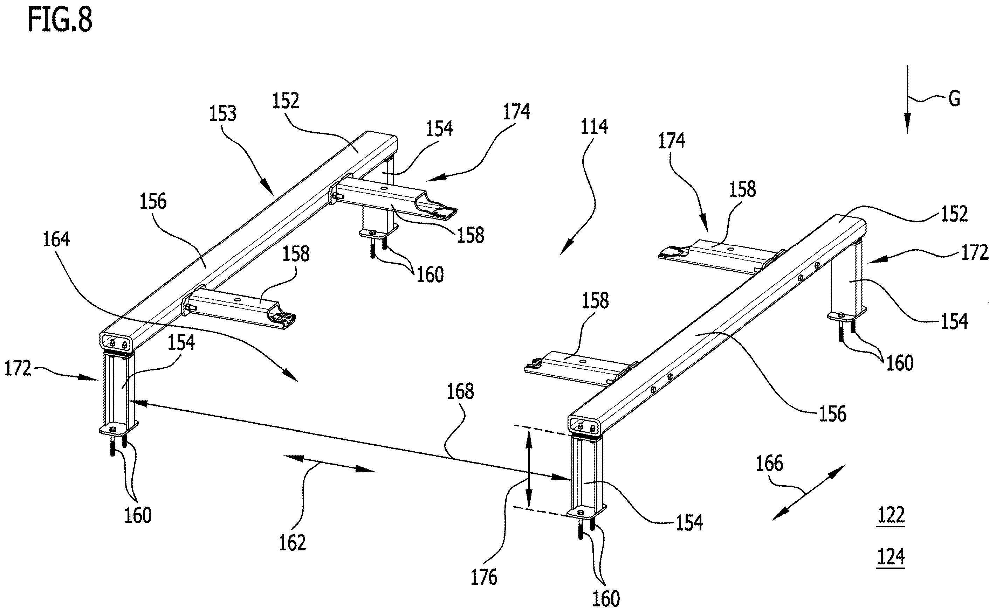

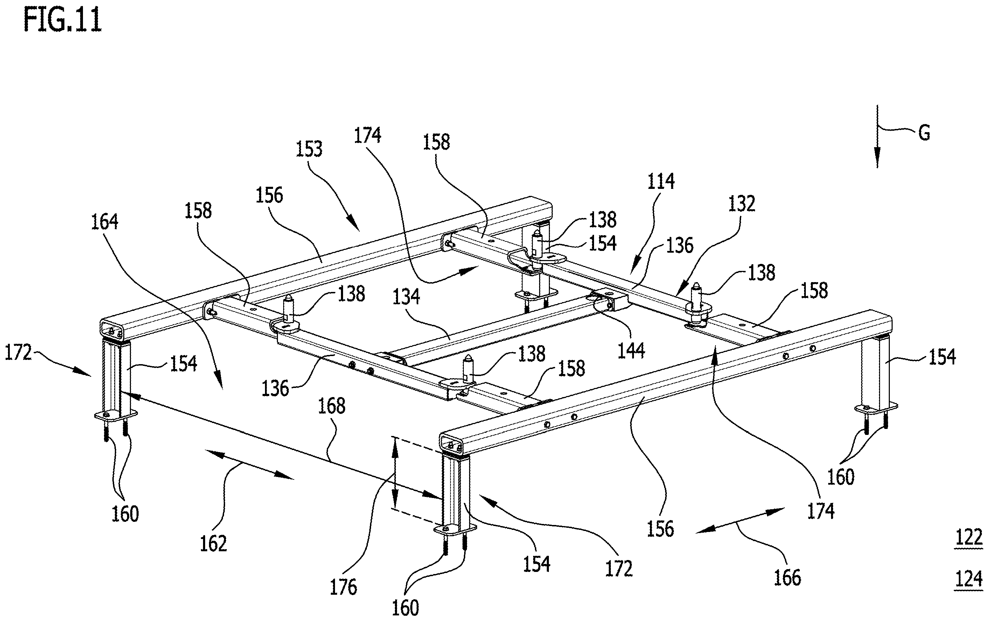

Bei der in den Fig. 1 bis 3 dargestellten Ausführungsform der Puffervorrichtung 100 umfasst ein jeweiliger Pufferlagerplatz 114 beispielsweise zwei Pufferlagerelemente 152, welche insbesondere in den Fig. 8 und 11 gezeigt sind.

Auf den Pufferlagerelementen 152 ist insbesondere ein Gegenstand 102, vorzugsweise ein auf der Adaptervorrichtung 132 aufgenommener Gegenstand 102, absetzbar.

Die Pufferlagerelemente 152 sind insbesondere Pufferlagerelemente 152 einer Ablagevorrichtung 153 eines jeweiligen Pufferlagerplatzes.

Vorzugsweise ist ein Gegenstand 102, insbesondere ein auf der Adaptervorrichtung 132 aufgenommener Gegenstand 102, durch Absetzen auf den Pufferlagerelementen 152 in den jeweiligen Pufferlagerplatz 114 der Puffervorrichtung 100 einlagerbar.

Ein Gegenstand 102, insbesondere ein auf der Adaptervorrichtung 132 aufgenommener Gegenstand 102 ist insbesondere durch Einfahren oder Absenken der Aufnahmeelemente 128 des Förderfahrzeugs 108 auf den Pufferlagerelementen 152 eines jeweiligen Pufferlagerplatzes 114 absetzbar.

Die Pufferlagerelemente 152 der Pufferlagerplätze 114 der in den Fig. 1 bis 3 dargestellten Ausführungsform der Puffervorrichtung 100 umfassen insbesondere jeweils zwei Abstandselemente 154, welche mittels eines Verbindungsstegs 156 miteinander verbunden sind.

Die Pufferlagerelemente 152 umfassen vorzugsweise ferner jeweils zwei Auflageelemente 158, welche jeweils an dem Verbindungssteg 156 angeordnet sind.

Vorzugsweise sind die Abstandselemente 154 an dem Untergrund 122, insbesondere an dem Boden 124 festgelegt, beispielsweise durch Verschrauben mittels eines oder mehrerer Schraubelemente 160.

Vorzugsweise sind insbesondere in einer Querrichtung 162 eines Pufferlagerplatzes 114, welche mittels eines Doppelpfeils gekennzeichnet ist, jeweils zwei Pufferlagerelemente 152 angeordnet, insbesondere beabstandet voneinander.

Die Pufferlagerelemente 152 eines Pufferlagerplatzes 114 begrenzen insbesondere einen Durchfahrtsbereich 164, welcher mittels eines Förderfahrzeugs 108 in einer Längsrichtung 166 durchfahrbar ist, welche ebenfalls mittels eines Doppelpfeils gekennzeichnet ist.

Die Längsrichtung 166 ist insbesondere eine senkrecht zu der Querrichtung 162 verlaufende Richtung.

Der Durchfahrtsbereich 164 weist senkrecht zu der Längsrichtung 166 und/oder parallel zu der Querrichtung vorzugsweise einen freien Querschnitt auf, welcher größer ist als ein senkrecht zu einer Längsachse eines Förderfahrzeugs 108 genommener maximaler Querschnitt des Förderfahrzeugs 108.

Der Durchfahrtsbereich 164 weist in der Querrichtung vorzugsweise eine Breite 168 auf, welche größer ist als eine maximale Breite 170 eines Förderfahrzeugs 108 (vergl. Fig. 4).

Insbesondere kann dadurch ermöglicht werden, dass ein Förderfahrzeug 108 durch den Durchfahrtsbereich 164 eines Pufferlagerplatzes hindurchfahren kann, wenn die Aufnahmeelemente 128 in der eingefahrenen Stellung sind.

Die Abstandselemente 154 der Pufferlagerelemente 152 bilden vorzugsweise einen Abstandsbereich 172 eines jeweiligen Pufferlagerelements 152.

Die Auflageelemente 158 der Pufferlagerelemente 152 bilden insbesondere einen Auflagebereich 174 eines jeweiligen Pufferlagerelements 152.

Die Abstützelemente 145 der Adaptervorrichtung 132 sind im Auflagebereich 174 der Pufferlagerelemente 152 insbesondere auf die Pufferlagerelemente 152 ablegbar, insbesondere auf die Auflageelemente 158 eines jeweiligen Pufferlagerelements 152.

Der Auflagebereich 174 der Pufferlagerelemente 152 ist insbesondere mittels des Abstandsbereichs 172 beabstandet von dem Untergrund 122, insbesondere beabstandet von dem Boden 124, angeordnet.

Der Abstandsbereich 172 der Pufferlagerelemente weist parallel zur Schwerkraftrichtung G vorzugsweise eine Höhe 176 auf, welche größer ist als eine maximale Höhe 178 des Grundkörpers 118 eines jeweiligen Förderfahrzeugs 108, insbesondere größer als ein Abstand einer oberen Hauptseite des Grundkörpers 118 eines jeweiligen Förderfahrzeugs 108 von dem Untergrund 122, insbesondere von dem Boden 124.

Bei der in den Fig. 1 bis 3 dargestellten Ausführungsform der Puffervorrichtung 100 sind sämtliche Pufferlagerplätze 114 der Puffervorrichtung 100 insbesondere auf einer einzigen Lagerebene angeordnet sind.

Die Puffervorrichtung 100 ist somit insbesondere eine einstöckige Puffervorrichtung 100.

Die Puffervorrichtung 100 umfasst beispielsweise mindestens 10 Pufferlagerplätze 114, insbesondere mindestens 50 Pufferlagerplätze 114, vorzugsweise mindestens 100 Pufferlagerplätze 114.

Vorzugsweise sind die Pufferlagerplätze 114 in der Querrichtung 162 derselben fluchtend angeordnet.

Vorzugsweise sind Gegenstände 102, insbesondere auf einer Adaptervorrichtung 132 aufgenommene Gegenstände 102, mittels eines Förderfahrzeugs 108 in die Puffervorrichtung 100 hineinförderbar und/oder aus der Puffervorrichtung 100 herausförderbar.

Vorzugsweise umfasst die in den Fig. 1 bis 3 dargestellte Ausführungsform der Puffervorrichtung 100 eine oder mehrere Fahrbahnen 180.

Vorzugsweise sind die Pufferlagerplätze 114 der Puffervorrichtung 100 schräg und/oder senkrecht zu einer Fahrbahnlängsachse der Fahrbahn 180 angeordnet.

Die Puffervorrichtung 100 ist dabei insbesondere eine Flächenspeichervorrichtung 182.

Vorzugsweise sind Gegenstände 102, insbesondere auf einer Adaptervorrichtung 132 aufgenommene Gegenstände 102, mittels eines Förderfahrzeugs 108 über die Fahrbahn 180 zu den Pufferlagerplätzen 114 der Puffervorrichtung 100 förderbar.

Die Fahrbahn 180 der Puffervorrichtung 100 ist insbesondere ein Bereich der Puffervorrichtung 100, in welchem keine Pufferlagerplätze 114 angeordnet sind.

Die Fahrbahn 180 der Puffervorrichtung 100 ist vorzugsweise einspurig oder mehrspurig ausgebildet.

Die Fahrbahn 180 der Puffervorrichtung 100 weist insbesondere eine oder mehrere Fahrspuren 184 auf.

Eine Fahrspur 184 weist vorzugsweise quer, insbesondere senkrecht zu einer Fahrtrichtung 186 eine Breite 188 auf, welche größer ist als die Breite 170 eines Förderfahrzeugs 108 der Fördervorrichtung 106 quer, insbesondere senkrecht, zu der Fahrtrichtung 186.

Eine Fahrspur 184 weist vorzugsweise quer, insbesondere senkrecht zu der Fahrtrichtung 186 eine Breite 188 auf, welche größer ist als eine Breite 190 eines auf einem Förderfahrzeug 108 der Fördervorrichtung 106 aufgenommenen Gegenstands 102 quer, insbesondere senkrecht, zu der Fahrtrichtung 186, beispielsweise um mindestens ungefähr 10 %, insbesondere mindestens ungefähr 20 %, vorzugsweise mindestens ungefähr 40 %.

Günstig kann es sein, wenn eine Fahrspur 184 quer, insbesondere senkrecht zu der Fahrtrichtung 186 eine Breite 188 aufweist, welche gleich groß oder größer ist als eine Breite 192 einer Warnzone WZ eines Umgebungsbereichs 148 eines Förderfahrzeugs 108 quer, insbesondere senkrecht zu der Fahrtrichtung 186 beispielsweise um mindestens ungefähr 10 %, insbesondere mindestens ungefähr 20 %, vorzugsweise mindestens ungefähr 40 %.

Mittels einer mehrspurigen Fahrbahn 180 der Puffervorrichtung 100 sind vorzugsweise mehrere Gegenstände 102, insbesondere mehrere jeweils auf einer Adaptervorrichtung 132 aufgenommene Gegenstände 102, simultan mittels mehrerer Förderfahrzeuge 108 in die Puffervorrichtung 100 einlagerbar und/oder aus dieser auslagerbar.

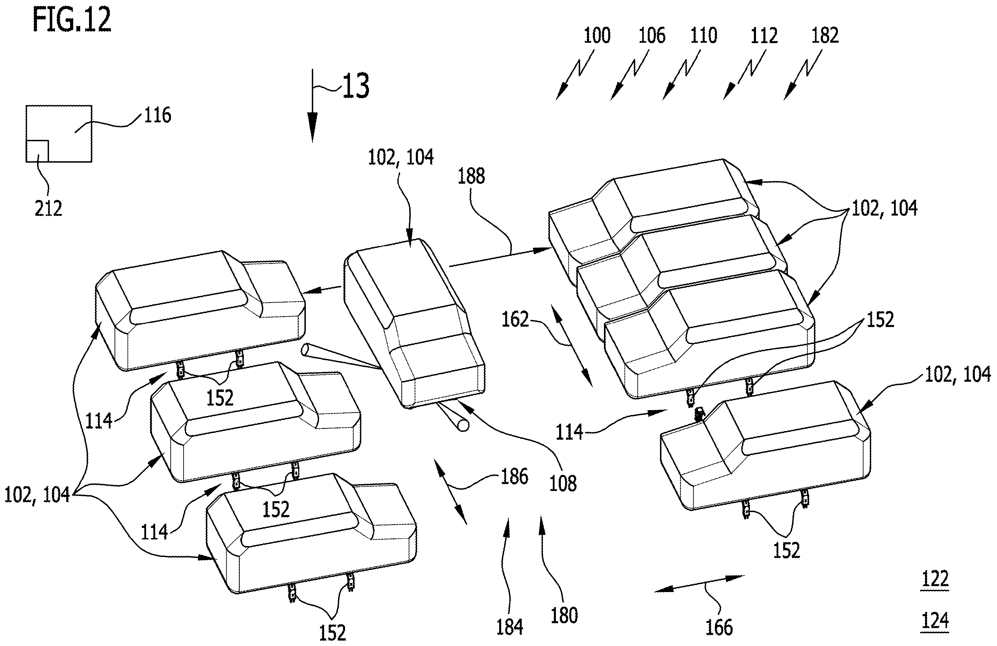

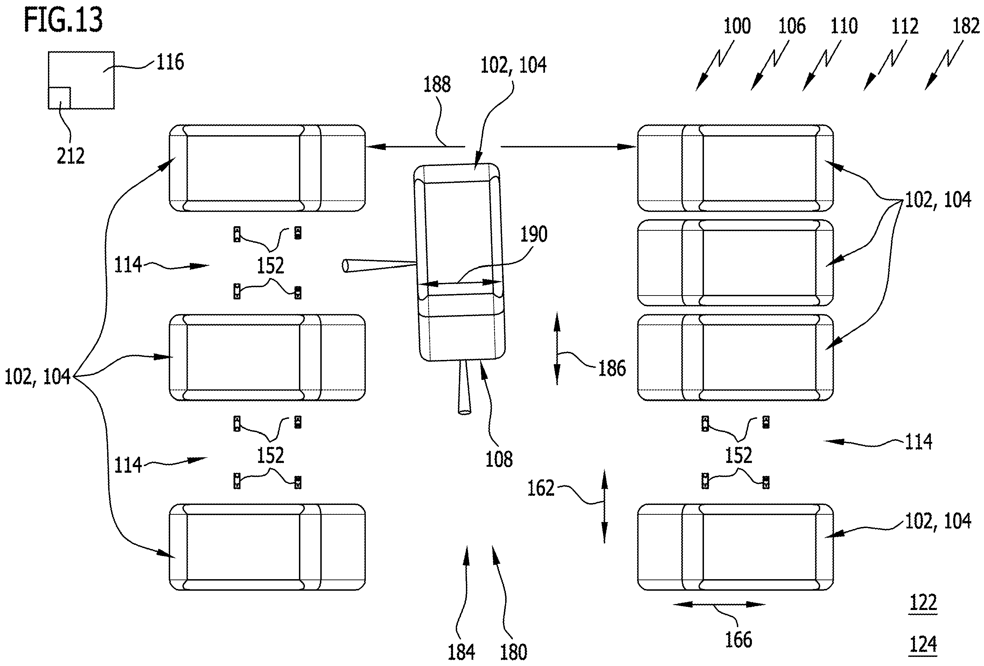

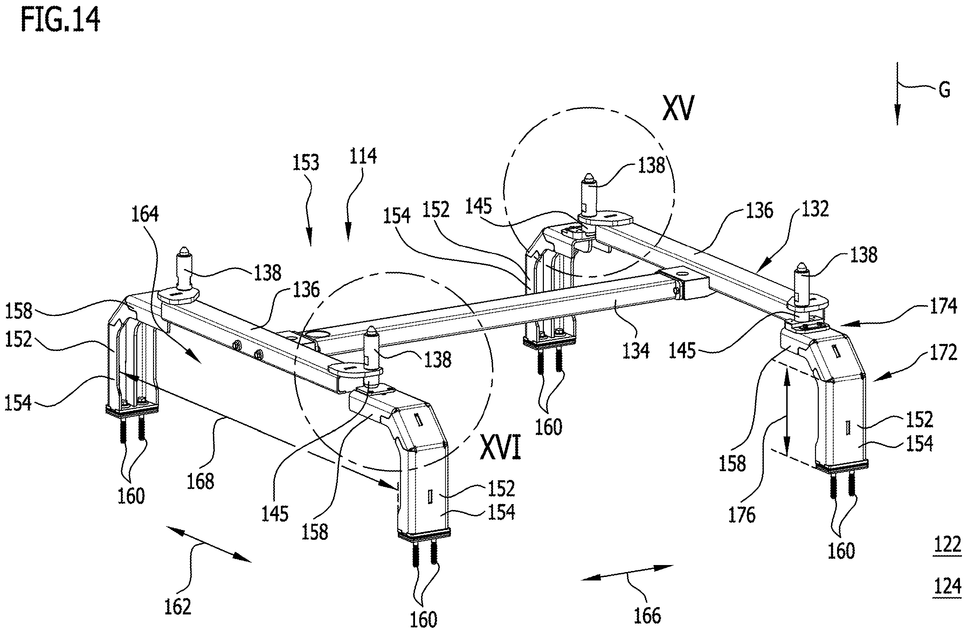

Eine in den Fig. 12 bis 16 dargestellte Ausführungsform einer Puffervorrichtung 100 unterscheidet sich von der in den Fig. 1 bis 3 dargestellten Ausführungsform der Puffervorrichtung 100 im Wesentlichen dadurch, dass ein jeweiliger Pufferlagerplatz 114 der Puffervorrichtung 100 jeweils vier Pufferlagerelemente 152 umfasst, wobei die vier Pufferlagerelemente 152 eines Pufferlagerplatzes 114 in einer senkrecht zur Schwerkraftrichtung G angeordneten Ebene insbesondere in vier Eckbereichen eines Rechtecks angeordnet sind.

Vorzugsweise umfasst jedes Pufferlagerelement 152 jeweils ein Abstandselement 154 und jeweils ein Auflageelement 158.

Vorzugsweise bilden dabei zwei Pufferlagerelemente 152 eines Pufferlagerplatzes 114 einen Pufferlagerbock. Ein Pufferlagerplatz 114 umfasst somit beispielsweise zwei Pufferlagerböcke.

Günstig kann es ferner sein, wenn in einer Längsrichtung 166 eines jeweiligen Pufferlagerplatzes 114 jeweils zwei Pufferlagerelemente 152 angeordnet sind.

Ein jeweiliger Pufferlagerplatz 114 umfasst beispielsweise zwei Paare spiegelbildlich zueinander angeordneter und ausgebildeter Pufferlagerelemente 152.

Günstig kann es sein, wenn spiegelbildlich zueinander angeordnete und ausgebildete Pufferlagerelemente 152 in der Querrichtung 162 eines jeweiligen Pufferlagerplatzes 114 angeordnet sind.

Vorzugsweise bilden in der Querrichtung 162 spiegelbildlich zueinander angeordnete und ausgebildete Pufferlagerelemente 152 einen Pufferlagerbock.

Im Übrigen stimmt die in den Fig. 12 bis 16 dargestellte Ausführungsform der Puffervorrichtung 100 hinsichtlich Aufbau und Funktion mit der in den Fig. 1 bis 3 dargestellten Ausführungsform der Puffervorrichtung 100 überein, so dass auf deren vorstehende Beschreibung insoweit Bezug genommen wird.

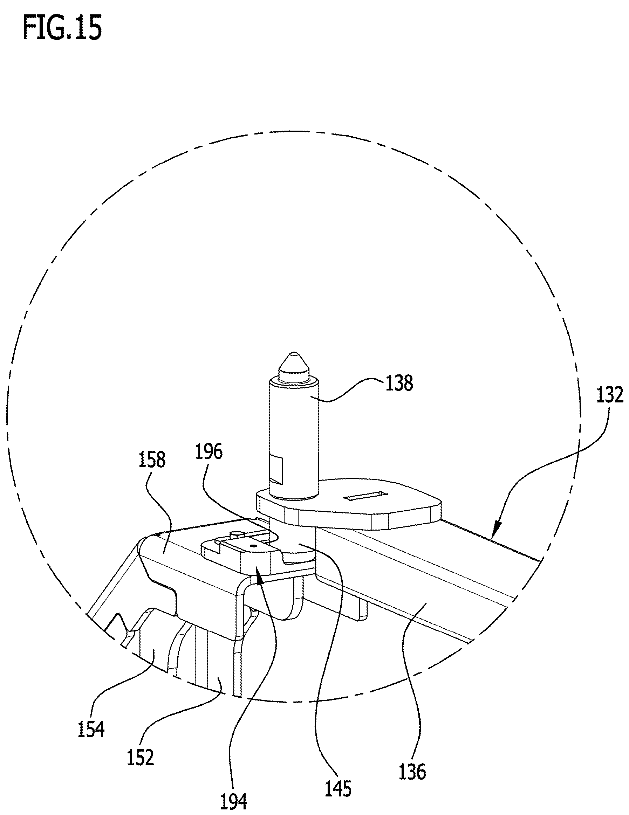

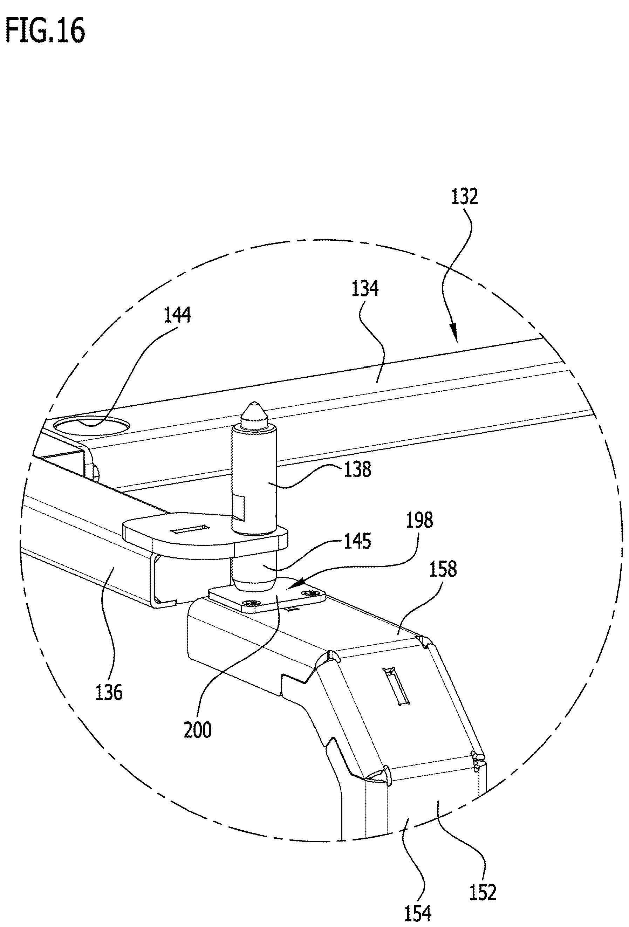

Die Fig. 15 und 16 zeigen in vergrößerter Darstellung entsprechend auch für die in den Fig. 1 bis 3 dargestellte Ausführungsform der Puffervorrichtung 100 wie sich die Abstützelemente 145 der Adaptervorrichtung 132 an den Auflageelementen 158 der Pufferlagerelemente 152 abstützen.

Ein jeweiliger Pufferlagerplatz 114 umfasst dabei vorzugsweise in der Längsrichtung 166 jeweils ein Festlager 194, welches beispielsweise eine Aufnahmenut 196 umfasst, in welcher ein Abstützelement 145 aufnehmbar ist (vergl. Fig. 15).

Günstig kann es ferner sein, wenn ein jeweiliger Pufferlagerplatz 114 in der Längsrichtung 166 jeweils ein Loslager 198 umfasst (vergl. Fig. 16). Das Loslager 198 wird beispielsweise durch eine Auflageplatte 200 gebildet.

Vorzugsweise ist in der Querrichtung 162 jeweils ein Festlager 194 gegenüber eines weiteren Festlagers 194 angeordnet.

Vorzugsweise ist in der Querrichtung 162 ferner jeweils ein Loslager 198 gegenüber eines weiteren Loslagers 198 angeordnet.

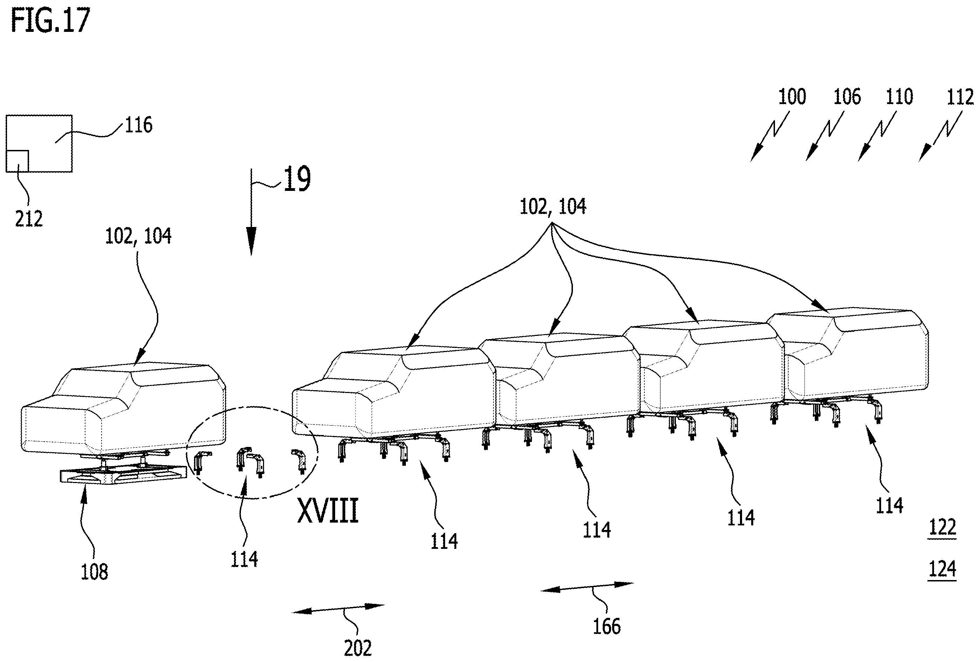

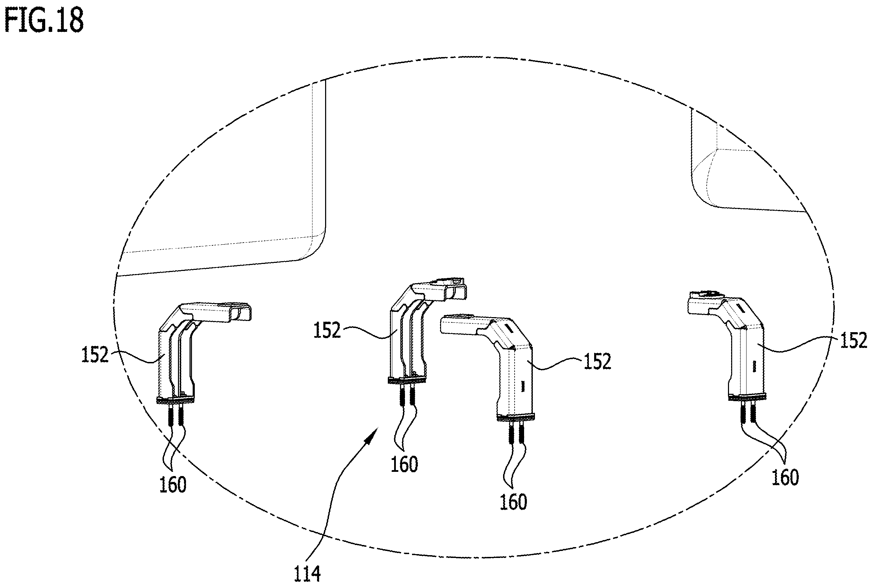

Eine in den Fig. 17 bis 19 dargestellte Ausführungsform einer Puffervorrichtung 100 unterscheidet sich von der in den Fig. 12 bis 16 dargestellten Ausführungsform der Puffervorrichtung 100 im Wesentlichen dadurch, dass die Pufferlagerplätze 114 der Puffervorrichtung in einer Längsrichtung 166 fluchtend angeordnet sind.

Die Puffervorrichtung 100 ist dabei insbesondere eine sequentielle Puffervorrichtung 100.

Mittels eines Förderfahrzeuges sind dabei Gegenstände 102, insbesondere auf einer Adaptervorrichtung 132 aufgenommene Gegenstände 102, in einer Förderrichtung 202 vorzugsweise durch die Puffervorrichtung 100 hindurchförderbar.

Die Förderrichtung 202 ist insbesondere eine parallel zu der Längsrichtung 166 verlaufende Richtung.

Beim Hindurchfördern eines Gegenstands 102, insbesondere eines auf einer Adaptervorrichtung 132 aufgenommenen Gegenstands 102, durch die Puffervorrichtung 100, wird der Gegenstand 102, insbesondere der auf einer Adaptervorrichtung 132 aufgenommene Gegenstand 102, vorzugsweise durch mehrere Pufferlagerplätze 114 nacheinander hindurchgefördert.

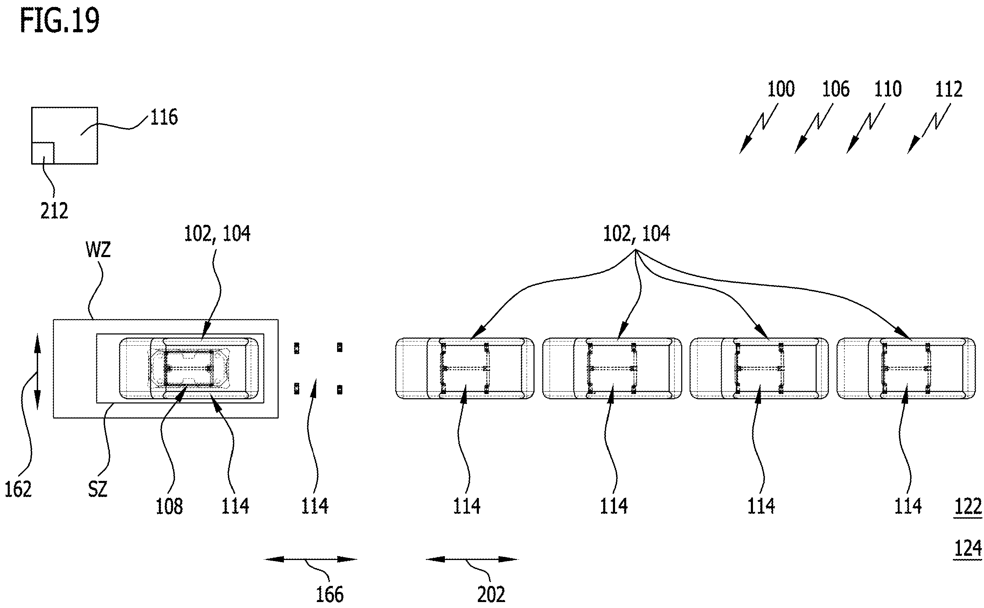

Die Fig. 17 und 19 zeigen dabei beispielsweise wie ein Gegenstand 102 aus der Puffervorrichtung 100 ausgelagert wird.

Gegenstände 102 sind insbesondere nur in derselben Reihenfolge aus der Puffervorrichtung 100 auslagerbar, in welcher die Gegenstände 102 in die Puffervorrichtung 100 eingelagert werden.

Im Übrigen stimmt die in den Fig. 17 bis 19 dargestellte Ausführungsform der Puffervorrichtung 100 hinsichtlich Aufbau und Funktion mit der in den Fig. 12 bis 16 dargestellten Ausführungsform der Puffervorrichtung 100 überein, so dass auf deren vorstehende Beschreibung insoweit Bezug genommen wird.

Bei sämtlichen vorstehend beschriebenen Puffervorrichtungen 100 und/oder Fördervorrichtungen 106 kann vorgesehen sein, dass die Fördervorrichtung 106 eine Überwachungseinrichtung zum Überwachen einer ordnungsgemäßen Übergabe eines Gegenstands 102, insbesondere eines auf einer Adaptervorrichtung 132 aufgenommenen Gegenstands 102, an einen Pufferlagerplatz 114 der Puffervorrichtung 100 umfasst.

Insbesondere kann vorgesehen sein, dass ein jeweiliges Förderfahrzeug 108 der Fördervorrichtung 106 eine derartige Überwachungseinrichtung 204 umfasst.

Mittels der Überwachungseinrichtung 204 der Förderfahrzeuge 108 ist insbesondere feststellbar, ob ein Gegenstand 102, insbesondere ein auf einer Adaptervorrichtung 132 angeordneter Gegenstand 102, ordnungsgemäß auf Pufferlagerelementen 152 eines jeweiligen Pufferlagerplatzes 114 angeordnet ist.

Die Überwachungseinrichtung 204 ist insbesondere derart eingerichtet und ausgebildet ist, dass eine Feststellung einer ordnungsgemäßen Übergabe eines Gegenstands 102, insbesondere eines auf einer Adaptervorrichtung 132 aufgenommenen Gegenstands 102, an einen Pufferlagerplatz 114 der Puffervorrichtung 100 durch Schließen eines Stromkreises erfolgt.

Vorzugsweise wird beim Schließen des Stromkreises ein Stromsignal von einer Stromquelle zu einer Stromsenke geführt.

Günstig kann es sein, wenn die Pufferlagerelemente 152 eines jeweiligen Pufferlagerplatzes 114 der Puffervorrichtung 100 und/oder die Adaptervorrichtungen 132 zur Aufnahme der Gegenstände 102 derart ausgebildet sind, dass der Stromkreis durch Inkontaktbringen einer Adaptervorrichtung 132 mit den Pufferlagerelementen 152 eines jeweiligen Pufferlagerplatzes 114 bei einer ordnungsgemäßen Übergabe eines Gegenstands 102, insbesondere eines auf einer Adaptervorrichtung 132 aufgenommenen Gegenstands 102, geschlossen wird.

Vorzugsweise werden bei einer ordnungsgemäßen Übergabe eines Gegenstands 102, insbesondere eines auf einer Adaptervorrichtung 132 aufgenommenen Gegenstands 102, die Abstützelemente 145 der Adaptervorrichtung 132 mit den Pufferlagerelementen 152 des Pufferlagerplatzes 114 in Kontakt gebracht.

Beispielsweise wird jeweils ein Abstützelement 145 der Adaptervorrichtung 132 mit jeweils einem Pufferlagerelement 152 in Kontakt gebracht.

Vorzugsweise sind jeweils zwei Pufferlagerelemente 152 eines Pufferlagerplatzes 114 paarweise elektrisch leitend miteinander verbunden.

Beispielsweise ist es denkbar, dass jeweils zwei Pufferlagerelemente 152 eines Pufferlagerplatzes 114 mittels einer Kontaktierungsvorrichtung 206 elektrisch leitend miteinander verbunden sind.

Die Kontaktierungsvorrichtung 206 ist vorzugsweise in dem Boden 124 angeordnet und/oder in den Boden 124 eingebettet.

Die Kontaktierungsvorrichtung 206 umfasst insbesondere eine elektrische Leitung 208, beispielweise einen Draht oder ein Kabel, mittels welcher zwei Pufferlagerelemente 152 eines Pufferlagerplatzes 114 paarweise elektrisch leitend miteinander verbunden sind.

Beispielsweise sind in der Querrichtung 162 eines Pufferlagerplatzes 114 angeordnete Pufferlagerelemente 152 paarweise elektrisch leitend miteinander verbunden.

Vorzugsweise sind die Förderfahrzeuge 108 derart ausgebildet, dass beim Schließen des Stromkreises ein Stromsignal von einer an dem jeweiligen Förderfahrzeug 108 angeordneten Stromquelle zu einer an dem Förderfahrzug 108 angeordneten Stromsenke geführt wird.

Beispielsweise ist es denkbar, dass die Stromquelle ein Ausgangssignalanschluss einer zeichnerisch nicht dargestellten Steuervorrichtung des jeweiligen Förderfahrzeugs 108 ist und/oder dass die Stromsenke ein Eingangssignalanschluss der Steuervorrichtung des jeweiligen Förderfahrzeugs 108 ist.

Vorzugsweise ist die Steuervorrichtung eines jeweiligen Förderfahrzeugs 108 derart eingerichtet und ausgebildet ist, dass die Steuervorrichtung das Schließen des Stromkreises überwacht.

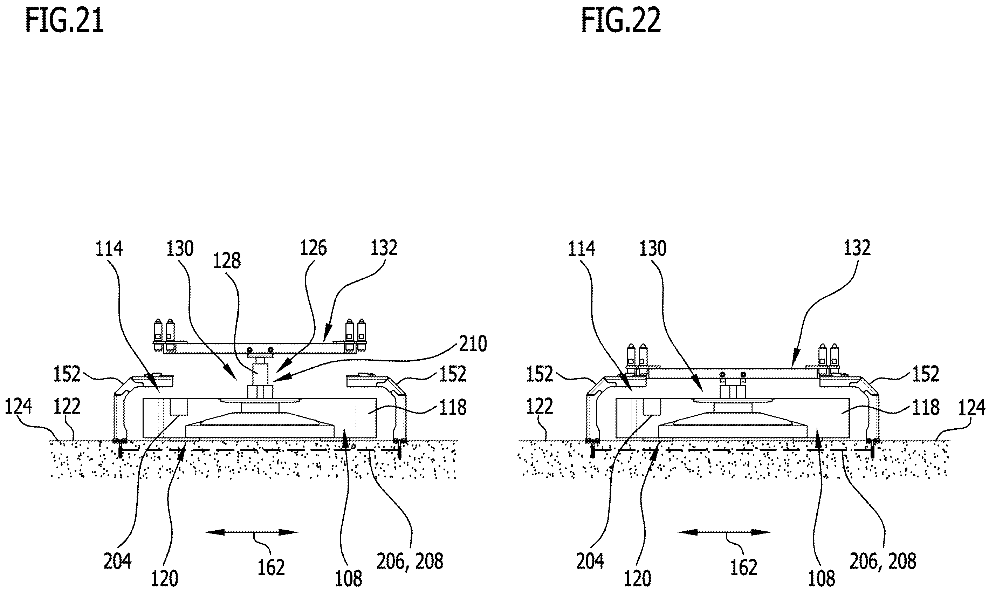

Die Förderfahrzeuge 108 sind vorzugsweise derart ausgebildet, dass ein jeweiliges Förderfahrzeug 108 eine Stromführungsvorrichtung 210 umfasst, mittels welcher ein Stromsignal von der an dem Förderfahrzeug 108 angeordneten Stromquelle zu der an der Aufnahmevorrichtung 126 des Förderfahrzeugs 108 angeordneten Adaptervorrichtung 132 geführt wird und/oder mittels welches ein Stromsignal von der an der Aufnahmevorrichtung 126 des Förderfahrzeugs 108 angeordneten Adaptervorrichtung 132 zu einer an dem Förderfahrzeug 108 angeordneten Stromsenke geführt wird (vergl. Fig. 4 und 21).

Die Stromführungsvorrichtung 210 umfasst vorzugsweise einen oder mehrere Schleifkontakte, welche an einem Aufnahmeelement 128 der Aufnahmevorrichtung 126 eines jeweiligen Förderfahrzeugs 108 angeordnet sind.

Vorzugsweise umfasst ein Aufnahmeelement 128 zwei Schleifkontakte zur elektrischen Kontaktierung einer an dem jeweiligen Förderfahrzeug 108 angeordneten Adaptervorrichtung 132.

Günstig kann es sein, wenn zum Feststellen einer ordnungsgemäßen Übergabe eines Gegenstands 102, insbesondere eines auf einer Adaptervorrichtung 132 aufgenommenen Gegenstands 102, eine auf die Aufnahmevorrichtung 126, insbesondere auf die Aufnahmeelemente 128, eines Förderfahrzeugs 108 wirkende Gewichtskraft beim Schließen des Stromkreises berücksichtigt wird.

Bei einer Übergabe eines Gegenstands 102, insbesondere eines auf einer Adaptervorrichtung 132 aufgenommenen Gegenstands 102, an einen Pufferlagerplatz 114 der Puffervorrichtung 100 verringert sich insbesondere die auf die Aufnahmevorrichtung 126, insbesondere auf die Aufnahmeelemente 128, eines Förderfahrzeugs 108 wirkende Gewichtskraft, insbesondere da sich die Abstützelemente 145 der Adaptervorrichtung 132 an den Pufferlagerelementen 152 des Pufferlagerplatzes 114 abstützen.

Beispielsweise ist es denkbar, dass mittels der Überwachungseinrichtung 204 bei einer niedrigen auf die Aufnahmevorrichtung 126, insbesondere auf die Aufnahmeelemente 128, eines Förderfahrzeugs 108 wirkenden Gewichtskraft und einem geschlossenen Stromkreis auf eine ordnungsgemäße Übergabe eines Gegenstands 102, insbesondere eines auf einer Adaptervorrichtung 132 aufgenommenen Gegenstands 102, geschlossen wird.

Ferner ist es denkbar, dass mittels der Überwachungseinrichtung 204 bei einer niedrigen auf die Aufnahmevorrichtung 126, insbesondere auf die Aufnahmeelemente 128, eines Förderfahrzeugs 108 wirkenden Gewichtskraft und einem nicht geschlossenen Stromkreis auf eine nicht ordnungsgemäße Übergabe eines Gegenstands 102, insbesondere eines auf einer Adaptervorrichtung 132 aufgenommenen Gegenstands 102, geschlossen wird.

Alternativ oder ergänzend zu der Feststellung einer ordnungsgemäßen Übergabe eines Gegenstands 102, insbesondere eines auf einer Adaptervorrichtung 132 aufgenommenen Gegenstands 102, an einen Pufferlagerplatz 114 der Puffervorrichtung 100 durch Schließen eines Stromkreises ist es möglich, dass die Überwachungseinrichtung 204 eines Förderfahrzeugs 108 einen oder mehrere zeichnerisch nicht dargestellte Sensoren umfasst, mittels welcher eine ordnungsgemäße Übergabe eines Gegenstands 102, insbesondere eines auf einer Adaptervorrichtung 132 aufgenommenen Gegenstands 102, detektierbar ist.

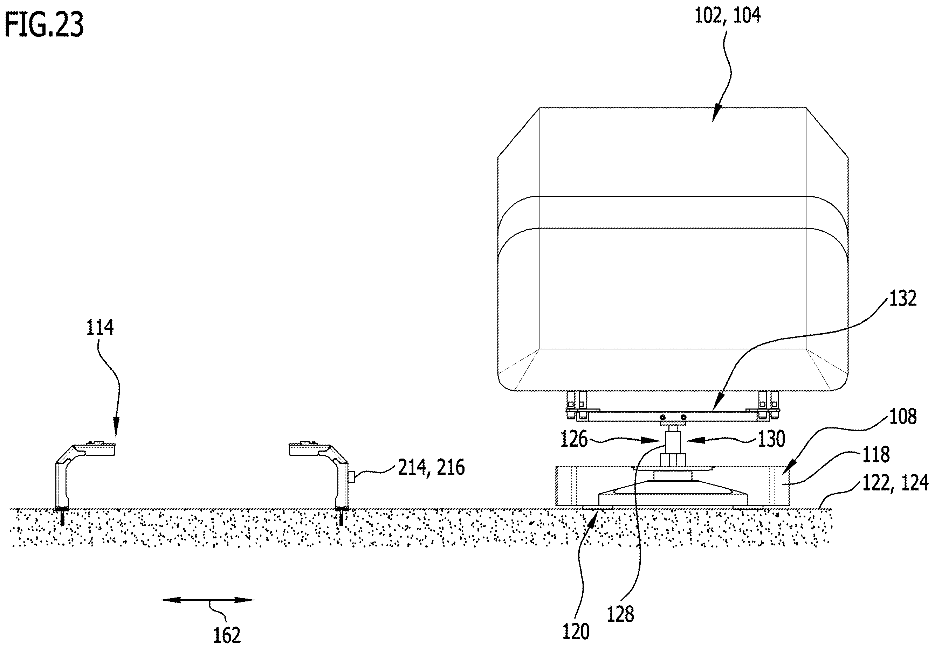

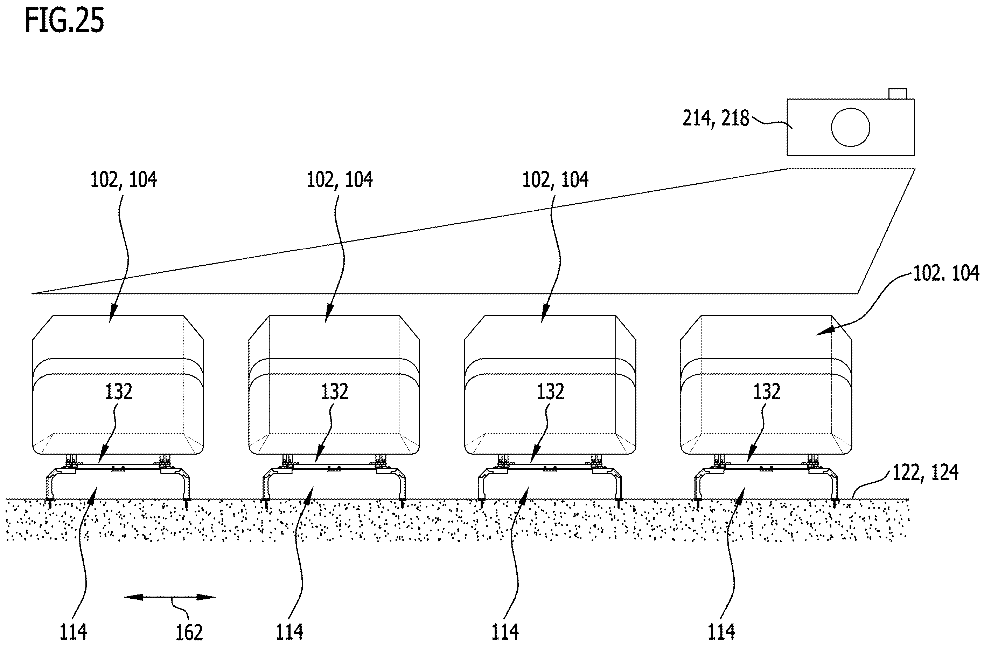

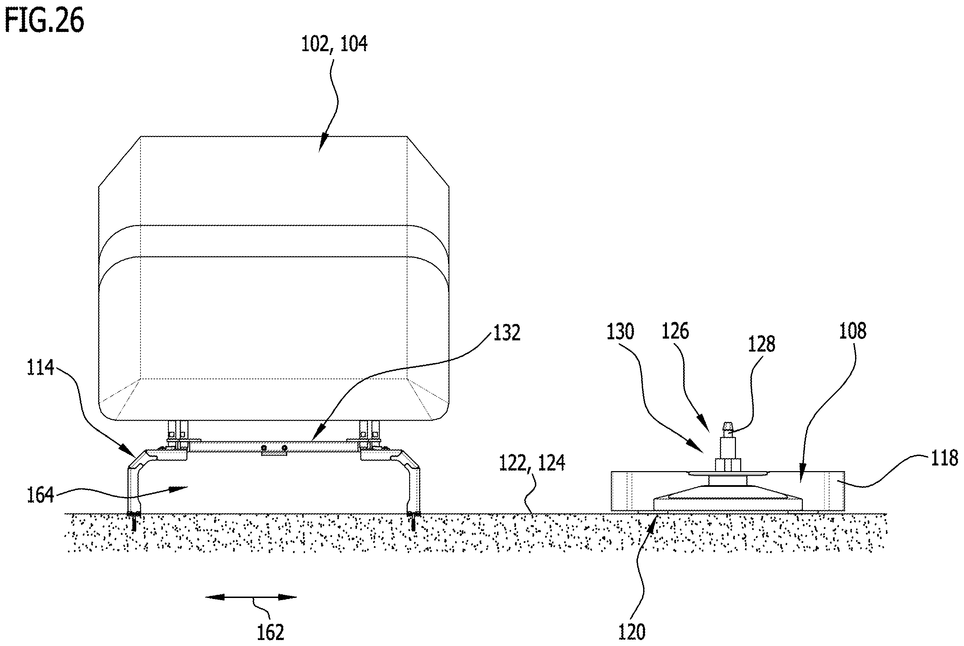

In den Fig. 23 bis 28 sind verschiedene Möglichkeiten zur Steuerung und/oder Überwachung einer Belegung der Pufferlagerplätze 114 der vorstehend beschriebenen Puffervorrichtungen 100 gezeigt.

Mittels der übergeordneten Steuerungsanlage 116 der Fördervorrichtung 106 ist vorzugsweise eine Belegung der Pufferlagerplätze 114 der Puffervorrichtung 100 steuerbar und/oder überwachbar.

Vorzugsweise sind mittels der übergeordneten Steuerungsanlage 116 Einlagerungsaufträge zum Einlagern von Gegenständen 102 in die Puffervorrichtungen 100 und/oder Auslagerungsaufträge zum Auslagern von Gegenständen 102 aus den Puffervorrichtungen 100 an die Förderfahrzeuge 108 übermittelbar.

Eine Steuerung und/oder Überwachung der Lagerplatzbelegung durch die übergeordnete Steuerungsanlage 116 erfolgt beispielsweise softwarebasiert.

Mittels der übergeordneten Steuerungsanlage 116 der Fördervorrichtung 106 wird insbesondere überwacht, ob ein Pufferlagerplatz 114 der Puffervorrichtung 100 belegt oder frei ist.

Vorzugsweise können mit der übergeordneten Steuerungsanlage 116 der Fördervorrichtung 106 ferner einzelne Pufferlagerplätze 114 für die Anfahrt durch ein Förderfahrzeug 108 gesperrt oder freigegeben werden.

Beispielsweise ist es denkbar, dass mit der übergeordneten Steuerungsanlage 116 der Fördervorrichtung 106 belegte Pufferlagerplätze 114 für die Anfahrt durch ein Förderfahrzeug 108 gesperrt werden.

Ferner ist es denkbar, dass mit der übergeordneten Steuerungsanlage 116 der Fördervorrichtung 106 freie Pufferlagerplätze 114 für die Anfahrt durch ein Förderfahrzeug 108 freigegeben werden.

Die übergeordnete Steuerungsanlage umfasst vorzugsweise eine Speichereinrichtung 212, in welcher für jeden Pufferlagerplatz 114 der Puffervorrichtung 100 Statusinformationen über die Belegung des jeweiligen Pufferlagerplatzes 114 und/oder Statusinformationen über eine Sperrung des jeweiligen Pufferlagerplatzes 114 hinterlegbar sind.

Eine Statusinformation über eine Belegung eines Pufferlagerplatzes 114 ist beispielsweise "frei" oder "belegt".

Eine Statusinformation über eine Sperrung eines Pufferlagerplatzes 114 ist beispielsweise "nicht gesperrt" oder "gesperrt".

Die übergeordnete Steuerungsanlage 116 steuert die Förderfahrzeuge 108 zum Einlagern eines Gegenstands 102 in die Puffervorrichtung 100 vorzugsweise abhängig von in der Speichereinrichtung 212 der übergeordneten Steuerungsanlage 116 hinterlegten Statusinformationen über eine Belegung eines jeweiligen Pufferlagerplatzes 114 einer Puffervorrichtung 100 jeweils zu einem freien Pufferlagerplatz 114.

Vorzugsweise umfasst die Fördervorrichtung 106 eine oder mehrere Sensorvorrichtungen 214 zur Erfassung von Statusinformationen über die Belegung von Pufferlagerplätzen 114 einer Puffervorrichtung 100, welche insbesondere zur Weitergabe der erfassten Statusinformationen an die übergeordnete Steuerungsanlage 116 ausgebildet sind.

Eine in der Speichereinrichtung 212 der übergeordneten Steuerungsanlage 116 hinterlegte Statusinformation über eine Belegung eines Pufferlagerplatzes 114 einer Puffervorrichtung 100 ist vorzugsweise durch eine mittels einer Sensorvorrichtung 214 erfasste Statusinformation über eine Belegung des Pufferlagerplatzes 114 ersetzbar, insbesondere wenn die mittels der Sensorvorrichtung 214 erfasste Statusinformation von der in der Speichereinrichtung 212 hinterlegten Statusinformation abweicht.

Bei der in Fig. 23 dargestellten Ausführungsform umfasst die Fördervorrichtung 106 insbesondere eine Sensorvorrichtung 214 zur Erfassung von Statusinformationen über eine Belegung eines einzelnen Pufferlagerplatzes 114.

Vorzugsweise ist jedem Pufferlagerplatz 114 jeweils eine Sensorvorrichtung 214 zur Erfassung von Statusinformationen über eine Belegung des jeweiligen Pufferlagerplatzes 114 zugeordnet.

Günstig kann es sein, wenn die Sensorvorrichtung 214 zur Erfassung von Statusinformationen über eine Belegung eines einzelnen Pufferlagerplatzes 114 ein oder mehrere an den Pufferlagerelementen 152 des Pufferlagerplatzes 114 angeordnete Sensorelemente 216 umfasst, mittels welcher eine Belegung des jeweiligen Pufferlagerplatzes 114 erfassbar ist.

An Pufferlagerelementen 152 des Pufferlagerplatzes 114 angeordnete Sensorelemente 216 der Sensorvorrichtung 214 sind beispielsweise Ultraschallsensorelemente oder induktive Näherungssensorelemente.

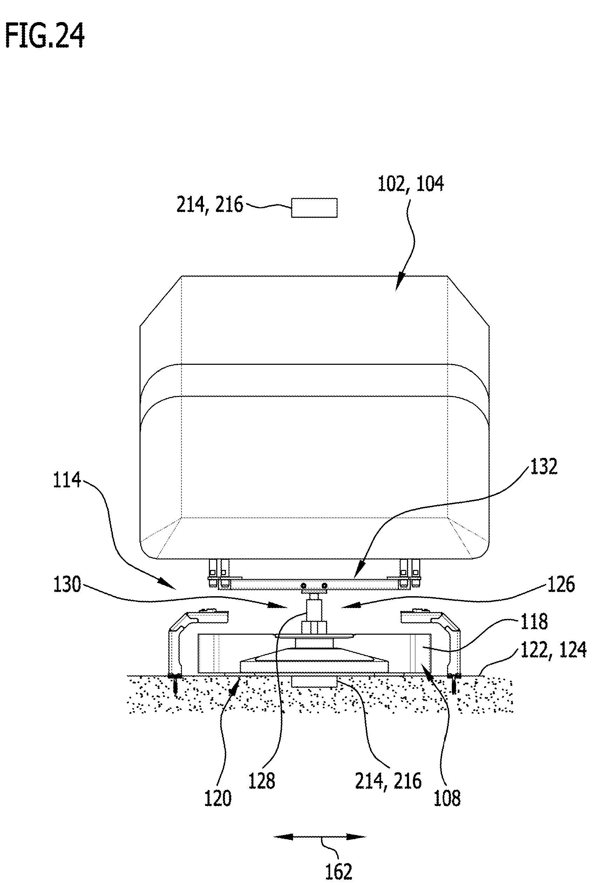

Bei der in Fig. 24 dargestellten Ausführungsform umfasst die Fördervorrichtung 106 insbesondere eine Sensorvorrichtung 214 zur Erfassung einer Belegung eines einzelnen Pufferlagerplatzes 114, welche ein oder mehrere oberhalb und/oder unterhalb eines jeweiligen Pufferlagerplatzes 114 angeordnete Sensorelemente 216 umfasst.

Beispielsweise ist es denkbar, dass ein oberhalb eines Pufferlagerplatzes 114 angeordnetes Sensorelement 216 ein Ultraschallsensorelement ist.

Günstig kann es ferner sein, wenn ein unterhalb eines Pufferlagerplatzes 114 angeordnetes Sensorelement 216 ein Magnetometer und/oder ein Radarsensorelement ist.

Unterhalb eines Pufferlagerplatzes 114 angeordnete Sensorelemente 216 sind insbesondere in den Boden 124 eingebettet.

Bei der in Fig. 24 dargestellten Ausführungsform umfasst die Fördervorrichtung 106 insbesondere eine Sensorvorrichtung 214 zur Erfassung von Statusinformationen über eine Belegung mehrerer Pufferlagerplätze 114.

Die Sensorvorrichtung 214 zur Erfassung von Statusinformationen über eine Belegung mehrerer Pufferlagerplätze 114 ist beispielsweise eine Kamera 218.

Die Kamera 218 ist insbesondere oberhalb mehrerer Pufferlagerplätze 114 angeordnet, beispielsweise an einem zeichnerisch nicht dargestellten Hallendach einer Fertigungshalle, in welcher die Fördervorrichtung 106 angeordnet ist.

Vorzugsweise ist die Sensorvorrichtung 214 zur Erfassung von Statusinformationen über eine Belegung mehrerer Pufferlagerplätze 114 zur Weitergabe der erfassten Statusinformationen an die übergeordnete Steuerungsanlage 116 der Fördervorrichtung 106 ausgebildet.

Günstig kann es ferner sein, wenn die Förderfahrzeuge 108 der Fördervorrichtung 106 eine oder mehrere Sensorvorrichtungen umfassen, mittels welcher eine Belegung eines Pufferlagerplatzes 114 erfassbar ist, insbesondere während das jeweilige Förderfahrzeug 108 den Pufferlagerplatz 114 passiert.

Mittels einer oder mehrerer Sensorvorrichtungen der Förderfahrzeuge 108, mittels welcher eine Belegung eines Pufferlagerplatzes 114 erfassbar ist, sind vorzugsweise Statusinformationen über die Belegung des Pufferlagerplatzes 114 erfassbar.

Beispielsweise ist es denkbar, dass eine Belegung eines Pufferlagerplatzes 114 mit den Umgebungssensorvorrichtungen 146 der Förderfahrzeuge 108 erfassbar ist.

Ein Förderfahrzeug 108 ist vorzugsweise abhängig von den erfassten Statusinformationen über die Belegung eines Pufferlagerplatzes 114 mittels einer Steuervorrichtung des Förderfahrzeugs 108 derart ansteuerbar, dass das Förderfahrzeug 108 einen von der übergeordneten Steuerungsanlage 116 erhaltenen Einlagerungsauftrag zum Einlagern eines Gegenstands 102 in einen Pufferlagerplatz 114 unterbricht, wenn eine in der Speichereinrichtung 212 der übergeordneten Steuerungsanlage 116 hinterlegte Statusinformation über die Belegung des Pufferlagerplatzes 114, gemäß welcher der Pufferlagerplatz 114 frei ist, von einer von der einen oder den mehreren Sensorvorrichtungen des Förderfahrzeugs 108 erfassten Statusinformation über die Belegung des Pufferlagerplatzes 114 abweicht, gemäß welcher der Pufferlagerplatz 114 belegt ist.

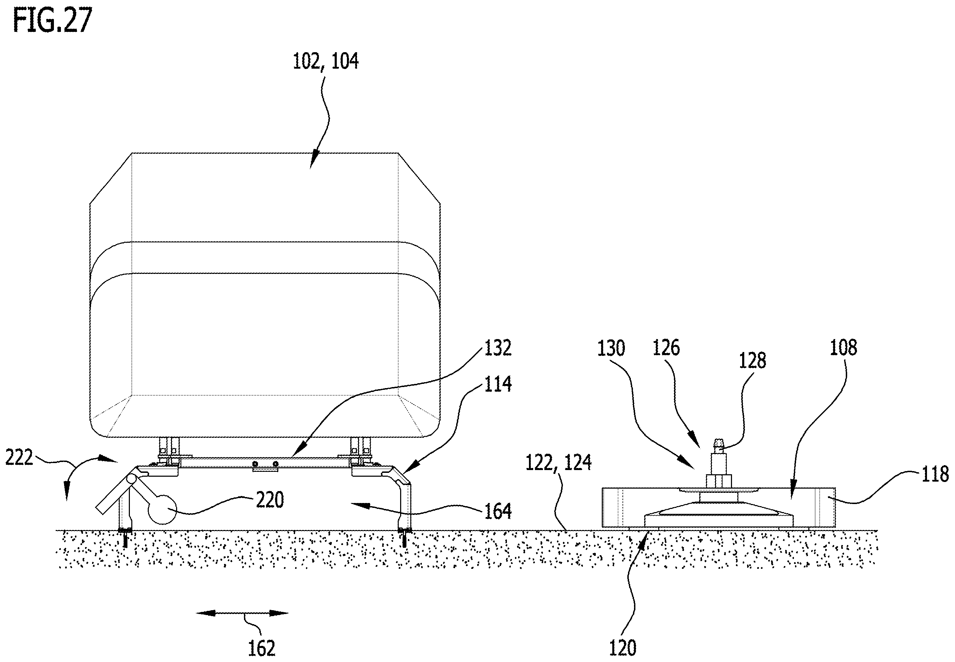

Bei der in Fig. 27 dargestellten Ausführungsform umfasst ein jeweiliger Pufferlagerplatz 114 der Puffervorrichtung 100 ein Sperrelement 220, wobei ein jeweiliger Pufferlagerplatz 114 mittels des Sperrelements 220 für die Anfahrt durch ein Förderfahrzeug 108 sperrbar ist.

Das Sperrelement 220 ist vorzugsweise zumindest teilweise in dem Durchfahrtsbereich 164 des Pufferlagerplatzes 114 anordenbar, insbesondere in diesen hinein bewegbar.

Beispielsweise ist das Sperrelement 220 in Richtung des Doppelpfeils 222 in den Durchfahrtsbereich 164 hinein drehbar.

Ein in dem Durchfahrtsbereich 164 zumindest teilweise angeordnetes, insbesondere in diesen hinein bewegtes, Sperrelement 220 verkleinert insbesondere den Durchfahrtsbereich 164 und/oder einen freien Querschnitt des Durchfahrtsbereichs 164 eines jeweiligen Pufferlagerplatzes 114.

Ein in dem Durchfahrtsbereich 146 eines Pufferlagerplatzes 114 angeordnetes, insbesondere in diesen hinein bewegtes, Sperrelement 220 wird vorzugsweise mittels einer oder mehrerer Sensorvorrichtungen eines Förderfahrzeugs 108 erfasst, beispielsweise mittels der Umgebungssensorvorrichtungen 146.

Das Förderfahrzeug 108 ist seiner Steuervorrichtung vorzugsweise derart ansteuerbar, dass das Förderfahrzeug 108 einen von einer übergeordneten Steuerungsanlage 116 erhaltenen Einlagerungsauftrag zum Einlagern eines Gegenstands 102 in einen Pufferlagerplatz 114 unterbricht, wenn die Sensorvorrichtungen das Sperrelement 220 und/oder den verkleinerten Durchfahrtsbereich 146 des Pufferlagerplatzes 114 erfassen.

Vorzugsweise wird eine Unterbrechung eines Einlagerungsauftrags durch ein Förderfahrzeug 108 an die übergeordnete Steuerungsanlage 116 gemeldet.

Anschließend übermittelt die übergeordnete Steuerungsanlage 116 insbesondere einen aktualisierten Einlagerungsauftrag zum Einlagern des Gegenstands 102 in einen freien und insbesondere nicht gesperrten Pufferlagerplatz 114 an das Förderfahrzeug 108.

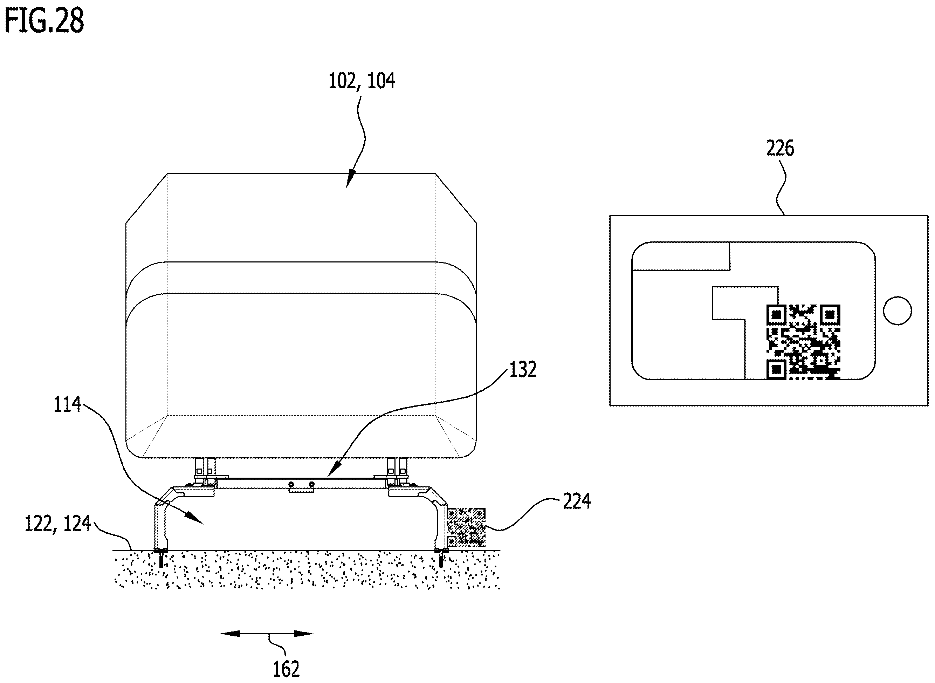

Bei der in Fig. 28 dargestellten Ausführungsform ist die Fördervorrichtung 106 insbesondere derart eingerichtet und ausgebildet, dass Statusinformationen über die Belegung eines Pufferlagerplatzes 114 manuell durch einen Benutzer an die übergeordnete Steuerungsanlage 116 weitergebbar sind und/oder dass Statusinformationen über eine Sperrung eines Pufferlagerplatzes 114 manuell durch einen Benutzer an die übergeordnete Steuerungsanlage 116 weitergebbar sind.

In der Speichereinrichtung 212 der übergeordneten Steuerungsanlage 116 hinterlegte Statusinformationen über die Belegung eines jeweiligen Pufferlagerplatzes 114 und/oder über die Sperrung eines jeweiligen Pufferlagerplatzes 114 sind vorzugsweise durch einen Benutzer überschreibbar.

In der Speichereinrichtung 212 der übergeordneten Steuerungsanlage 116 hinterlegte Statusinformationen über die Belegung eines jeweiligen Pufferlagerplatzes 114 und/oder über die Sperrung eines jeweiligen Pufferlagerplatzes 114 sind insbesondere durch manuell durch einen Benutzer an die übergeordnete Steuerungsanlage 116 weitergegebene Statusinformationen ersetzbar.

Vorzugsweise umfasst ein jeweiliger Pufferlagerplatz 114 der Puffervorrichtung 100 ein eindeutiges Identifizierungsmerkmal 224.

Ein eindeutiges Identifizierungsmerkmal 224 eines Pufferlagerplatzes umfasst vorzugsweise einen Code, beispielsweise einen eindimensionalen Code oder einen zweidimensionalen Code, oder wird durch dieses gebildet, beispielsweise einen Datamatrix-Code oder einen QR-Code.

Das eindeutige Identifizierungsmerkmal 224 ist durch einen Benutzer vorzugsweise elektronisch erfassbar, insbesondere mittels eines Lesegeräts 226, beispielsweise mittels eines Smartphones, welches eine Kamera umfasst.

Ein eindeutiges Identifizierungsmerkmal 224 eines jeweiligen Pufferlagerplatzes 114 umfasst vorzugsweise eindeutige Identifizierungsinformationen, mittels welcher ein jeweiliger Pufferlagerplatz 114 eindeutig identifizierbar ist.

Statusinformationen über die Belegung eines Pufferlagerplatzes 114 und/oder über die Sperrung eines Pufferlagerplatzes 114 sind durch einen Benutzer insbesondere erst nach Erfassen des eindeutigen Identifizierungsmerkmals 224 an die übergeordnete Steuerungsanlage 116 weitergebbar.

Die Statusinformationen über die Belegung eines Pufferlagerplatzes 114 und/oder über die Sperrung eines jeweiligen Pufferlagerplatzes 114 sind durch einen Benutzer vorzugsweise nur gemeinsam mit eindeutigen Identifizierungsinformationen des jeweiligen Pufferlagerplatzes 114 an die übergeordnete Steuerungsanlage 116 weitergebbar.

## Patentansprüche

1. Fördervorrichtung (106), wobei die Fördervorrichtung (106) Folgendes umfasst:
- ein oder mehrere Förderfahrzeuge (108) zum Fördern von Gegenständen (102), insbesondere Kraftfahrzeugkarosserien (104);
- eine Puffervorrichtung (100) zur Zwischenspeicherung der Gegenstände (102), welche einen oder mehrere Pufferlagerplätze (114) umfasst, wobei jeweils ein Pufferlagerplatz (114) zur Lagerung jeweils eines Gegenstands (102) dient;
wobei die Gegenstände (102) mittels des einen oder der mehreren Förderfahrzeuge (108) in die Puffervorrichtung (100) einlagerbar und/oder aus der Puffervorrichtung (100) auslagerbar sind,
**dadurch gekennzeichnet, dass**
die Fördervorrichtung (106) eine übergeordnete Steuerungsanlage (116) zur Steuerung und/oder Überwachung eines oder mehrerer Förderfahrzeuge (108) der Fördervorrichtung (106) umfasst, wobei mittels der übergeordneten Steuerungsanlage (116) eine Belegung der Pufferlagerplätze (114) der Puffervorrichtung (100) steuerbar und/oder überwachbar ist.

2. Fördervorrichtung (106) nach Anspruch 1, **dadurch gekennzeichnet, dass** die Fördervorrichtung (106) ferner eine oder mehrere Adaptervorrichtungen (132) umfasst, wobei insbesondere jeweils ein Gegenstand (102) auf jeweils einer Adaptervorrichtung (132) aufnehmbar ist.

3. Fördervorrichtung (106) nach Anspruch 1 oder 2, **dadurch gekennzeichnet, dass** ein Gegenstand (102), insbesondere ein auf einer Adaptervorrichtung (132) aufgenommener Gegenstand (102), durch Absetzen des Gegenstands (102), insbesondere des auf der Adaptervorrichtung (132) aufgenommenen Gegenstands (102), auf Pufferlagerelemente (152) eines jeweiligen Pufferlagerplatzes (114) in den jeweiligen Pufferlagerplatz (114) einlagerbar ist.

4. Fördervorrichtung (106) nach einem der Ansprüche 1 bis 3, **dadurch gekennzeichnet,**
a) **dass** ein jeweiliger Pufferlagerplatz (114) der Puffervorrichtung (100) ein oder mehrere Pufferlagerelemente (152), beispielsweise vier Pufferlagerelemente (152), umfasst, auf welchen ein Gegenstand (102), insbesondere ein auf einer Adaptervorrichtung (132) aufgenommener Gegenstand (102), mit einem Förderfahrzeug (108) absetzbar ist; und/oder
b) **dass** ein jeweiliger Pufferlagerplatz (114) vier Pufferlagerelemente (152) umfasst, wobei jeweils zwei Pufferlagerelemente (152) spiegelbildlich zueinander angeordnet und/oder ausgebildet sind; und/oder
c) **dass** die Fördervorrichtung (106) eine Überwachungseinrichtung (204) zum Überwachen einer ordnungsgemäßen Übergabe eines Gegenstands (102), insbesondere eines auf einer Adaptervorrichtung (132) aufgenommenen Gegenstands (102), an einen Pufferlagerplatz (114) der Puffervorrichtung (100) umfasst.

5. Fördervorrichtung (106) nach einem der Ansprüche 1 bis 4, **dadurch gekennzeichnet, dass** ein jeweiliges Förderfahrzeug (108) der Fördervorrichtung (100) eine Überwachungseinrichtung (204) zum Überwachen einer ordnungsgemäßen Übergabe eines Gegenstands (102), insbesondere eines auf einer Adaptervorrichtung (132) aufgenommenen Gegenstands (102), an einen Pufferlagerplatz (114) der Puffervorrichtung (100) umfasst, wobei vorzugsweise vorgesehen ist, dass die Überwachungseinrichtung (204) derart eingerichtet und ausgebildet ist, dass eine Feststellung einer ordnungsgemäßen Übergabe eines Gegenstands (102), insbesondere eines auf einer Adaptervorrichtung (132) aufgenommenen Gegenstands (102), an einen Pufferlagerplatz (114) der Puffervorrichtung (100) durch Schließen eines Stromkreises erfolgt, wobei vorzugsweise ferner vorgesehen ist, dass Pufferlagerelemente (152) eines jeweiligen Pufferlagerplatzes (114) der Puffervorrichtung (100) und/oder Adaptervorrichtungen (132) zur Aufnahme eines Gegenstands (132) derart ausgebildet sind, dass der Stromkreis durch Inkontaktbringen einer Adaptervorrichtung (132) mit Pufferlagerelementen (152) eines jeweiligen Pufferlagerplatzes (114) bei einer ordnungsgemäßen Übergabe eines Gegenstands (102), insbesondere eines auf einer Adaptervorrichtung (132) aufgenommenen Gegenstands (102), geschlossen wird.

6. Fördervorrichtung (106) nach einem der Ansprüche 3 bis 5, **dadurch gekennzeichnet, dass** jeweils zwei Pufferlagerelemente (152) eines Pufferlagerplatzes (114) paarweise elektrisch leitend miteinander verbunden sind.

7. Fördervorrichtung (106) nach einem der Ansprüche 5 oder 6, **dadurch gekennzeichnet, dass** ein jeweiliges Förderfahrzeug (108) derart ausgebildet ist, dass beim Schließen des Stromkreises ein Stromsignal von einer an dem Förderfahrzeug (108) angeordneten Stromquelle zu einer an dem Förderfahrzug (108) angeordneten Stromsenke geführt wird.

8. Fördervorrichtung (106) nach einem der Ansprüche 1 bis 7, **dadurch gekennzeichnet, dass** ein jeweiliges Förderfahrzeug (106) eine Aufnahmevorrichtung (126) umfasst, welche ein Aufnahmeelement (128), zwei Aufnahmeelemente (128) oder mehr als zwei Aufnahmeelemente (128) zum Aufnehmen mindestens eines Gegenstands (102) umfasst, wobei das eine Aufnahmeelement (128), die zwei Aufnahmeelemente (128) oder die mehr als zwei Aufnahmeelemente (128) jeweils einen oder mehrere , beispielsweise zwei, Schleifkontakte zur elektrischen Kontaktierung einer an dem jeweiligen Förderfahrzeug (108) angeordneten oder anordenbaren Adaptervorrichtung (132) umfassen.

9. Fördervorrichtung (106) nach einem der Ansprüche 1 bis 8, **dadurch gekennzeichnet,**
a) **dass** eine Puffervorrichtung (100) mehrere Pufferlagerplätze (114) umfasst, wobei sämtliche Pufferlagerplätze (114) der Puffervorrichtung (100) auf einer einzigen Lagerebene angeordnet sind; und/oder
b) **dass** eine Puffervorrichtung (100) mehrere Pufferlagerplätze (114) umfasst, welche fluchtend angeordnet sind, insbesondere in einer Längsrichtung (166) und/oder in einer Querrichtung (162).

10. Fördervorrichtung (106) nach einem der Ansprüche 1 bis 9, **dadurch gekennzeichnet, dass** eine Puffervorrichtung (100) eine oder mehrere Fahrbahnen (180) umfasst, wobei die Puffervorrichtung (100) ferner mehrere Pufferlagerplätze (114) umfasst, welche schräg und/oder senkrecht zu einer Fahrbahnlängsachse der jeweiligen Fahrbahn (180) angeordnet sind.

11. Fördervorrichtung (106) nach einem der Ansprüche 1 bis 10, **dadurch gekennzeichnet, dass** Pufferlagerelemente (152) eines Pufferlagerplatzes (114) einen Durchfahrtsbereich (164) begrenzen, welcher durch das eine oder die mehreren Förderfahrzeuge (108) durchfahrbar ist, insbesondere in einer Längsrichtung (166) und/oder in einer Querrichtung (162).

12. Fördervorrichtung (106) nach einem der Ansprüche 1 bis 11, **dadurch gekennzeichnet, dass** ein jeweiliges Förderfahrzeug (108) eine oder mehrere Umgebungssensorvorrichtungen (146) umfasst, mittels welcher ein Umgebungsbereich (148) des Förderfahrzeugs (108) erfassbar ist, wobei optional vorgesehen ist,
i) dass sich der Umgebungsbereich (148) aus mehreren Zonen zusammensetzt oder mehrere Zonen umfasst, wobei die Zonen einander überlappend ausgebildet sind oder vollständig voneinander verschiedene Raumbereiche abdecken; und/oder
ii) dass der Umgebungsbereich (148) in horizontaler Richtung in mehrere Zonen, insbesondere in drei Zonen, eingeteilt ist; und/oder
iii) dass der Umgebungsbereich (148) in vertikaler Richtung in mehrere Zonen, insbesondere in drei Zonen, eingeteilt ist; und/oder
iv) dass mittels einer Steuervorrichtung eines jeweiligen Förderfahrzeugs (108) Grenzlinien zwischen verschiedenen Zonen des Umgebungsbereichs (148) abhängig von einem aktuellen Zustand des Förderfahrzeugs (108) variiert werden, wobei optional vorgesehen ist, dass für den aktuellen Zustand des Förderfahrzeugs (108) einzelne oder mehrere der folgenden Zustandsmerkmale berücksichtigt werden:
a) ob das Förderfahrzeug (108) mit einem Gegenstand (102) beladen oder unbeladen ist; und/oder
b) mit welcher Geschwindigkeit und in welche Richtung das Förderfahrzeug (108) sich bewegt; und/oder
c) an welcher Position das Förderfahrzeug (108) in der Fördervorrichtung (106) und/oder in einer Bearbeitungsanlage (110) angeordnet ist.

13. Fördervorrichtung (106) nach Anspruch 1, **dadurch gekennzeichnet, dass** vorgesehen ist,
i) dass die übergeordnete Steuerungsanlage (116) eine Speichereinrichtung (212) umfasst, in welcher für jeden Pufferlagerplatz (114) einer Puffervorrichtung (100) Statusinformationen über ein Belegung des jeweiligen Pufferlagerplatzes (114) und/oder Statusinformationen über eine Sperrung des jeweiligen Pufferlagerplatzes (114) hinterlegbar sind; und/oder
ii) dass die Fördervorrichtung (106) derart eingerichtet und ausgebildet ist, dass Statusinformationen über die Belegung eines jeweiligen Pufferlagerplatzes (114) manuell durch einen Benutzer an die übergeordnete Steuerungsanlage (116) weitergebbar sind und/oder dass die Fördervorrichtung (106) derart eingerichtet und ausgebildet ist, dass Statusinformationen über eine Sperrung eines Pufferlagerplatzes (114) manuell durch einen Benutzer an die übergeordnete Steuerungsanlage (116) weitergebbar sind; und/oder
iii) dass in der Speichereinrichtung (212) der übergeordneten Steuerungsanlage (116) hinterlegte Statusinformationen über die Belegung eines jeweiligen Pufferlagerplatzes (114) und/oder über die Sperrung eines jeweiligen Pufferlagerplatzes (114) durch einen Benutzer überschreibbar sind, wobei insbesondere vorgesehen sein kann, dass in der Speichereinrichtung (212) der übergeordneten Steuerungsanlage (116) hinterlegte Statusinformationen über die Belegung eines jeweiligen Pufferlagerplatzes (114) und/oder über die Sperrung eines jeweiligen Pufferlagerplatzes (114) durch manuell durch einen Benutzer an die übergeordnete Steuerungsanlage (116) weitergegebene Statusinformationen ersetzbar sind; und/oder
iv) dass ein jeweiliger Pufferlagerplatz (114) einer Puffervorrichtung (100) ein eindeutiges Identifizierungsmerkmal (224) umfasst, wobei Statusinformationen über die Belegung eines Pufferlagerplatzes (114) und/oder über die Sperrung eines Pufferlagerplatzes (114) durch einen Benutzer erst nach Erfassen des eindeutigen Identifizierungsmerkmals (224) an die übergeordnete Steuerungsanlage (116) weitergebbar sind, wobei ferner optional vorgesehen ist, dass das eindeutige Identifizierungsmerkmal (224) durch einen Benutzer elektronisch erfassbar ist, insbesondere mittels eines Lesegeräts (226);
wobei ferner optional vorgesehen ist,
a) dass die Fördervorrichtung (106) eine Sensorvorrichtung (214) zur Erfassung von Statusinformationen über eine Belegung mehrerer Pufferlagerplätze (114) umfasst, beispielsweise eine Kamera (218); und/oder
b) dass die Fördervorrichtung (106) eine oder mehrere Sensorvorrichtungen (214) zur Erfassung von Statusinformationen über eine Belegung eines einzelnen Pufferlagerplatzes (114) umfasst, wobei insbesondere vorgesehen ist,
i) dass eine Sensorvorrichtung (214) zur Erfassung von Statusinformationen über eine Belegung eines einzelnen Pufferlagerplatzes (114) ein oder mehrere an einem jeweiligen Pufferlagerplatz (114), insbesondere an Pufferlagerelementen (152) des Pufferlagerplatzes (114), angeordnete Sensorelemente (216) umfasst, mittels welcher eine Belegung des jeweiligen Pufferlagerplatzes (114) erfassbar ist; und/oder
ii) dass eine Sensorvorrichtung (214) zur Erfassung einer Belegung eines einzelnen Pufferlagerplatzes (114) ein oder mehrere oberhalb und/oder unterhalb eines jeweiligen Pufferlagerplatzes (114) angeordnete Sensorelemente (216) umfasst; und/oder
iii) dass die Sensorvorrichtungen (214) zur Erfassung von Statusinformationen über die Belegung von Pufferlagerplätzen (114) zur Weitergabe der erfassten Statusinformationen an die übergeordnete Steuerungsanlage (116) ausgebildet sind; und/oder
c) dass ein jeweiliges Förderfahrzeug (108) eine oder mehrere Sensorvorrichtungen, insbesondere eine oder mehrere Umgebungssensorvorrichtungen (146), umfasst, mittels welcher eine Belegung eines Pufferlagerplatzes erfassbar ist, insbesondere während das jeweilige Förderfahrzeug (108) den Pufferlagerplatz (114) passiert; und/oder
d) dass eine in einer Speichereinrichtung (212) einer übergeordneten Steuerungsanlage (116) hinterlegte Statusinformation über eine Belegung eines Pufferlagerplatzes (114) der Puffervorrichtung (100) durch eine mittels einer Sensorvorrichtung (214) erfasste Statusinformation über eine Belegung des Pufferlagerplatzes (114) ersetzbar ist, insbesondere wenn die mittels der Sensorvorrichtung (214) erfasste Statusinformation von der in der Speichereinrichtung (212) hinterlegten Statusinformation abweicht; und/oder
e) dass die übergeordnete Steuerungsanlage (116) die Förderfahrzeuge (108) zum Einlagern eines Gegenstands (102) in die Puffervorrichtung (100) abhängig von in einer Speichereinrichtung (212) der übergeordneten Steuerungsanlage (116) hinterlegten Statusinformationen über eine Belegung eines jeweiligen Pufferlagerplatzes (114) der Puffervorrichtung (100) jeweils zu einem freien Pufferlagerplatz (114) steuert; und/oder
f) dass ein jeweiliger Pufferlagerplatz (114) einer Puffervorrichtung (100) ein Sperrelement (220) umfasst, welches zumindest teilweise in einem Durchfahrtsbereich (164) des Pufferlagerplatzes (114) anordenbar, insbesondere in diesen hinein bewegbar, ist, wobei ein jeweiliger Pufferlagerplatz (114) mittels des Sperrelements (220) für die Anfahrt durch ein Förderfahrzeug (108) sperrbar ist.

14. Bearbeitungsanlage (110) zur Bearbeitung von Gegenständen (102), insbesondere Werkstücken, beispielsweise Kraftfahrzeugkarosserien (104), wobei die Bearbeitungsanlage (110) eine oder mehrere Fördervorrichtungen (106) nach einem der Ansprüche 1 bis 13 umfasst.

15. Verfahren zum Fördern und/oder Bearbeiten von Gegenständen (102), wobei die Gegenstände (102) mittels einer Fördervorrichtung (106) nach einem der Ansprüche 1 bis 13 gefördert werden und/oder wobei die Gegenstände (102) in und/oder mittels einer Bearbeitungsanlage (110) nach Anspruch 14 bearbeitet werden.

## Claims

1. Conveying device (106), wherein the conveying device (106) comprises the following:
- one or more conveying vehicles (108) for conveying objects (102), in particular motor vehicle bodies (104);
- a buffer device (100) for temporarily storing the objects (102), which comprises one or more buffer storage stations (114), wherein each buffer storage station (114) serves for storing one object (102);
wherein the objects (102) can be deposited in the buffer device (100) and/or removed from the buffer device (100) by means of the one or more conveying vehicles (108),
**characterized in that**
the conveying device (106) comprises a superordinate control system (116) for controlling and/or monitoring one or more conveying vehicles (108) of the conveying device (106), wherein occupation of the buffer storage stations (114) of the buffer device (100) can be controlled and/or monitored by means of the superordinate control system (116).

2. Conveying device (106) according to Claim 1, **characterized in that** the conveying device (106) further comprises one or more adapter devices (132), wherein in particular one object (102) can be received on each adapter device (132).

3. Conveying device (106) according to Claim 1 or 2, **characterized in that** an object (102), in particular an object (102) received on an adapter device (132), can be deposited into the respective buffer storage station (114) by placing the object (102), in particular the object (102) received on the adapter device (132), on buffer storage elements (152) of a respective buffer storage station (114).

4. Conveying device (106) according to any of Claims 1 to 3, **characterized**
a) **in that** a respective buffer storage station (114) of the buffer device (100) comprises one or more buffer storage elements (152), for example four buffer storage elements (152), on which an object (102), in particular an object (102) received on an adapter device (132), can be placed by way of a conveying vehicle (108); and/or
b) **in that** a respective buffer storage station (114) comprises four buffer storage elements (152), wherein in each case two buffer storage elements (152) are arranged and/or formed in a mirror image to each other; and/or
c) **in that** the conveying device (106) comprises a monitoring device (204) for monitoring for proper transfer of an object (102), in particular an object (102) received on an adapter device (132), to a buffer storage station (114) of the buffer device (100).

5. Conveying device (106) according to any of Claims 1 to 4, **characterized in that** a respective conveying vehicle (108) of the conveying device (100) comprises a monitoring device (204) for monitoring for proper transfer of an object (102), in particular an object (102) received on an adapter device (132), to a buffer storage station (114) of the buffer device (100), wherein provision is preferably made for the monitoring device (204) to be configured and designed in such a way that proper transfer of an object (102), in particular an object (102) received on an adapter device (132), to a buffer storage station (114) of the buffer device (100) is determined by closing a circuit, wherein provision is preferably further made for buffer storage elements (152) of a respective buffer storage station (114) of the buffer device (100) and/or adapter devices (132) for receiving an object (132) to be designed in such a way that the circuit is closed by bringing an adapter device (132) into contact with buffer storage elements (152) of a respective buffer storage station (114) during proper transfer of an object (102), in particular an object (102) received on an adapter device (132).

6. Conveying device (106) according to any of Claims 3 to 5, **characterized in that** in each case two buffer storage elements (152) of a buffer storage station (114) are electrically conductively connected to each other in pairs.

7. Conveying device (106) according to either of Claims 5 and 6, **characterized in that** a respective conveying vehicle (108) is designed in such a way that, when the circuit is closed, a current signal from a current source arranged on the conveying vehicle (108) is passed to a current sink arranged on the conveying vehicle (108).

8. Conveying device (106) according to any of Claims 1 to 7, **characterized in that** a respective conveying vehicle (106) comprises a receiving device (126), which comprises a receiving element (128), two receiving elements (128) or more than two receiving elements (128) for receiving at least one object (102), wherein the one receiving element (128), the two receiving elements (128) or the more than two receiving elements (128) each comprise one or more, for example two, sliding contacts for electrically contacting an adapter device (132) which is arranged or can be arranged on the respective conveying vehicle (108).

9. Conveying device (106) according to any of Claims 1 to 8, **characterized**
a) **in that** a buffer device (100) comprises a plurality of buffer storage stations (114), wherein all the buffer storage stations (114) of the buffer device (100) are arranged on a single storage level; and/or
b) **in that** a buffer device (100) comprises a plurality of buffer storage stations (114) which are arranged in alignment, in particular in a longitudinal direction (166) and/or in a transverse direction (162).

10. Conveying device (106) according to any of Claims 1 to 9, **characterized in that** a buffer device (100) comprises one or more lanes (180), wherein the buffer device (100) further comprises a plurality of buffer storage stations (114) which are arranged obliquely and/or perpendicularly to a longitudinal axis of the respective lane (180).

11. Conveying device (106) according to any of Claims 1 to 10, **characterized in that** buffer storage elements (152) of a buffer storage station (114) delimit a passage region (164) through which the one or more conveying vehicles (108) can pass, in particular in a longitudinal direction (166) and/or in a transverse direction (162).

12. Conveying device (106) according to any of Claims 1 to 11, **characterized in that** a respective conveying vehicle (108) comprises one or more surroundings sensor devices (146), by means of which a surrounding region (148) of the conveying vehicle (108) can be detected, wherein provision is optionally made
i) for the surrounding region (148) to be composed of a plurality of zones or to comprise a plurality of zones, wherein the zones are designed to overlap each other or cover completely different spatial regions from each other; and/or
ii) for the surrounding region (148) to be divided into a plurality of zones, in particular into three zones, in a horizontal direction; and/or
iii) for the surrounding region (148) to be divided into a plurality of zones, in particular into three zones, in the vertical direction; and/or
iv) for boundary lines between different zones of the surrounding region (148) to be varied by means of a control device of a respective conveying vehicle (108) depending on a current state of the conveying vehicle (108), wherein provision is optionally made for individual or a plurality of the following state features to be taken into account for the current state of the conveying vehicle (108):
a) whether the conveying vehicle (108) is laden with an object (102) or is unladen; and/or
b) the speed at which and the direction in which the conveying vehicle (108) is moving; and/or
c) the position in which the conveying vehicle (108) is arranged in the conveying device (106) and/or in a processing system (110).

13. Conveying device (106) according to Claim 1, **characterized in that** provision is made
i) for the superordinate control system (116) to comprise a memory device (212) in which status information about occupation of the respective buffer storage station (114) and/or status information about blockage of the respective buffer storage station (114) can be stored for each buffer storage station (114) of a buffer device (100); and/or
ii) for the conveying device (106) to be configured and designed in such a way that status information about the occupation of a respective buffer storage station (114) can be passed on manually by a user to the superordinate control system (116) and/or
for the conveying device (106) to be configured and designed in such a way that status information about blockage of a buffer storage station (114) can be passed on manually by a user to the superordinate control system (116); and/or
iii) for status information about the occupation of a respective buffer storage station (114) and/or about the blockage of a respective buffer storage station (114) stored in the memory device (212) of the superordinate control system (116) to be able to be overwritten by a user, wherein in particular provision can be made for status information about the occupation of a respective buffer storage station (114) and/or about the blockage of a respective buffer storage station (114) stored in the memory device (212) of the superordinate control system (116) to be able to be replaced by status information passed on manually by a user to the superordinate control system (116); and/or
iv) for a respective buffer storage station (114) of a buffer device (100) to comprise a unique identification feature (224), wherein status information about the occupation of a buffer storage station (114) and/or about the blockage of a buffer storage station (114) can be passed on to the superordinate control system (116) by a user only after the unique identification feature (224) has been detected, wherein provision is further optionally made for the unique identification feature (224) to be able to be electronically detected by a user, in particular by means of a reader (226);
wherein provision is further optionally made
a) for the conveying device (106) to comprise a sensor device (214) for detecting status information about occupation of a plurality of buffer storage stations (114), for example a camera (218); and/or
b) for the conveying device (106) to comprise one or more sensor devices (214) for detecting status information about occupation of a single buffer storage station (114), wherein in particular provision is made
i) for a sensor device (214) for detecting status information about occupation of a single buffer storage station (114) to comprise one or more sensor elements (216) which are arranged on a respective buffer storage station (114), in particular on buffer storage elements (152) of the buffer storage station (114), and by means of which occupation of the respective buffer storage station (114) can be detected; and/or
ii) for a sensor device (214) for detecting occupation of a single buffer storage station (114) to comprise one or more sensor elements (216) which are arranged above and/or below a respective buffer storage station (114); and/or
iii) for the sensor devices (214) for detecting status information about the occupation of buffer storage stations (114) to be designed for passing on the detected status information to the superordinate control system (116); and/or
c) for a respective conveying vehicle (108) to comprise one or more sensor devices, in particular one or more surroundings sensor devices (146), by means of which occupation of a buffer storage station can be detected, in particular while the respective conveying vehicle (108) passes the buffer storage station (114); and/or
d) for status information about occupation of a buffer storage station (114) of the buffer device (100) stored in a memory device (212) of a superordinate control system (116) to be able to be replaced by status information about occupation of the buffer storage station (114) detected by means of a sensor device (214), in particular if the status information detected by means of the sensor device (214) differs from the status information stored in the memory device (212); and/or
e) for the superordinate control system (116) to control the conveying vehicles (108) for depositing an object (102) into the buffer device (100) to a free buffer storage station (114) depending on status information about occupation of a respective buffer storage station (114) of the buffer device (100) stored in a memory device (212) of the superordinate control system (116); and/or
f) for a respective buffer storage station (114) of a buffer device (100) to comprise a blocking element (220), which can be arranged at least partially in a passage region (164) of the buffer storage station (114), in particular can be moved into it, wherein a respective buffer storage station (114) can be blocked to approach by a conveying vehicle (108) by means of the blocking element (220).

14. Processing system (110) for processing objects (102), in particular workpieces, for example motor vehicle bodies (104), wherein the processing system (110) comprises one or more conveying devices (106) according to any of Claims 1 to 13.

15. Method for conveying and/or processing objects (102), wherein the objects (102) are conveyed by means of a conveying device (106) according to any of Claims 1 to 13, and/or wherein the objects (102) are processed in and/or by means of a processing system (110) according to Claim 14.

## Revendications

1. Dispositif de convoyage (106), le dispositif de convoyage (106) comprenant les éléments suivants :
- un ou plusieurs véhicules de convoyage (108) destinés à convoyer des objets (102), notamment des carrosseries de véhicules automobiles (104) ;
- un dispositif tampon (100) destiné au stockage temporaire des objets (102), lequel comporte un ou plusieurs emplacements de stockage tampon (114), chaque emplacement de stockage tampon (114) servant à stocker respectivement un objet (102) ;
les objets (102) pouvant être stockés dans le dispositif tampon (100) et/ou retirés du dispositif tampon (100) au moyen de l'un ou des plusieurs véhicules de convoyage (108),
**caractérisé en ce que**
le dispositif de convoyage (106) comprend un système de commande (116) de niveau supérieur destiné à commander et/ou à surveiller un ou plusieurs véhicules de convoyage (108) du dispositif de convoyage (106), une occupation des emplacements de stockage tampon (114) du dispositif tampon (100) pouvant être commandée et/ou surveillée au moyen du système de commande (116) de niveau supérieur.

2. Dispositif de convoyage (106) selon la revendication 1, **caractérisé en ce que** le dispositif de convoyage (106) comporte en outre un ou plusieurs dispositifs adaptateurs (132), un objet (102) pouvant notamment être respectivement reçu respectivement sur un dispositif adaptateur (132).

3. Dispositif de convoyage (106) selon la revendication 1 ou 2, **caractérisé en ce qu'**un objet (102), notamment un objet (102) reçu sur un dispositif adaptateur (132), peut être stocké dans l'emplacement de stockage tampon (114) respectif en déposant l'objet (102), notamment l'objet (102) reçu sur le dispositif adaptateur (132), sur des éléments de stockage tampon (152) d'un emplacement de stockage tampon (114) respectif.

4. Dispositif de convoyage (106) selon l'une des revendications 1 à 3, **caractérisé en ce que**
a) un emplacement de stockage tampon (114) respectif du dispositif tampon (100) comporte un ou plusieurs éléments de stockage tampon (152), par exemple quatre éléments de stockage tampon (152), sur lesquels un objet (102), notamment un objet (102) reçu sur un dispositif adaptateur (132), peut être déposé par un véhicule de convoyage (108) ; et/ou
b) un emplacement de stockage tampon (114) respectif comporte quatre éléments de stockage tampon (152), deux éléments de stockage tampon (152) respectifs étant disposés et/ou configurés selon une symétrie en miroir l'un par rapport à l'autre ; et/ou
c) le dispositif de convoyage (106) comporte un appareil de surveillance (204) destiné à surveiller un transfert correct d'un objet (102), notamment d'un objet (102) reçu sur un dispositif adaptateur (132), vers un emplacement de stockage tampon (114) du dispositif tampon (100).

5. Dispositif de convoyage (106) selon l'une des revendications 1 à 4, **caractérisé en ce qu'**un véhicule de convoyage (108) respectif du dispositif de convoyage (100) comporte un appareil de surveillance (204) destiné à surveiller un transfert correct d'un objet (102), notamment d'un objet (102) reçu sur un dispositif adaptateur (132), vers un emplacement de stockage tampon (114) du dispositif tampon (100), en prévoyant de préférence que l'appareil de surveillance (204) est conçu et configuré de telle sorte qu'une constatation d'un transfert correct d'un objet (102), notamment d'un objet (102) reçu sur un dispositif adaptateur (132), vers un emplacement de stockage tampon (114) du dispositif tampon (100) s'effectue par la fermeture d'un circuit électrique, en prévoyant en outre de préférence que des éléments de stockage tampon (152) d'un emplacement de stockage tampon (114) respectif du dispositif tampon (100) et/ou des dispositifs adaptateurs (132) destinés à recevoir un objet (132) sont configurés de telle sorte que le circuit électrique est fermé par mise en contact d'un dispositif adaptateur (132) avec des éléments de stockage tampon (152) d'un emplacement de stockage tampon (114) respectif lors d'un transfert correct d'un objet (102), notamment d'un objet (102) reçu sur un dispositif adaptateur (132).

6. Dispositif de convoyage (106) selon l'une des revendications 3 à 5, **caractérisé en ce que** deux éléments de stockage tampon (152) respectifs d'un emplacement de stockage tampon (114) sont reliés entre eux par paires de manière électriquement conductrice.

7. Dispositif de convoyage (106) selon l'une des revendications 5 ou 6, **caractérisé en ce qu'**un véhicule de convoyage (108) respectif est configuré de telle sorte que, lors de la fermeture du circuit électrique, un signal électrique est transmis d'une source de courant disposée sur le véhicule de convoyage (108) à un récepteur de courant disposé sur le véhicule de convoyage (108).

8. Dispositif de convoyage (106) selon l'une des revendications 1 à 7, **caractérisé en ce qu'**un véhicule de convoyage (106) comporte un dispositif de réception (126), lequel comporte un élément de réception (128), deux éléments de réception (128) ou plus de deux éléments de réception (128) destinés à recevoir au moins un objet (102), l'élément de réception (128), les deux éléments de réception (128) ou les plus de deux éléments de réception (128) comportant respectivement un ou plusieurs, par exemple deux, contacts glissants destinés à établir un contact électrique avec un dispositif adaptateur (132) disposé ou pouvant être disposé sur le véhicule de convoyage (108) respectif.

9. Dispositif de convoyage (106) selon l'une des revendications 1 à 8, **caractérisé en ce que**
a) un dispositif tampon (100) comporte plusieurs emplacements de stockage tampon (114), tous les emplacements de stockage tampon (114) du dispositif tampon (100) étant disposés sur un seul niveau de stockage ; et/ou
b) un dispositif tampon (100) comporte plusieurs emplacements de stockage tampon (114), lesquels sont disposés de manière alignée, notamment dans une direction longitudinale (166) et/ou dans une direction transversale (162).

10. Dispositif de convoyage (106) selon l'une des revendications 1 à 9, **caractérisé en ce qu'**un dispositif tampon (100) comporte une ou plusieurs voies de circulation (180), le dispositif tampon (100) comportant en outre plusieurs emplacements de stockage tampon (114), lesquels sont disposés obliquement et/ou perpendiculairement à un axe longitudinal de la voie de circulation (180) respective.

11. Dispositif de convoyage (106) selon l'une des revendications 1 à 10, **caractérisé en ce que** des éléments de stockage tampon (152) d'un emplacement de stockage tampon (114) délimitent une zone de passage (164), laquelle peut être traversée par le ou les plusieurs véhicules de convoyage (108), notamment dans une direction longitudinale (166) et/ou dans une direction transversale (162).

12. Dispositif de convoyage (106) selon l'une des revendications 1 à 11, **caractérisé en ce qu'**un véhicule de convoyage (108) respectif comporte un ou plusieurs dispositifs de détection de l'environnement (146) au moyen desquels peut être détectée une zone environnante (148) du véhicule de convoyage (108), en prévoyant en option
i) que la zone environnante (148) se compose de plusieurs zones ou comporte plusieurs zones, les zones étant formées de manière à se chevaucher mutuellement ou à couvrir des zones spatiales complètement distinctes les unes des autres ; et/ou
ii) que la zone environnante (148) est divisée dans le sens horizontal en plusieurs zones, notamment en trois zones ; et/ou
iii) que la zone environnante (148) est divisée dans le sens vertical en plusieurs zones, notamment en trois zones ; et/ou
iv) qu'au moyen d'un dispositif de commande d'un véhicule de convoyage (108) respectif, les lignes de délimitation entre différentes zones de la zone environnante (148) sont modifiées en fonction d'un état actuel du véhicule de convoyage (108), en prévoyant en option que, pour l'état actuel du véhicule de convoyage (108), différentes ou plusieurs des caractéristiques d'état suivantes sont prises en compte :
a) si le véhicule de convoyage (108) est chargé d'un objet (102) ou non chargé ; et/ou
b) la vitesse à laquelle et la direction dans laquelle le véhicule de convoyage (108) se déplace ; et/ou
c) la position à laquelle le véhicule de convoyage (108) est disposé dans le dispositif de convoyage (106) et/ou dans une installation de traitement (110).

13. Dispositif de convoyage (106) selon la revendication 1, **caractérisé en ce qu'**il est prévu
i) que le système de commande (116) de niveau supérieur comporte un appareil de mémorisation (212) dans lequel, pour chaque emplacement de mémoire tampon (114) d'un dispositif tampon (100), peuvent être enregistrées des informations d'état concernant une occupation de l'emplacement tampon (114) respectif et/ou des informations d'état concernant un blocage de l'emplacement tampon (114) respectif ; et/ou
ii) que le dispositif de convoyage (106) est conçu et configuré de telle sorte que des informations d'état concernant l'occupation d'un emplacement tampon (114) respectif peuvent être retransmises manuellement par un utilisateur au système de commande (116) de niveau supérieur et/ou
que le dispositif de convoyage (106) est conçu et configuré de telle sorte que des informations d'état concernant le blocage d'un emplacement tampon (114) peuvent être retransmises manuellement par un utilisateur au système de commande (116) de niveau supérieur ; et/ou
iii) que les informations d'état enregistrées dans l'appareil de mémorisation (212) du système de commande (116) de niveau supérieur concernant l'occupation d'un emplacement tampon (114) respectif et/ou concernant le blocage d'un emplacement tampon (114) respectif peuvent être écrasées par un utilisateur, en prévoyant notamment que les informations d'état enregistrées dans l'appareil de mémorisation (212) du système de commande (116) de niveau supérieur concernant l'occupation d'un emplacement tampon (114) respectif et/ou concernant le blocage d'un emplacement tampon (114) respectif peuvent être remplacées par des informations d'état retransmises manuellement par un utilisateur au système de commande (116) de niveau supérieur ; et/ou
iv) qu'un emplacement de stockage tampon (114) respectif d'un dispositif tampon (100) comporte une caractéristique d'identification unique (224), les informations d'état concernant l'occupation d'un emplacement de stockage tampon (114) et/ou le blocage d'un emplacement de stockage tampon (114) ne pouvant être retransmises par un utilisateur au système de commande (116) de niveau supérieur qu'après détection de la caractéristique d'identification unique (224), en prévoyant notamment, en option, que la caractéristique d'identification unique (224) puisse être détectée électroniquement par un utilisateur, notamment au moyen d'un lecteur (226) ;
en prévoyant notamment, en option,
a) que le dispositif de convoyage (106) comporte un dispositif capteur (214) destiné à acquérir des informations d'état concernant une occupation de plusieurs emplacements de stockage tampon (114), par exemple une caméra (218) ; et/ou
b) que le dispositif de convoyage (106) comporte un ou plusieurs dispositifs capteurs (214) destinés à acquérir des informations d'état concernant une occupation d'un emplacement de stockage tampon (114) individuel, en prévoyant notamment
i) qu'un dispositif capteur (214) destiné à acquérir des informations d'état concernant l'occupation d'un emplacement de stockage tampon (114) individuel comporte un ou plusieurs éléments capteurs (216) disposés au niveau d'un emplacement de stockage tampon (114) respectif, notamment au niveau d'éléments de stockage tampon (152) de l'emplacement de stockage tampon (114), au moyen desquels une occupation de l'emplacement de stockage tampon (114) respectif peut être détectée ; et/ou
ii) qu'un dispositif capteur (214) destiné à détecter une occupation d'un emplacement de stockage tampon (114) individuel comporte un ou plusieurs éléments capteurs (216) disposés au-dessus et/ou en dessous d'un emplacement de stockage tampon (114) respectif ; et/ou
iii) que les dispositifs capteurs (214) destinés à acquérir des informations d'état concernant l'occupation d'emplacements de stockage tampon (114) sont configurés pour retransmettre les informations d'état acquises au système de commande (116) de niveau supérieur ; et/ou
c) qu'un véhicule de convoyage (108) respectif comporte un ou plusieurs dispositifs capteurs, notamment un ou plusieurs dispositifs de détection de l'environnement (146), au moyen desquels il est possible de détecter une occupation d'un emplacement de stockage tampon, notamment pendant que le véhicule de convoyage (108) respectif passe devant l'emplacement de stockage tampon (114) ; et/ou
d) qu'une information d'état enregistrée dans un appareil de mémorisation (212) d'un système de commande (116) de niveau supérieur concernant une occupation d'un emplacement de stockage tampon (114) du dispositif tampon (100) peut être remplacée par une information d'état acquise au moyen d'un dispositif capteur (214) concernant l'occupation de l'emplacement de stockage tampon (114), notamment lorsque l'information d'état acquise au moyen du dispositif capteur (214) diffère de l'information d'état enregistrée dans l'appareil de mémorisation (212) ; et/ou
e) que le système de commande (116) de niveau supérieur commande les véhicules de convoyage (108) pour stocker un objet (102) dans le dispositif tampon (100) en fonction des informations d'état enregistrées dans un appareil de mémorisation (212) du système de commande (116) de niveau supérieur concernant une occupation d'un emplacement de stockage tampon (114) respectif du dispositif tampon (100) respectivement vers un emplacement de stockage tampon (114) libre ; et/ou
f) qu'un emplacement de stockage tampon (114) respectif d'un dispositif tampon (100) comporte un élément de blocage (220), lequel peut être disposé au moins en partie dans une zone de passage (164) de l'emplacement de stockage tampon (114), notamment de manière à pouvoir être déplacé à l'intérieur de celle-ci, un emplacement de stockage tampon (114) respectif pouvant être bloqué au moyen de l'élément de blocage (220) pour l'approche par un véhicule de convoyage (108).

14. Installation de traitement (110) pour le traitement d'objets (102), notamment de pièces ouvrées, par exemple de carrosseries de véhicule (104), l'installation de traitement (110) comportant un ou plusieurs dispositifs de convoyage (106) selon l'une des revendications 1 à 13.

15. Procédé pour convoyer et/ou traiter des objets (102), les objets (102) étant convoyés au moyen d'un dispositif de convoyage (106) selon l'une des revendications 1 à 13 et/ou les objets (102) étant traités dans et/ou au moyen d'une installation de traitement (110) selon la revendication 14.
